(19) **Europäisches Patentamt**
**European Patent Office**
**Office européen des brevets**

(11) **EP 4 700 462 A1**

(12) **EUROPEAN PATENT APPLICATION**
published in accordance with Art. 153(4) EPC

(43) Date of publication:
**25.02.2026 Bulletin 2026/09**

(21) Application number: **24796070.1**

(22) Date of filing: **23.04.2024**

(51) International Patent Classification (IPC):
**G02F 1/133** (2006.01)

(52) Cooperative Patent Classification (CPC):
**Y02B 20/40**

(86) International application number:
**PCT/CN2024/089376**

(87) International publication number:
**WO 2024/222690 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023  CN 202310467832**
**31.01.2024  CN 202410137924**

(71) Applicants:
• **Boe Technology Group Co., Ltd.**
**Beijing 100015 (CN)**
• **Beijing BOE Technology Development Co., Ltd.**
**Beijing 100176 (CN)**

(72) Inventors:
• **ZHANG, Yangyang**
**Beijing 100176 (CN)**
• **TANG, Yutao**
**Beijing 100176 (CN)**
• **ZHAO, Junjie**
**Beijing 100176 (CN)**
• **ZHU, Binghai**
**Beijing 100176 (CN)**
• **CHU, Xiao**
**Beijing 100176 (CN)**
• **ZHANG, Honglei**
**Beijing 100176 (CN)**
• **SU, Jing**
**Beijing 100176 (CN)**
• **CHEN, Shaobei**
**Beijing 100176 (CN)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **GLASS TRANSLUCENCY ADJUSTMENT SYSTEM, METHOD AND RELATED DEVICE**

(57)    Disclosed are a glass translucency adjustment system and method, and a related device, which take into account ambient brightness information. Using a translucency single change step suited to the current ambient brightness information to adjust the translucency of dimmable glass, user discomfort such as dizziness can be avoided, and a situation in which the sight of the user is blocked can also be avoided. The system comprises: a translucency control apparatus, an instruction input interface of the light transmittance control device being configured to receive a translucency single adjustment instruction, wherein one translucency single adjustment instruction is used as an instruction for execution of a dimmable glass translucency adjustment operation according to a translucency single change step. The translucency control apparatus is configured to adjust the transparency of the dimmable glass according to the single change step of a target translucency, in response to the translucency single adjustment instruction, the target translucency single change step being a translucency single change step corresponding to the ambient brightness information.

FIG. 2

## Description

### Cross-Reference to Related Applications

This application claims priority to Chinese Patent Application No. 202310467832.3, filed on April 26, 2023, in the China National Intellectual Property Administration, with a name "A glass transmittance adjustment system, method and related device". The entire disclosure of the above application is incorporated herein by reference.

This application claims priority to Chinese Patent Application No. 202410137924.X, filed on January 31, 2024, in the China National Intellectual Property Administration, with a name "A glass transmittance adjustment system, method and related device". The entire disclosure of the above application is incorporated herein by reference.

### Technical Field

The present disclosure relates to the field of dimming glass, and in particular to a glass transmittance adjustment system, method and related device.

### Background

Dimming glass is a glass with adjustable light transmittance. Generally, dimming glass can change the light transmittance of glass under the action of voltage or current. In the related art, users can adjust the light transmittance of dimming glass through physical buttons. The related art provides an "up" button and a "down" button. Users can increase the light transmittance of dimming glass by clicking the "up" button, for example, by 5%. Users can decrease the light transmittance of dimming glass by clicking the "down" button, for example, by 5%.

In the related art, the step sizes of increasing and decreasing the transmittance of the dimming glass are almost the same, and the adjustment method is single, which cannot meet the needs of users in the complex application environment of the dimming glass.

### Summary

The present disclosure provides a glass transmittance adjustment system, method and related device, which are configured to adjust the transmittance of dimming glass in combination with ambient brightness information, using a single transmittance change step size suitable for the current ambient brightness information, thereby avoiding discomfort such as dizziness configured to the user, and also avoiding the situation where the user's vision is blocked.

In the first aspect, some embodiments provide a glass transmittance adjustment system, configured to adjust a transmittance of a dimming glass, the glass transmittance adjustment system includes: a transmittance control device; an instruction input interface of the transmittance control device is configured to receive a single transmittance adjustment instruction, one single transmittance adjustment instruction is configured to instruct to perform an operation of adjusting the transmittance of the dimming glass once according to a single transmittance change step; the transmittance control device is configured to: receive ambient brightness information; in response to the single transmittance adjustment instruction, adjust the transmittance of the dimming glass according to a target single transmittance change step, and the target single transmittance change step is a single transmittance change step corresponding to the ambient brightness information.

In the embodiment of the present disclosure, the transmittance of the dimming glass is adjusted by using a single change step of the transmittance corresponding to the current ambient brightness information, so that the transmittance of the dimming glass can quickly reach the transmittance expected by the user, which can avoid the user from feeling dizzy or other discomfort, and avoid the user's vision being blocked. Optionally, the ambient brightness information can be the brightness of the environment on the side of the dimming glass away from the user. Alternatively, the ambient brightness information can be the brightness of the environment when the dimming glass is close to the user.

In some embodiments, the glass transmittance adjustment system further includes an instruction input device connected to the instruction input interface, wherein the instruction input device includes a first adjustment button and a second adjustment button; the first adjustment button is configured to trigger a single transmittance increase instruction in response to the first adjustment button being selected or pressed once; the second adjustment button is configured to trigger a single transmittance decrease instruction in response to the second adjustment button being selected or pressed once.

In some embodiments, the instruction input device includes a knob; the knob is configured to trigger a single transmittance increase instruction in response to the knob being turned and rotated by a unit angle along a first direction; and to trigger a single transmittance decrease instruction in response to the knob being turned and rotated by a unit angle along a second direction; the first direction is one of a clockwise direction and a counterclockwise direction, and the second direction is other one of the clockwise direction and the counterclockwise direction.

In some embodiments, the instruction input device includes a touch slider bar, and the touch slider bar includes a slider; the touch slider bar is configured to trigger a single transmittance increase instruction in response to the slider being selected and moving a unit amount along a third direction, and to trigger a single transmittance decrease instruction in response to the slider being selected and moving a unit amount along a fourth direction; the third direction is opposite to fourth direction.

In some embodiments, the single transmittance adjustment instruction includes a single transmittance increase instruction and a single transmittance decrease instruction; the glass transmittance adjustment system is configured with a plurality of ambient lighting sets and transmittance configuration parameters corresponding to the ambient lighting sets; the transmittance configuration parameters include single transmittance change steps of multiple levels; the single transmittance change steps of each of the levels includes a single transmittance increase change step corresponding to the single transmittance increase instruction and a single transmittance decrease change step corresponding to the single transmittance decrease instruction.

In an embodiment of the present disclosure, in the transmittance configuration parameters of each ambient lighting set, the single change step of the transmittance of each level may include a single transmittance increase change step and a single transmittance decrease change step, which can be set according to the sensitivity of the human eye. Such a design can adjust the transmittance of the dimming glass in combination with the ambient brightness information and the current transmittance of the dimming glass, which is helpful to avoid the user's vision being blocked or to avoid the user from feeling dizzy or other discomfort. In some application scenarios, the single transmittance increase change step is a positive number less than or equal to 1, and the single transmittance decrease change step is a positive number less than or equal to 1.

In some embodiments, the glass transmittance adjustment system is configured with transmittances corresponding to the levels in the transmittance configuration parameters corresponding to the ambient lighting sets; the transmittance control device is configured to: determine a target ambient lighting set corresponding to the ambient brightness information; determine a target level corresponding to the transmittance of the dimming glass from the levels of the transmittance configuration parameters corresponding to the target ambient lighting set; determine the target single transmittance change step according to the single transmittance change step of the target level and the single transmittance adjustment instruction, and adjust the transmittance of the dimming glass according to the target single transmittance change step.

In some embodiments, the transmittance control device is configured to: in response to the single transmittance decrease instruction, take the single transmittance decrease change step of the target level as the target single transmittance change step, and decrease the transmittance of the dimming glass according to the target single transmittance change step; or in response to the single transmittance increase instruction, taking the single transmittance increase change step of the target level as the target single transmittance change step, and increase the transmittance of the dimming glass according to the target single transmittance change step.

Based on the glass transmittance adjustment system of above embodiments, in a possible design, among the plurality of ambient lighting sets, an ambient brightness that is represented by values in a first ambient lighting set is smaller than an ambient brightness that is represented by values in a second ambient lighting set; the single transmittance increase change step of at least one level in the transmittance configuration parameters of the first ambient lighting set is greater than the single transmittance decrease change step of the at least one level in the transmittance configuration parameters of the first ambient lighting set; and the single transmittance increase change step of at least one level in the transmittance configuration parameters of the second ambient lighting set is less than or equal to the single transmittance decrease change step of the at least one level in the transmittance configuration parameters of the second ambient lighting set.

In this embodiment, in a darker environment, the single change step of the transmittance of a level is greater than the single change step of the transmittance of the gear, which can help the dimming glass to quickly reach the transmittance expected by the user when the light transmittance is different, and avoid blocking the user's vision during the dimming operation. In a brighter environment, the single change step of the transmittance of a level is less than or equal to the single change step of the transmittance of the level, which can help the dimming glass to quickly reach the transmittance expected by the user when the light transmittance is different during the dimming operation.

In some embodiments, for a single transmittance increase change step in the transmittance configuration parameters of the first ambient lighting set and a single transmittance increase change step in the transmittance configuration parameters of the second ambient lighting set in a same level, the single transmittance increase change step in the transmittance configuration parameters of the first ambient lighting set is greater than the single transmittance increase change step in the transmittance configuration parameters of the second ambient lighting set.

In some embodiments, for a single transmittance decrease change step in the transmittance configuration parameters of the first ambient lighting set and a single transmittance decrease change step in the transmittance configuration parameters of the second ambient lighting set in a same level, the single transmittance decrease change step in the transmittance configuration parameters of the first ambient lighting set is smaller than the single transmittance decrease change step in the transmittance configuration parameters of the second ambient lighting set.

Based on the glass transmittance adjustment system provided by the aforementioned implementation, in a possible design, the transmittance corresponding to the same level in the transmittance configuration parameters of different ambient lighting sets may be different. For example, the transmittance corresponding to the same level in the transmittance configuration parameters of the first ambient lighting set is different from the transmittance corresponding to the transmittance configuration parameters of the second ambient lighting set.

In some embodiments, among the levels in the transmittance configuration parameters of any of the ambient lighting sets, a step difference degree of any level is greater than a first percentage, and the any level is any one of the levels, the step difference degree of the any level is a ratio of a target difference to a maximum value in single transmittance change steps of the any level, the target difference is a difference between a single transmittance increase change step of the any level and a single transmittance decrease change step of the any level, and the first percentage is 30% or 50%.

In some embodiments, in the transmittance configuration parameters of any ambient lighting set, the steps of the various levels are different.

In some embodiments, the step differences of the transmittance configuration parameters of the same level in different ambient lighting sets may be different.

In some embodiments, the single transmittance adjustment instruction includes a single transmittance increase instruction and a single transmittance decrease instruction; the glass transmittance adjustment system is configured with a plurality of ambient lighting sets and transmittance configuration parameters corresponding to the ambient lighting sets; among the ambient lighting sets, the transmittance configuration parameters corresponding to the ambient lighting sets include a single transmittance increase step corresponding to the single transmittance increase instruction and a single transmittance decrease step corresponding to the single transmittance decrease instruction. In some application scenarios, the single transmittance increase step is a positive number less than or equal to 1, and the single transmittance decrease step is a positive number less than or equal to 1.

In some embodiments, the transmittance control device is configured to: determine a target ambient lighting set corresponding to the ambient brightness information; determine the target single transmittance change step according to the transmittance configuration parameters corresponding to the target ambient lighting set and the single transmittance adjustment instruction, and adjust the transmittance of the dimming glass according to the target single transmittance change step.

In some embodiments, the transmittance control device is configured to: in response to the single transmittance decrease instruction, take the single transmittance decrease change step in the transmittance configuration parameters corresponding to the target ambient lighting set as the target single transmittance change step, and decrease the transmittance of the dimming glass according to the target single transmittance change step; or in response to the single transmittance increase instruction, take the single transmittance increase step in the transmittance configuration parameters corresponding to the target ambient lighting set as the target single transmittance change step, and increase the transmittance of the dimming glass according to the target single transmittance change step.

In this implementation, among the multiple ambient lighting sets, the ambient brightness that can be represented by the numerical value in the first ambient lighting set is less than the ambient brightness that can be represented by the numerical value in the second ambient lighting set. In a possible design, the single transmittance increase change step in the transmittance configuration parameters corresponding to the first ambient lighting set is greater than the single transmittance increase change step in the transmittance configuration parameters corresponding to the second ambient lighting set. In such a design, the operation of increasing the transmittance in a darker environment can quickly achieve the transmittance expected by the user, reduce the number of user operations, and avoid discomfort such as dizziness in the user. Optionally, the difference between the single transmittance increase change step in the transmittance configuration parameters corresponding to the first ambient lighting set and the single transmittance increase change step in the transmittance configuration parameters corresponding to the second ambient lighting set is greater than or equal to 5%.

In another possible design, the single transmittance increase change step in the transmittance configuration parameters corresponding to the first ambient lighting set is smaller than the single transmittance decrease change step in the transmittance configuration parameters corresponding to the second ambient lighting set. In such a design, the operation of reducing the transmittance in a brighter environment can quickly achieve the transmittance expected by the user, reduce the number of user operations, and avoid situations such as blocked vision of the user. Optionally, a difference between the single transmittance decrease change step in the transmittance configuration parameters corresponding to the second ambient lighting set and the single transmittance decrease change step in the transmittance configuration parameters corresponding to the first ambient lighting set is greater than or equal to 5%.

In some embodiments, the single transmittance increase change step in the transmittance configuration parameters corresponding to the first ambient lighting set is greater than the single transmittance decrease change step in the transmittance configuration parameters corresponding to the first ambient lighting set; the single transmittance increase change step in the transmittance configuration parameters corresponding to the second ambient lighting set is less than or equal to the single transmittance decrease change step in the transmittance configuration parameters corresponding to the second ambient lighting set.

In such a design, the operation of increasing the transmittance in a darker environment can quickly reach the user's expected transmittance, reduce the number of user operations, and avoid the user's discomfort such as dizziness. The operation of decreasing the transmittance in a darker environment can avoid the user's vision being blocked. The operation of increasing the transmittance in a brighter environment can avoid the user's discomfort such as dizziness, and the operation of decreasing the transmittance in a brighter environment can quickly reach the user's expected transmittance, reduce the number of user operations, and avoid the user's vision being blocked.

In some embodiments, a difference between the single transmittance increase change step in the transmittance configuration parameters corresponding to the first ambient lighting set and the single transmittance decrease change step in the transmittance configuration parameters corresponding to the first ambient lighting set is greater than or equal to 7.5%.

In some embodiments, the glass transmittance adjustment system is configured with a plurality of ambient lighting sets and single transmittance change steps corresponding to the ambient lighting sets;

the transmittance control device is configured to determine a target ambient lighting set corresponding to the ambient brightness information; take a single transmittance change step corresponding to the target ambient lighting set as the target single transmittance change step.

In some embodiments, among the ambient lighting sets, an ambient brightness that is represented by values in a first ambient lighting set is smaller than an ambient brightness that is represented by values in a second ambient lighting set; a single transmittance change step corresponding to the first ambient lighting set is greater than a single transmittance change step corresponding to the second ambient lighting set.

In some embodiments, among the ambient lighting sets, an ambient brightness that is represented by values in a first ambient lighting set is smaller than an ambient brightness that is represented by values in a second ambient lighting set; the glass transmittance adjustment system is configured with a plurality of levels corresponding to the ambient lighting sets and transmittances corresponding to the plurality of levels, wherein a total number of levels corresponding to the first ambient lighting set is less than a total number of levels corresponding to the second ambient lighting set;

the transmittance control device is configured to determine a target level corresponding to the transmittance of the dimming glass from the levels of the transmittance configuration parameters corresponding to the target ambient lighting set; adjust the transmittance of the dimming glass according to a single transmittance change step corresponding to the target level.

Based the glass transmittance adjustment system of above embodiments, in an scenario of the instruction input device connected with the instruction input interface being a touch slider bar, in a possible design, the touch slider bar is configured with a special position set; the special position set includes at least one position; wherein the glass transmittance adjustment system is configured with a special transmittance set corresponding to each ambient lighting set, the special transmittance set includes a transmittance corresponding to the at least one position;

the transmittance control device is further configured to: based on a position of the slider after movement is same as a target position in the special position set, determine the target ambient lighting set corresponding to the ambient brightness information, and adjust the transmittance of the dimming glass according to the special transmittance corresponding to the target position in the special transmittance set corresponding to the target ambient lighting set.

In some embodiments, the special position set includes a first position and a second position; wherein a transmittance corresponding to the first position in the special transmittance set represents a maximum reference transmittance, and the maximum reference transmittance is less than a maximum transmittance of the dimming glass, and a transmittance corresponding to the second position represents a minimum reference transmittance, and the minimum reference transmittance is greater than a minimum transmittance of the dimming glass.

In some embodiments, among the ambient lighting sets, two ambient lighting sets are provided with maximum reference transmittances in the special transmittance sets corresponding to the two ambient lighting sets being different; and/or, among the ambient lighting sets, two ambient lighting sets are provided with minimum reference transmittances in the special transmittance sets corresponding to the two ambient lighting sets being different.

In some embodiments, the special position set includes a third position and a fourth position; in the special transmittance set corresponding to each ambient lighting set, a transmittance corresponding to the third position is the maximum transmittance of the dimming glass; in the special transmittance set corresponding to each ambient lighting set, a transmittance corresponding to the fourth position is the minimum transmittance of the dimming glass.

In the second aspect, some embodiments of the present disclosure further provides a glass transmittance adjustment system, configured to adjust a transmittance of a dimming glass; wherein the glass transmittance adjustment system includes a transmittance control device; an instruction input interface of the transmittance control device is configured to receive a first transmittance adjustment instruction;

the transmittance control device is configured to:

in response to the first transmittance adjustment instruction, adjust the transmittance of the dimming glass based on a target unit transmittance change step, wherein the target unit transmittance change step is a transmittance unit change step corresponding to the ambient brightness information.

In some embodiments, the first transmittance adjustment instruction includes a first transmittance increase instruction and a first transmittance decrease instruction; the glass transmittance adjustment system is configured with a plurality of ambient lighting sets and transmittance configuration parameters corresponding to the ambient lighting sets; among the plurality of ambient lighting sets, the transmittance configuration parameters corresponding to any ambient lighting set include a unit transmittance increase change step corresponding to the first transmittance increase instruction and a unit transmittance decrease change step corresponding to the first transmittance decrease instruction.

In some embodiments, the transmittance control device is configured to:

determine a target ambient lighting set corresponding to the ambient brightness information;
determine the target unit transmittance change step according to the transmittance configuration parameters corresponding to the target ambient lighting set and the first transmittance adjustment instruction;
adjust the transmittance of the dimming glass based on the target unit transmittance change step.

In some embodiments, the transmittance control device is configured to:

in response to the first transmittance decrease instruction, take a unit transmittance decrease change step in the transmittance configuration parameters corresponding to the target ambient lighting set as the target unit transmittance change step, and decrease the transmittance of the dimming glass based on the target unit transmittance change step;
or,
in response to the first transmittance increase instruction, take a unit transmittance increase change step in the transmittance configuration parameters corresponding to the target ambient lighting set as the target unit transmittance change step, and increase the transmittance of the dimming glass according to the target unit transmittance change step.

In some embodiments, among the ambient lighting sets, an ambient brightness that is represented by values in a first ambient lighting set is smaller than an ambient brightness that is represented by values in a second ambient lighting set; and a unit transmittance increase change step in the transmittance configuration parameters corresponding to the first ambient lighting set is larger than a unit transmittance increase change step in the transmittance configuration parameters corresponding to the second ambient lighting set.

In some embodiments, the glass transmittance adjustment system further includes an instruction input device connected to the instruction input interface, the instruction input device includes a knob; the knob is configured to trigger the first transmittance increase instruction in response to the knob being rotated in a first direction, and to trigger the first transmittance decrease instruction in response to the knob being rotated in a second direction; the first direction is one of a clockwise direction and a counterclockwise direction, and the second direction is the other one of one the clockwise direction and the counterclockwise direction.

The transmittance control device is configured to:

obtain a knob rotation angle;
determine a first ratio of the knob rotation angle to a unit angle;
take a product of the first ratio and the target unit transmittance change step as a total transmittance adjustment amount, or take a product of an integer part of the first ratio and the target unit transmittance change step as a total transmittance adjustment amount;
adjust the transmittance of the dimming glass according to the total transmittance adjustment amount.

In some embodiments, the glass transmittance adjustment system further includes an instruction input device connected to the instruction input interface, wherein the instruction input device includes a touch slider bar, and the touch slider bar includes a slider;
the touch slider bar is configured to trigger the single transmittance increase instruction in response to the slider being selected and moving along a third direction, and to trigger the single transmittance decrease instruction in response to the slider being selected and moving along a fourth direction; the third direction is opposite to the fourth direction.

In some embodiments, the transmittance control device is configured to:

obtain a movement amount of the slider;
determine a second ratio of the movement amount to a unit movement amount;
take a product of the second ratio and the target unit transmittance change step as a total transmittance adjustment amount; or take a product of an integer part of the second ratio and the target unit transmittance change step as a total transmittance adjustment amount;

adjust the transmittance of the dimming glass according to the total transmittance adjustment amount.

In the third aspect, some embodiments of the present disclosure provide a glass transmittance adjustment system, configured to adjust a transmittance of a dimming glass; the glass transmittance adjustment system includes a transmittance control device; the transmittance control device is configured to:

receive ambient brightness information;

determine a target level attribute parameter corresponding to the ambient brightness information according to the ambient brightness information and a plurality of level attribute parameters corresponding to a plurality of ambient lighting sets;

adjust the transmittance of the dimming glass based on the target level attribute parameter;

the level attribute parameters include a quantity of increasing levels and a quantity of decreasing levels; the ambient lighting sets include a first ambient lighting set and a second ambient lighting set, the first ambient lighting set corresponds to a first level attribute parameter, and the second lighting set corresponds to a second level attribute parameter;

a quantity of increasing levels of the first level attribute parameter is different from a quantity of increasing levels of the second level attribute parameter, and/or a quantity of decreasing levels of the first level attribute parameter is different from a quantity of decreasing levels of the second level attribute parameter.

In the embodiment of the present disclosure, the level attribute parameters are different under different ambient brightness conditions. Under different ambient brightness conditions, the number of increasing levels that increase the transmittance may be different, and the number of decreasing levels that reduce the transmittance may be different. The level attribute parameters suitable for the current ambient brightness information are used to adjust the transmittance of the dimming glass, which is conducive to making the transmittance adjustment process of the dimming glass more comfortable for the user's vision, avoiding discomfort such as dizziness in the user, and avoiding the user's vision being blocked.

In some embodiments, an ambient brightness that is represented by values in the first ambient lighting set is smaller than an ambient brightness that is represented by values in the second ambient lighting set;

the quantity of increasing levels of the first level attribute parameter is less than the quantity of increasing levels of the second level attribute parameter; or

the quantity of decreasing levels of the first level attribute parameter is greater than the quantity of decreasing levels of the second level attribute parameter; or

the quantity of increasing levels of the first level attribute parameter is smaller than the quantity of increasing levels of the second level attribute parameter, and the quantity of decreasing levels of the first level attribute parameter is larger than the quantity of decreasing levels of the second level attribute parameter.

In some embodiments, the quantity of increasing levels of the first level attribute parameter is less than the quantity of decreasing levels of the first level attribute parameter; and/or,

the quantity of increasing levels of the second level attribute parameter is greater than or equal to the quantity of decreasing levels of the second level attribute parameter.

In a possible design, in a level attribute parameter, the single transmittance increase change step corresponding to each increasing level is the same, and the single transmittance decrease change step corresponding to each decreasing level is the same.

In some examples, the single transmittance change step corresponding to the increasing level in the first level attribute parameter is greater than the single transmittance change step corresponding to the decreasing level. In this way, the transmittance of the dimming glass can be increased faster and decreased slower in darker ambient lighting conditions.

In some examples, the single transmittance change step corresponding to the increasing level in the second level attribute parameter is smaller than the single transmittance change step corresponding to the decreasing level. In this way, the light transmittance of the dimming glass can be increased slowly and decreased quickly in brighter ambient lighting conditions.

In a possible design, the light transmittance adjusting device may be specifically configured to:

in response to a single transmittance increase instruction, determine a target level attribute parameter corresponding to the ambient brightness information based on the most recently acquired ambient brightness information and multiple level attribute parameters corresponding to multiple ambient lighting sets, and increase the transmittance of the dimming glass based on the target level attribute parameters.

Optionally, increasing the transmittance of the dimming glass based on the target level attribute parameter may include: determining the current increasing level corresponding to the current transmittance of the dimming glass in the target level attribute parameter, determining the increasing level in the next order of the current increasing level as the target increasing level based on the order of multiple increasing levels from small to large in the target level attribute parameter, and adjusting the transmittance of the dimming glass according to the target increasing level. For example, adjusting the transmittance of the dimming glass according to the single change step for increasing transmittance corresponding to the target increasing level, or according to the transmittance of the dimming glass corresponding to the target increasing level.

Optionally, the transmittance corresponding to each increasing level or the transmittance matched by each increasing level is different. In the target level attribute parameters, multiple increasing levels are sorted in order from small to large according to the transmittance corresponding to each increasing level. In the two adjacent increasing levels in the sorting, the transmittance corresponding to the previous increasing level is different from the transmittance corresponding to the next increasing level. The single change step for increasing transmittance corresponding to the previous increasing level and the single change step for increasing transmittance corresponding to the next increasing level can be the same or different.

In a possible design, the light transmittance adjusting device may be specifically configured to:
in response to a single transmittance decrease instruction, determine a target level attribute parameter corresponding to the ambient brightness information based on the most recently acquired ambient brightness information and multiple level attribute parameters corresponding to multiple ambient lighting sets, and decrease the transmittance of the dimming glass based on the target level attribute parameters.

Optionally, decreasing the transmittance of the dimming glass based on the target level attribute parameter may include: determining the current decreasing level corresponding to the current transmittance of the dimming glass in the target level attribute parameter, determining the decreasing level in the next order of the current decreasing level as the target decreasing level based on the order of multiple decreasing levels in the target level attribute parameter from small to large, and adjusting the transmittance of the dimming glass according to the target decreasing level. For example, decreasing the single transmittance change step according to the target decreasing level. Alternatively, adjusting transmittance of the dimming glass according to the transmittance of the dimming glass corresponding to the target decreasing level.

Optionally, the transmittance corresponding to each decreasing level or the transmittance matched by each decreasing level is different. In the target level attribute parameter, multiple decreasing levels are sorted in order from small to large according to the transmittance corresponding to each decreasing level, and in the two adjacent decreasing levels in the sorting, the transmittance corresponding to the previous decreasing level is different from the transmittance corresponding to the next decreasing level. The single change step for decreasing transmittance corresponding to the previous decreasing level and the single change step for decreasing transmittance corresponding to the next decreasing level can be the same or different.

In some examples, the system further includes an instruction input device connecting with the instruction input interface. The instruction input device may include a first adjustment button and a second adjustment button. The first adjustment button is configured to trigger the single transmittance increase instruction when it is selected or pressed. The second adjustment button is configured to trigger the single transmittance decrease instruction when it is selected or pressed.

In a possible implementation, the system further includes an instruction input device connecting with the instruction input interface. The instruction input device may include a knob; the knob is configured to trigger the first transmittance increase instruction in response to the knob being rotated in a first direction, and to trigger the first transmittance decrease instruction in response to the knob being rotated in a second direction; the first direction is one of a clockwise direction and a counterclockwise direction, and the second direction is the other one of one the clockwise direction and the counterclockwise direction.

In a possible implementation, the system further includes an instruction input device connecting with the instruction input interface. The instruction input device may include a touch slider bar; and the touch slider bar includes a slider; the touch slider bar is configured to trigger the single transmittance increase instruction in response to the slider being selected and moving along a third direction, and to trigger the single transmittance decrease instruction in response to the slider being selected and moving along a fourth direction; the third direction is opposite to the fourth direction
The touch slider bar is configured with a special position set; the special position set includes at least one position; wherein the glass transmittance adjustment system is configured with a special transmittance set corresponding to each ambient lighting set, the special transmittance set includes a transmittance corresponding to the at least one position;
the transmittance control device is further configured to: based on a position of the slider after movement is same as a target position in the special position set, determine the target ambient lighting set corresponding to the ambient brightness information, and adjust the transmittance of the dimming glass according to the special transmittance corresponding to the target position in the special transmittance set corresponding to the target ambient lighting set.

In some embodiments, the special position set includes a first position and a second position; wherein a transmittance corresponding to the first position in the special transmittance set represents a maximum reference transmittance, and the maximum reference transmittance is less than a maximum transmittance of the dimming glass, and a transmittance corresponding to the second position represents a minimum reference transmittance, and the minimum reference transmittance is greater than a minimum transmittance of the dimming glass.

In some embodiments, among the ambient lighting sets, two ambient lighting sets are provided with maximum reference transmittances in the special transmittance sets corresponding to the two ambient lighting sets being different; and/or, among the ambient lighting sets, two ambient lighting sets are provided with minimum reference transmittances in the special transmittance sets corresponding to the two ambient lighting sets being different.

In some embodiments, the special position set includes a third position and a fourth position; in the special transmittance set corresponding to each ambient lighting set, a transmittance corresponding to the third position is the maximum transmittance of the dimming glass; in the special transmittance set corresponding to each ambient lighting set, a transmittance corresponding to the fourth position is the minimum transmittance of the dimming glass.

In the fourth aspect, some embodiments of the present disclosure further provide a window, including the dimming glass and the glass transmittance adjustment system according to any one of the first to third aspects.

In the fifth aspect, some embodiments of the present disclosure further provide a vehicle, including the glass transmittance adjustment system according to any one of the first to third aspects.

In the sixth aspect, some embodiments of the present disclosure further provide a method for adjusting glass transmittance, applied to a dimming glass, the method includes:

receiving a single transmittance adjustment instruction, wherein the single transmittance adjustment instruction is configured to instruct to perform an operation of adjusting a transmittance of the dimming glass once according to a single transmittance change step;

in response to the single transmittance adjustment instruction, adjusting the transmittance of the dimming glass according to a target single transmittance change step, and the target single transmittance change step is a single transmittance change step corresponding to ambient brightness information.

In a possible implementation, in the above glass transmittance adjustment method, adjusting the transmittance of the dimming glass based on a target single transmittance change step, includes:

determining a target ambient lighting set corresponding to the ambient brightness information according to a plurality of pre-configured ambient lighting sets and transmittance configuration parameters corresponding to each ambient lighting set, the transmittance configuration parameters corresponding to each ambient lighting set include transmittances corresponding to each level;

determining a target level corresponding to the transmittance of the current dimming glass from a plurality of levels of the transmittance configuration parameters corresponding to the target ambient lighting set;

determining the target single transmittance change step according to the single transmittance change step of the target level and the single transmittance adjustment instruction.

In some examples, the single transmittance adjustment instruction includes a single transmittance increase instruction and a single transmittance decrease instruction.

The transmittance configuration parameters corresponding to each ambient lighting set include single transmittance change steps for multiple levels. The single transmittance change steps for the levels includes a single transmittance change step corresponding to the single transmittance increase instruction and a single transmittance change step corresponding to the single transmittance decrease instruction.

In some examples, determining the target transmittance single change step according to the determined transmittance single change step of the level and the single transmittance adjustment instruction, and adjusting the transmittance of the dimming glass according to the target transmittance single change step includes:

in response to the single light transmittance decrease instruction, using the single transmittance increase change step of the target level as the target single transmittance change step, and decreasing the transmittance of the dimming glass according to the target single transmittance change step;

alternatively, in response to the single transmittance increase instruction, using the single transmittance increase change step of the target level as the target transmittance single change step, and increasing the transmittance of the dimming glass according to the target transmittance single change step.

In some examples, among the multiple ambient lighting sets, the ambient brightness that can be represented by the values in the first ambient lighting set is smaller than the ambient brightness that can be represented by the values in the second ambient lighting set. The single transmittance increase change step of at least one level in the transmittance configuration parameters of the first ambient lighting set is greater than the single change transmittance decrease step of the at least one level. The single transmittance increase change step of at least one level in the transmittance configuration parameters of the second ambient lighting set is less than or equal to the single transmittance decrease change step of the at least one level.

In one possible design, a single transmittance increase change step of the same level in the transmittance configuration parameters of the first ambient lighting set is greater than a single transmittance increase change step of the same level in the transmittance configuration parameters of the second ambient lighting set.

In one possible design, the single transmittance decrease change step of the same level in the transmittance configuration parameters of the first ambient lighting set is smaller than the single transmittance decrease change step of the same level in the transmittance configuration parameters of the second ambient lighting set.

In a possible design, among the multiple levels in the transmittance configuration parameter of any ambient lighting set, the step difference degree of any level is greater than a first percentage. Optionally, the first percentage may be 30%, or the first percentage is 50%.

In another possible implementation, in the above glass transmittance adjustment method, adjusting the transmittance of the dimming glass based on a target single transmittance change, includes:

determining a target ambient lighting set corresponding to the ambient brightness information according to a plurality of pre-configured ambient lighting sets and transmittance configuration parameters corresponding to each ambient lighting set;

determining the target single transmittance change step according to the transmittance configuration parameters corresponding to the target ambient lighting set and the single transmittance adjustment instruction, and adjusting the transmittance of the dimming glass according to the target single transmittance change step.

In some examples, the single transmittance adjustment instruction includes a single transmittance increase instruction and a single transmittance decrease instruction. Among the multiple ambient lighting sets, the transmittance configuration parameters corresponding to any ambient lighting set include the single transmittance increase step corresponding to the single transmittance increase instruction and the single transmittance decrease step corresponding to the single transmittance decrease instruction.

In some examples, the determining the target single transmittance change step according to the transmittance configuration parameter corresponding to the target ambient lighting set and the single transmittance adjustment instruction, and adjusting the transmittance of the dimming glass according to the target single transmittance change step includes:

in response to the single transmittance decrease instruction, using the single transmittance decrease change step in the transmittance configuration parameter corresponding to the target ambient lighting set as the target single transmittance change step, and decreasing the transmittance of the switchable glass according to the target single transmittance change step;

or,

in response to the single transmittance increase instruction, using the single transmittance increase step in the transmittance configuration parameters corresponding to the target ambient lighting set as the target single transmittance change step, and increasing the transmittance of the dimming glass according to the target single transmittance change step.

In a possible design, among the multiple ambient lighting sets, the ambient brightness that can be represented by the values in the first ambient lighting set is smaller than the ambient brightness that can be represented by the values in the second ambient lighting set.

In a possible design, the single transmittance increase change step in the transmittance configuration parameters corresponding to the first ambient lighting set is greater than the single transmittance increase change step in the transmittance configuration parameters corresponding to the second ambient lighting set. Optionally, the difference between the single transmittance change increase step in the transmittance configuration parameters corresponding to the first ambient lighting set and the single transmittance increase change step in the transmittance configuration parameters corresponding to the second ambient lighting set is greater than or equal to 5%.

In a possible design, the single transmittance decrease change step in the transmittance configuration parameters corresponding to the first ambient lighting set is smaller than the single transmittance decrease change step in the transmittance configuration parameters corresponding to the second ambient lighting set. Optionally, the difference between the single transmittance decrease change step in the transmittance configuration parameters corresponding to the second ambient lighting set and the single transmittance decrease change step in the transmittance configuration parameters corresponding to the first ambient lighting set is greater than or equal to 5%.

In a possible design, the single transmittance increase change step in the transmittance configuration parameters corresponding to the first ambient lighting set is greater than the single transmittance decrease change step in the transmittance configuration parameters corresponding to the first ambient lighting set; the single transmittance increase change step in the transmittance configuration parameters corresponding to the second ambient lighting set is less than or equal to the single transmittance decrease change step in the transmittance configuration parameters corresponding to the second ambient lighting set. Optionally, the difference between the single transmittance increase change step in the transmittance configuration parameters corresponding to the first ambient lighting set and the single transmittance decrease change step in the transmittance configuration parameters corresponding to the first ambient lighting set is greater than or equal to 7.5%.

In another possible implementation, in the above glass transmittance adjustment method, adjusting the transmittance of the dimming glass based on a target single transmittance change step, includes:

determining a target ambient lighting set corresponding to the ambient brightness information according to a plurality of pre-configured ambient lighting sets;
using the single transmittance change step corresponding to the target ambient lighting set as the target single transmittance change step according to the pre-configured single transmittance change step corresponding to each ambient lighting set.

In a possible design, among the multiple ambient lighting sets, the ambient brightness that can be represented by the values in the first ambient lighting set is smaller than the ambient brightness that can be represented by the values in the second ambient lighting set.

The single transmittance change step corresponding to the first ambient lighting set is greater than the single transmittance change step corresponding to the second ambient lighting set.

In another possible design, among the multiple ambient lighting sets, the ambient brightness that can be represented by the values in the first ambient lighting set is smaller than the ambient brightness that can be represented by the values in the second ambient lighting set.

The using the single transmittance change step corresponding to the target ambient lighting set as the target single transmittance change step according to the pre-configured single transmittance change step corresponding to each ambient lighting set, includes:

determining the target level corresponding to the transmittance of the current dimming glass from the multiple levels of the transmittance configuration parameter corresponding to the target ambient lighting set according to the multiple levels corresponding to each pre-configured ambient lighting set and the transmittance corresponding to each level;
determining whether the target level is a minimum level and determining whether it is a maximum level;
adjusting the transmittance of the dimming glass based on the single transmittance change step corresponding to the target ambient lighting set.

In some examples, the total number of multiple levels corresponding to the first ambient lighting set is less than the total number of multiple levels corresponding to the second ambient lighting set.

In the seventh aspect, some embodiments of the present disclosure further provide a method for adjusting glass transmittance, applied to a dimming glass, wherein the method includes:

receiving a first transmittance adjustment instruction;
in response to the first transmittance adjustment instruction, adjusting a transmittance of the dimming glass based on a target unit transmittance change step, the target unit transmittance change step is a unit transmittance change step corresponding to ambient brightness information.

In a possible design, the determining the target ambient lighting set corresponding to the ambient brightness information according to the preset multiple ambient lighting sets and the transmittance configuration parameters corresponding to each ambient lighting set, further includes:

in response to the first transmittance decreasing instruction, taking the transmittance decreasing unit change step in the transmittance configuration parameter corresponding to the target ambient lighting set as the target unit transmittance change step;
alternatively, in response to the first transmittance increase instruction, using the unit transmittance increase change step in the transmittance configuration parameters corresponding to the target ambient lighting set as the target unit transmittance change step.

In one possible design, among the multiple ambient lighting sets, the ambient brightness that can be represented by the values in the first ambient lighting set is smaller than the ambient brightness that can be represented by the values in the second ambient lighting set. The unit transmittance increase change step in the transmittance configuration parameters corresponding to the first ambient lighting set is larger than the unit transmittance increase change step in the transmittance configuration parameters corresponding to the second ambient lighting set.

In some examples, obtaining a knob rotation angle, and triggering the first transmittance adjustment instruction when the knob is rotated;

determining a first ratio of the knob rotation angle to a unit angle;
taking the product of the first ratio and the target unit transmittance change step as the total transmittance adjustment amount, or taking the product of the integer part of the first ratio and the target unit transmittance change step as the total transmittance adjustment amount;
adjusting the dimming glass according to the total transmittance adjustment amount.

In some examples, obtaining a movement amount of a slider, the slider is a slider of a touch slider bar, and triggering the first transmittance adjustment instruction when the slider moves;

determining a second ratio of the movement amount to the unit movement amount;
taking The product of the second ratio and the target unit transmittance change step as the total transmittance adjustment amount, or taking the product of the integer part of the second ratio and the target unit transmittance change step as the total transmittance adjustment amount;
adjusting the transmittance of the dimming glass according to the total transmittance adjustment amount.

In the eighth aspect, some embodiments of the present disclosure provide a method for adjusting glass transmittance, applied to a dimming glass, wherein the method includes:

receiving ambient brightness information;
determining a target level attribute parameter corresponding to the ambient brightness information according to the ambient brightness information and a plurality of level attribute parameters corresponding to a plurality of ambient lighting sets;
adjusting a transmittance of the dimming glass based on the target level attribute parameter;
the level attribute parameters include a quantity of increasing levels and a quantity of decreasing levels; the ambient lighting sets include a first ambient lighting set and a second ambient lighting set, the first ambient lighting set corresponds to a first level attribute parameter, and the second lighting set corresponds to a second level attribute parameter;
a quantity of increasing levels of the first level attribute parameter is different from a quantity of increasing levels of the second level attribute, and/or a quantity of decreasing levels of the first level attribute parameter is different from quantity of decreasing levels of the second level attribute parameter.

In some embodiments, an ambient brightness that is represented by values in the first ambient lighting set is smaller than an ambient brightness that is represented by values in the second ambient lighting set;

the quantity of increasing levels of the first level attribute parameter is less than the quantity of increasing levels of the second level attribute parameter; or
the quantity of decreasing levels of the first level attribute parameter is greater than the quantity of decreasing levels of the second level attribute parameter; or
the quantity of increasing levels of the first level attribute parameter is smaller than the quantity of increasing levels of the second level attribute parameter, and the quantity of decreasing levels of the first level attribute parameter is larger than the quantity of decreasing levels of the second level attribute parameter.

In some embodiments, the quantity of increasing levels of the first level attribute parameter is less than the quantity of decreasing levels of the first level attribute parameter; and/or,
the quantity of increasing levels of the second level attribute parameter is greater than or equal to the quantity of decreasing levels of the second level attribute parameter.

In a possible design, in a level attribute parameter, the single transmittance increase change step corresponding to each increasing level is the same, and the single transmittance decrease change step corresponding to each decreasing level is the same.

In some examples, the single transmittance change step corresponding to the increasing level in the first level attribute parameter is greater than the single transmittance change step corresponding to the decreasing level.

In some examples, the single transmittance change step corresponding to the increasing level in the second level attribute parameter is smaller than the single transmittance change step corresponding to the decreasing level.

In a possible design, adjusting a transmittance of the dimming glass based on the target level attribute parameter, includes:

in response to a single transmittance increase instruction, determine a target level attribute parameter corresponding to the ambient brightness information based on the most recently acquired ambient brightness information and multiple level attribute parameters corresponding to multiple ambient lighting sets, and increase the transmittance of the dimming glass based on the target level attribute parameters.

Optionally, increasing the transmittance of the dimming glass based on the target level attribute parameter may include: determining the current increasing level corresponding to the current transmittance of the dimming glass in the target level attribute parameter, determining the increasing level in the next order of the current increasing level as the target increasing level based on the order of multiple increasing levels from small to large in the target level attribute parameter, and adjusting the transmittance of the dimming glass according to the target increasing level. For example, adjusting the transmittance of the dimming glass according to the single change step for increasing transmittance corresponding to the target increasing level, or according to the transmittance of the dimming glass corresponding to the target increasing level.

Optionally, in the target level attribute parameters, multiple increasing levels are sorted in order from small to large according to the transmittance corresponding to each increasing level, in the two adjacent increasing levels in the sorting, the transmittance corresponding to the previous increasing level is different from the transmittance corresponding to the next increasing level. Optionally, the single change step for increasing transmittance corresponding to the previous increasing level (or the single transmittance increase change step) and the single change step for increasing transmittance corresponding to the next increasing level (or the single transmittance increase change step) can be the same or different.

In a possible design, the light transmittance adjusting device may be specifically configured to:

in response to a single transmittance decrease instruction, determine a target level attribute parameter corresponding to the ambient brightness information based on the most recently acquired ambient brightness information and multiple level attribute parameters corresponding to multiple ambient lighting sets, and decrease the transmittance of the dimming glass based on the target level attribute parameters.

Optionally, decreasing the transmittance of the dimming glass based on the target level attribute parameter may include: determining the current decreasing level corresponding to the current transmittance of the dimming glass in the target level attribute parameter, determining the decreasing level in the next order of the current decreasing level as the target decreasing level based on the order of multiple decreasing levels in the target level attribute parameter from small to large, and adjusting the transmittance of the dimming glass according to the target decreasing level. For example, decreasing the single transmittance change step according to the target decreasing level. Alternatively, adjusting transmittance of the dimming glass according to the transmittance of the dimming glass corresponding to the target decreasing level.

Optionally, in the target level attribute parameter, multiple decreasing levels are sorted in order from small to large according to the transmittance corresponding to each decreasing level, and in the two adjacent decreasing levels in the sorting, the transmittance corresponding to the previous decreasing level is different from the transmittance corresponding to the next decreasing level. Optionally, the single change step for decreasing transmittance corresponding to the previous decreasing level (or the single transmittance decrease change step) and the single change step for decreasing transmittance corresponding to the next decreasing level (or the single transmittance decrease change step) can be the same or different.

In the ninth aspect, some embodiments of the present disclosure further provide a computer storage medium including a computer program stored thereon, based on the program being executed by a processor, steps of the method of any one of the sixth to eighth aspects are implemented.

In the tenth aspect, some embodiments of the present disclosure further provide a computer program product including a computer program, based on the program being executed by a processor, steps of the method of any one of the sixth to eighth aspects are implemented.

These and other aspects of the present disclosure will be more clearly understood in the description of the following embodiments.

## Brief Description of Figures

In order to more clearly illustrate the technical solutions in the embodiments of the present disclosure, the drawings required for use in the description of the embodiments will be briefly introduced below. Obviously, the drawings described below are only some embodiments of the present disclosure. For ordinary technicians in this field, other drawings can be obtained based on these drawings without paying creative labor.

FIG. 1A is a schematic diagram of an application scenario of a dimming glass provided in an embodiment of the present disclosure;

FIG. 1B is a schematic diagram of an application scenario of a dimming glass provided in an embodiment of the present disclosure;

FIG. 2 is a schematic diagram of a structure of a glass transmittance adjustment system provided in an embodiment of the present disclosure;

FIG. 3A is a schematic diagram of a structure of an instruction input device provided in an embodiment of the present disclosure;

FIG. 3B is a schematic diagram of a structure of an instruction input device provided in an embodiment of the present disclosure;

FIG. 3C is a schematic diagram of a structure of an instruction input device provided in an embodiment of the present disclosure;

FIG. 4 is a schematic diagram of a structure of a vehicle provided in an embodiment of the present disclosure;

FIG. 5 is a flow chart of a method for adjusting glass transmittance provided in an embodiment of the present disclosure;

FIG. 6A is a flow chart of a method for adjusting glass transmittance provided in an embodiment of the present disclosure;

FIG. 6B is a flow chart of a method for adjusting glass transmittance provided in an embodiment of the present disclosure;

FIG. 7A is a flow chart of a method for adjusting glass transmittance provided in an embodiment of the present disclosure;

FIG. 7B is a flow chart of a method for adjusting glass transmittance provided in an embodiment of the present disclosure;

FIG. 8 is a flow chart of a method for adjusting glass transmittance provided in an embodiment of the present disclosure;

FIG. 9 is a flow chart of a method for adjusting glass transmittance provided in an embodiment of the present disclosure;

FIG. 10 is a flow chart of a method for adjusting glass transmittance provided in an embodiment of the present disclosure;

FIG. 11 is a flow chart of a method for adjusting glass transmittance provided in an embodiment of the present disclosure;

FIG. 12A is a flow chart of a method for adjusting glass transmittance provided in an embodiment of the present disclosure;

FIG. 12B is a flow chart of a method for adjusting glass transmittance provided in an embodiment of the present disclosure;

FIG. 12C is a flow chart of a method for adjusting glass transmittance provided in an embodiment of the present disclosure;

FIG. 13 is a schematic diagram of a structure of an instruction input device;

FIG. 14A is a schematic diagram of a structure of an instruction input device;

FIG. 14B is a schematic diagram of the positions of the first angle and the second angle of a knob provided in an embodiment of the present disclosure;

FIG. 14C is a schematic diagram of the positions of the third angle and the fourth angle of the knob provided in an embodiment of the present disclosure;

FIG. 15 is a schematic diagram of a structure of an instruction input device;

FIG. 16 is a schematic diagram of the first position and the second position of a touch slider bar provided in an embodiment of the present disclosure;

FIG. 17 is a schematic diagram of the third position and the fourth position of a touch slider bar provided in an embodiment of the present disclosure;

FIG. 18A is a flow chart of a method for adjusting glass transmittance provided in an embodiment of the present disclosure;

FIG. 18B is a flow chart of a method for adjusting glass transmittance provided in an embodiment of the present disclosure;

FIG. 19 is a flow chart of a method for adjusting glass transmittance provided in an embodiment of the present disclosure;

FIG. 20 is a flow chart of a method for adjusting glass transmittance provided in an embodiment of the present disclosure.

**Detailed Description**

In order to make the purpose, technical solutions and advantages of the present disclosure clearer, the present disclosure will be further described in detail below in conjunction with the accompanying drawings. Obviously, the described embodiments are only part of the embodiments of the present disclosure, rather than all the embodiments. Based on the embodiments in the present disclosure, all other embodiments obtained by ordinary technicians in this field without making creative work are within the scope of protection of the present disclosure.

In the embodiments of the present disclosure, the term "and/or" describes the association relationship of the associated objects, indicating that three relationships may exist. For example, A and/or B may represent: A exists alone, A and B exist at the same time, and B exists alone. The character "/" generally indicates that the associated objects before and after are in an "or" relationship.

It should be noted that the multiple involved in the embodiments of the present disclosure refers to two or more. In addition, it should be understood that in the description of the embodiments of the present disclosure, the words "first", "second", etc. are only used for the purpose of distinguishing the description, and cannot be understood as indicating or implying relative importance, nor can they be understood as indicating or implying an order.

In the related art, the step sizes of increasing and decreasing the transmittance of the dimming glass are almost the same. On one hand, when the external light suddenly becomes brighter, it is easy for users to feel dizzy or other discomfort, and users often need to click the "down" button multiple times to make the transmittance of the dimming glass reach the transmittance expected by users. When the external light suddenly becomes dark, users cannot see the things outside clearly, and users also needs to click the "up" button multiple times to make the transmittance of the dimming glass reach the transmittance expected by users. On the other hand, in such a method, when the transmittance of the dimming glass is increased in a case of the external light being brighter, the brightness of the light on users' side becomes brighter rapidly, which can easily cause users to feel dizzy or other discomfort. When the transmittance of the dimming glass is decreased in a case of the external light being darker, the brightness of the light on the users' side becomes darker rapidly, causing the user to be unable to see the things outside clearly, and the vision is easily blocked.

In view of this, some embodiments of the present disclosure provide a glass transmittance adjustment system, method and related device, which can meet the needs of users in complex application environments of dimming glass, improve the flexibility of the adjustment method, avoid users experiencing discomfort such as dizziness, and prevent users from being blocked.

The application scenarios described in the embodiments of the present disclosure are intended to more clearly illustrate the technical solutions of the embodiments of the present disclosure, and do not constitute a limitation on the technical solutions provided by the embodiments of the present disclosure. It is known to those skilled in the art that with the emergence of new application scenarios, the technical solutions provided by the embodiments of the present disclosure are also applicable to similar technical problems. In the description of the present disclosure, unless otherwise specified, the meaning of "multiple" is two or more.

Usually, the transmittance of the dimming glass can be adjusted by any of the control methods of electric control, temperature control, light control, and voltage control. Generally speaking, the transmittance of the dimming glass is adjusted by electric control. For example, the drive circuit can adjust the transmittance of the dimming glass by voltage control or current control. The drive circuit can adjust the transmittance of the dimming glass by adjusting the drive voltage of the dimming glass.

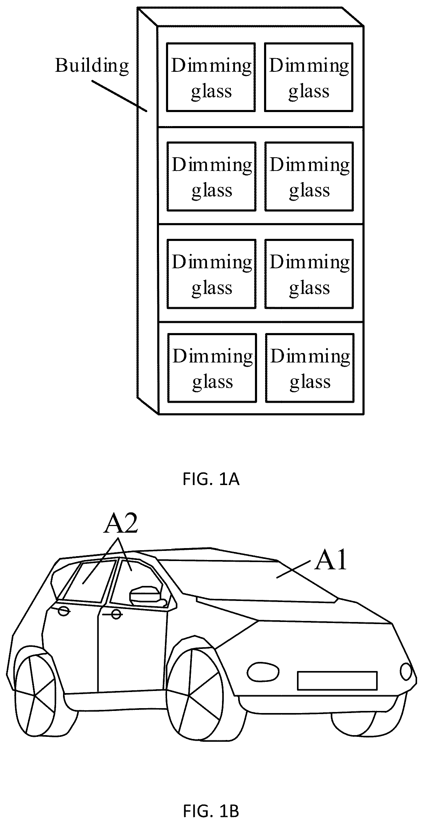

FIG. 1A is a schematic diagram showing an application scenario of dimming glass. The dimming glass can be applied in a building scenario. As shown in FIG. 1A, the dimming glass can be applied to a window outside a building. Alternatively, the dimming glass can be applied to a window inside a building.

FIG. 1B exemplarily shows another schematic diagram of a dimming glass application scenario. The dimming glass can be applied in a vehicle scenario. As shown in FIG. 1B, the dimming glass can be applied to the front windshield A1, the rear windshield (not shown in FIG. 1B ), the sunroof glass (not shown in FIG. 1B ) or the side window glass A2 of the vehicle. In a vehicle scenario, the dimming glass can be disposed in one or more positions. In other words, part or all of the windows of the vehicle can be configured with the dimming glass.

First, some embodiments of the present disclosure provide a glass transmittance adjustment system, which can be applied to, but not limited to, building scenes and vehicle scenes. The glass transmittance adjustment system provided by the embodiments of the present disclosure can be applied to scenes with a need to adjust the transmittance of dimming glass.

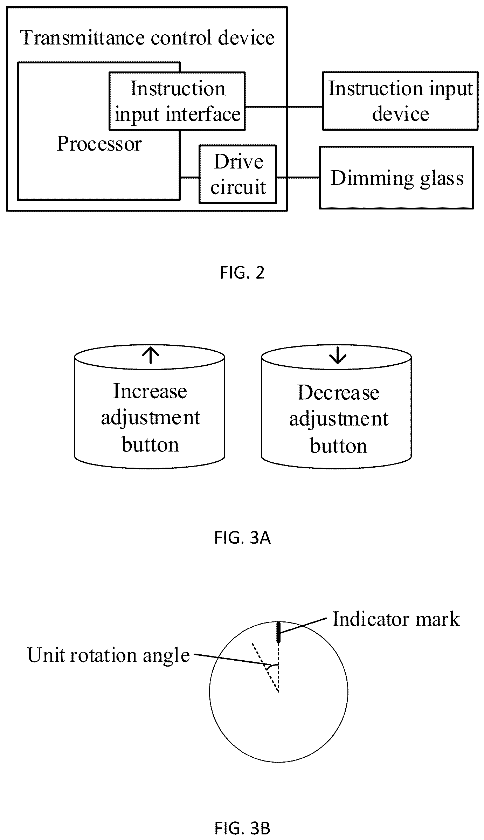

FIG. 2 exemplarily shows a glass transmittance adjustment system, which may include a transmittance control device. The transmittance control device may have an instruction input interface, which is configured to be connected to the instruction input device. The instruction input interface may receive a single transmittance adjustment instruction.

The transmittance control device is configured to adjust the transmittance of at least one dimming glass. In the embodiments of the present disclosure, a single transmittance adjustment instruction is configured to instruct the transmittance control device to perform an operation of adjusting the transmittance of the dimming glass according to a single change step. The single change step adjustment operation may refer to adjusting the transmittance of the dimming glass, and the transmittance adjustment amount is the single change step of the transmittance. In the embodiments of the present disclosure, the single change step of the transmittance is determined based on the ambient brightness information. The single change step can be understood as the degree of change in the transmittance of the dimming glass after a transmittance adjustment operation compared to before the transmittance adjustment operation, and can also be understood as the transmittance change amount.

The single transmittance adjustment instruction may include a single transmittance increase instruction and a single transmittance decrease instruction. The transmittance single change step may include a transmittance increase single change step and a transmittance decrease single change step. The transmittance increase single change step may be determined based on the ambient brightness information and the single transmittance increase instruction. The transmittance decrease single change step may be determined based on the ambient brightness information and the single transmittance decrease instruction.

The following is in company with a schematic diagram of a structure of the instruction input device to introduce the functions of the single transmittance adjustment instruction and the single change step adjustment operation. The instruction input device provided in the embodiments of the present disclosure may include but is not limited to the following examples. It should be understood that the instruction input device may have the ability to trigger a single transmittance adjustment instruction, and the instruction input device may also have more forms, which are not specifically limited in the present disclosure.

In some examples, as shown in FIG. 3A, the instruction input device may include an increase button and a decrease button. The increase button is pressed once, clicked once, or selected once, which can trigger a single transmittance increase instruction. The transmittance control device can increase the single change step of the transmittance according to the transmittance and adjust the transmittance of the dimming glass. Similarly, the decrease button is pressed once, clicked once, or selected once, which can trigger a single transmittance decrease instruction. The transmittance control device can decrease the single change step of the transmittance according to the transmittance and adjust the transmittance of the dimming glass.

In other examples, please refer to FIG. 3B, the instruction input device may include a knob. The knob can be rotated in a clockwise direction or a counterclockwise direction. Each unit rotation angle of the knob can trigger a unit transmittance adjustment instruction. Rotating the knob in one direction, either clockwise or counterclockwise, by a unit rotation angle can trigger a unit single transmittance increase instruction. The transmittance control device can increase the single change step according to the transmittance, and adjust the transmittance of the dimming glass. Similarly, rotating the knob in the other direction, either clockwise or counterclockwise, by a unit rotation angle, can trigger a unit single transmittance decrease instruction. The transmittance control device can decrease the single change step of the transmittance and adjust the transmittance of the dimming glass.

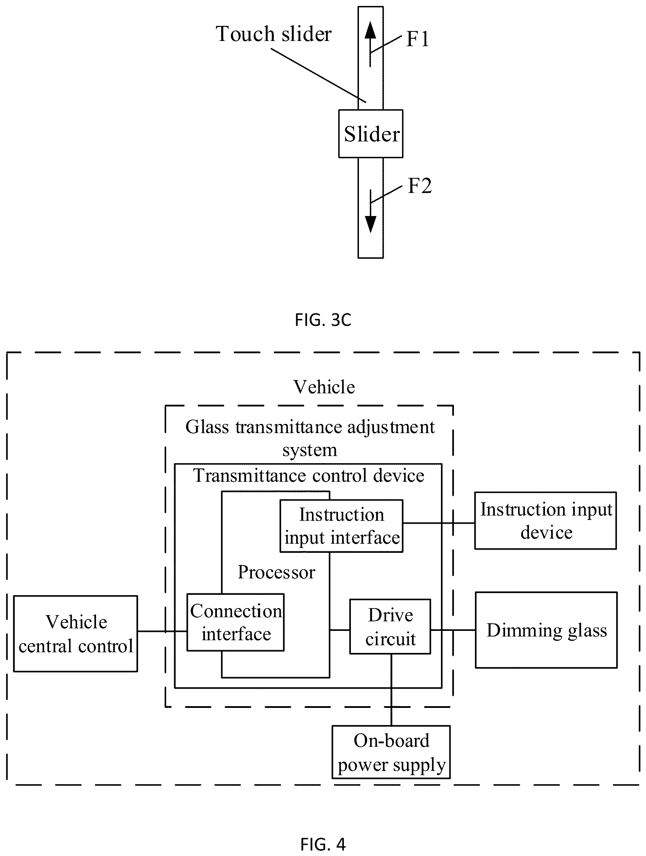

In some other examples, please refer to FIG. 3C, the instruction input device may include a touch slider bar. The physical slider or virtual slider on the touch slider bar can be selected and slid in direction F1 and direction F2. Each unit distance that the slider moves can trigger a unit transmittance adjustment instruction. For example, the slider moves a unit distance in one of directions F1 and F2, which can trigger a unit single transmittance increase instruction. The transmittance control device can increase the single change step according to the transmittance and adjust the transmittance of the dimming glass. Similarly, the slider moves a unit distance in the other direction of direction F1 and direction F2, which can trigger a unit single transmittance decrease instruction. The transmittance control device can decrease the single change step according to the transmittance and adjust the transmittance of the dimming glass.

The transmittance control device can adjust the transmittance of the dimming glass in response to the single transmittance adjustment instruction based on the target transmittance single change step. The target transmittance single change step is the transmittance single change step corresponding to the ambient brightness information.

In a possible implementation, the transmittance control device may include a processor and a drive circuit. The processor may have the aforementioned instruction input interface. The processor may be connected to the drive circuit. The processor may send a control signal to the drive circuit so that the drive circuit adjusts the drive voltage supplied to the dimming glass to adjust the transmittance of the dimming glass.

In the embodiments of the present disclosure, any existing drive circuit can be configured to change the drive voltage supplied to the dimming glass to change the light transmittance of the dimming glass. The embodiments of the present disclosure does not make too many restrictions on this. In the embodiments of the present disclosure, the light transmittance control device can adjust the light transmittance of the dimming glass in a manner that is not limited to any of the following examples.

In some examples, the processor may determine the voltage value corresponding to the target transmittance (any transmittance) according to a preset correspondence between transmittance and voltage value. The control signal sent by the processor to the drive circuit may indicate the voltage value corresponding to the target transmittance. The drive circuit may supply the voltage value indicated by the control signal to the dimming glass, so that the transmittance of the dimming glass reaches or approaches the voltage value corresponding to the target transmittance.

Optionally, the processor may send a sine wave control signal or a square wave control signal to the drive circuit. The amplitude or effective value of the control signal may indicate a voltage value. In some application scenarios, the larger the amplitude or effective value of the control signal is, the larger the voltage value indicated by the control signal is.

Optionally, the preset correspondence between transmittance and voltage value is determined based on the type of dimming glass. For the dimming glass in the normally black mode, the greater the transmittance id, the greater the voltage value is. The greater the drive voltage provided by the drive circuit to the dimming glass, the greater the transmittance of the dimming glass in the normally black mode. For the dimming glass in the normally white mode, the smaller the transmittance is, the greater the voltage value is. The greater the drive voltage provided by the drive circuit to the dimming glass is, the smaller the transmittance of the dimming glass in the normally white mode is. The correspondence between the transmittance and voltage value of each type of dimming glass can be determined based on the liquid crystal voltage and transmittance relationship curve (VT-curve) of the dimming glass.

In some other examples, the control signal may indicate transmittance. Based on the control signal, the drive circuit may supply the diming glass with a drive voltage corresponding to the control signal, so that the transmittance of the dimming glass reaches or approaches the transmittance indicated by the control signal.

In some other examples, the control signal may indicate a single change step of the transmittance. The drive circuit may supply a corresponding drive voltage to the dimming glass based on the control signal, so that the change state of the transmittance of the dimming glass reaches or approaches the single change step of the transmittance indicated by the control signal.

Optionally, the power supply of the drive circuit can be provided by any power supply or battery. Optionally, in the glass transmittance adjustment system provided in the embodiments of the present disclosure, the processor can be a microcontroller unit (MCU), a central processing unit (CPU), a general processor, a graphics processing unit (GPU), a digital signal processor (DSP), an application-specific integrated circuit (ASIC), a field programmable gate array (FPGA) or other programmable logic devices, transistor logic devices, hardware components or any combination thereof.

In a possible implementation, the glass transmittance adjustment system provided in the embodiments of the present disclosure may further include at least one ambient light sensor or ambient light detection device, which can sense ambient light and has the ability to collect ambient light brightness. In the embodiments of the present disclosure, the ambient light brightness is referred to as ambient brightness information. The ambient light sensor or ambient light detection device can collect ambient brightness information in real time or periodically. The ambient light sensor or ambient light detection device can provide the collected ambient brightness information to the transmittance control device. The transmittance control device can use the most recently received ambient brightness information as the current ambient brightness information to adjust the transmittance of the dimming glass.

In another possible implementation, the glass transmittance adjustment system provided in the embodiments of the present disclosure may also be connected to an ambient light sensor or an ambient light detection device, and the transmittance control device may receive ambient brightness information provided by the ambient light sensor or the ambient light detection device.

In the embodiments of the present disclosure, the ambient brightness information may include but is not limited to any of the following: a specific value of the ambient brightness, indication information that can characterize the ambient brightness value, and set identification information that can indicate the ambient brightness set to which the ambient brightness belongs. It should be understood that the ambient brightness information may reflect the actual ambient brightness.

In some examples, the ambient brightness information received by the transmittance control device may be a specific value of the ambient brightness. The unit of the ambient brightness may be nit. In other examples, the transmittance control device may receive indication information, which may indicate the ambient brightness value. For example, the transmittance control device may receive the first indication information, which may indicate ambient brightness 1. For another example, the transmittance control device may receive the second indication information, which may indicate ambient brightness 2. In yet other examples, the transmittance control device may receive set identification information, which may indicate the ambient brightness set to which the ambient brightness value belongs.

Optionally, the aforementioned instruction input device may include but is not limited to mechanical keys (buttons), mechanical knobs, touch slider bars, and touch screens. The touch screen may display buttons, knobs, or sliders for triggering transmittance adjustment instructions, and users may trigger the transmittance adjustment instruction through the touch screen.

Some embodiments of the present disclosure provide a vehicle that can include any one of the glass transmittance adjustment systems provided in the embodiments of the present disclosure. FIG. 4 shows a schematic diagram of a structure of a vehicle. The vehicle can include an on-board central processing unit (abbreviated as on-board central control), an on-board power supply, an instruction input device, and the glass transmittance adjustment system provided in the embodiments of the present disclosure.

The vehicle may further include at least one ambient light sensor or ambient light detection device. The ambient light sensor or ambient light detection device may provide ambient brightness information to the on-board central control. The on-board central control may be connected to the transmittance control device. The on-board central control may provide ambient brightness information to the transmittance control device, so that the transmittance control device adjusts the transmittance of the dimming glass based on the ambient brightness information.

The on-board central control can receive the ambient brightness provided by the ambient light sensor or the ambient light detection device. The on-board central control can send ambient brightness information to the transmittance control device based on the ambient brightness provided by the ambient light sensor or the ambient light detection device.

The ambient brightness information may include but is not limited to any of the following: a specific ambient brightness value, indication information that can characterize the ambient brightness value, and set identification information that can indicate the ambient brightness set to which the ambient brightness belongs. It should be understood that the ambient brightness information may reflect the actual ambient brightness.

In some examples, the on-board central control can use the ambient brightness provided by the ambient light sensor or the ambient light detection device as ambient brightness information and send the ambient brightness information to the transmittance control device. The ambient brightness information received by the transmittance control device can be a specific value of the ambient brightness. The unit of the ambient brightness can be nit.

In some other examples, the on-board central control can determine the indication information corresponding to the ambient brightness provided by the ambient light sensor or the ambient light detection device based on the preset correspondence between the ambient brightness and the indication information, and send the indication information as the ambient brightness information to the transmittance control device. The ambient brightness information received by the transmittance control device can be the indication information.

In some other examples, the on-board central control can determine the ambient brightness set to which the ambient brightness provided by the ambient light sensor or the ambient light detection device belongs based on the preset ambient brightness sets, and send the set identification information of the determined ambient brightness set as the ambient brightness information to the transmittance control device. The ambient brightness information received by the transmittance control device can be the set identification information.

In one possible implementation, the processor in the transmittance control device can be implemented as a vehicle window controller, can be disposed inside the door, and can also be configured to control functions such as window glass lifting. The processor in the transmittance control device can also include a connection interface for connecting to the on-board central control. The processor in the transmittance control device can also communicate with the on-board central control. Optionally, the processor and the on-board central control can be connected via a bus, and any existing data interaction protocol can be used for communication, and the embodiments of the present disclosure do not impose too many restrictions on this. For example, a protocol that complies with the Automotive Open System Architecture (AUTOSAR).

Optionally, in some application scenarios, the processor in the transmittance control device can control the opening state of the car window. For example, it can control the lifting of the side windows, or control the opening degree of the sunroof. The on-board central control can send a control instruction to the processor in the transmittance control device, so that the processor executes the operation of adjusting the opening state of the car window.

The on-board power supply can be connected to the drive circuit in the transmittance control device to power the drive circuit. Optionally, the on-board power supply can provide a working voltage of 12V to the drive circuit. In some application scenarios, the on-board power supply can include but is not limited to an on-board battery and a transformer circuit. The transformer circuit can be a DC-to-DC circuit.

In a possible implementation, the instruction input device may be a mechanical key (button), a mechanical knob, or a touch slider bar. The instruction input device may be connected to a processor in the transmittance control device via an instruction input interface of the glass transmittance adjustment system. Users may trigger a transmittance adjustment instruction via the instruction input device.

In another possible implementation, the instruction input device may include a touch screen. The touch screen may display a button, a knob, or a slider for triggering the transmittance adjustment instruction. The instruction input device may be connected to the processor in the transmittance control device via an instruction input interface of the glass transmittance adjustment system. Users may trigger the transmittance adjustment instruction via a button, a knob, or a slider displayed on the touch screen.

Based on the vehicle provided in the above embodiment, the vehicle may also include a powertrain system, an air conditioning system, a navigation system, an audio media system, various sensors, etc. Various sensors may include but are not limited to collision sensors, sink sensors, temperature sensors, etc. The present disclosure embodiments do not impose too many restrictions on this.

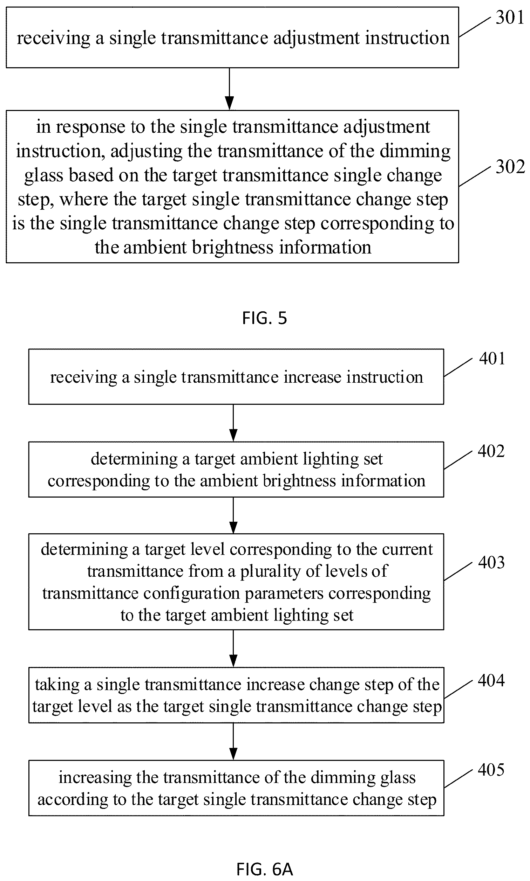

Based on the glass transmittance adjustment system in any of the above embodiments, the present disclosure also provides a glass transmittance adjustment method, which can be performed by a transmittance control device. FIG. 5 shows a glass transmittance adjustment method, which includes the following steps.

Step 301, receiving a single transmittance adjustment instruction.

The single transmittance adjustment instruction can refer to the relevant introduction in the above-mentioned embodiments, which will not be repeated here.

In the embodiments of the present disclosure, a transmittance adjustment operation may include step 302.

Step 302, in response to the single transmittance adjustment instruction, adjusting the transmittance of the dimming glass based on the target transmittance single change step, where the target transmittance single change step is the transmittance single change step corresponding to the ambient brightness information.

In specific implementation, the transmittance control device can determine the single transmittance change step corresponding to the ambient brightness information according to the ambient brightness information, as the target transmittance single change step in this transmittance adjustment operation. The transmittance of the dimming glass is adjusted with the target transmittance single change step as the adjustment target. The transmittance change of the dimming glass can be made consistent with or close to the target transmittance single change step. The transmittance change of the glass can refer to the degree of change of the transmittance after a transmittance adjustment operation compared to the transmittance before the transmittance adjustment operation.

Based on the glass transmittance adjustment method shown in FIG. 5, a single transmittance adjustment instruction in an embodiment of the present disclosure may include a single transmittance increase instruction and a single transmittance decrease instruction.

In a possible implementation, the transmittance control device may determine the single transmittance change step corresponding to the ambient brightness information based on the ambient brightness information and the single transmittance adjustment instruction. The transmittance control device may adjust the transmittance of the dimming glass according to the target transmittance single change step.

In some examples, the transmittance control device can determine the target transmittance single change step based on ambient brightness information and the single transmittance increase instruction in response to a single transmittance increase instruction, and increase the transmittance of the dimming glass according to the target transmittance single change step, so that the degree of increase in the transmittance of the dimming glass is equal to or close to the target transmittance single change step.

In other examples, the transmittance control device can determine the target transmittance single change step based on ambient brightness information and the single transmittance decrease instruction in response to a single transmittance decrease instruction, and reduce the transmittance of the dimming glass according to the target transmittance single change step, so that the degree of reduction in the transmittance of the dimming glass is equal to or close to the target transmittance single change step.

The glass transmittance adjustment system may be configured with multiple ambient lighting sets, and the number of the multiple ambient lighting sets may be a positive integer greater than or equal to 2. Each ambient lighting set may include at least one value, and each value may represent ambient brightness. For example, the value in the ambient lighting set may be an ambient brightness value, or the value in the ambient lighting set may be the aforementioned indication information.

In a possible application scenario, the ambient brightness information can be implemented as set identification information. The transmittance control device can determine, based on the received set identification information, an ambient lighting set corresponding to the received set identification information from multiple ambient lighting sets as the target ambient lighting set. Among the multiple ambient lighting sets, one ambient lighting set can include at least one ambient brightness value. The ambient brightness values in different ambient lighting sets are different.

In some other possible application scenarios, the ambient brightness information can be implemented as an ambient brightness value. Among multiple ambient lighting sets, one ambient lighting set can include at least one ambient brightness value. The ambient brightness values in different ambient lighting sets are different. The minimum ambient brightness and the maximum ambient brightness in an ambient lighting set can be used as the minimum threshold and the maximum threshold for determining whether a certain ambient brightness information belongs to the ambient lighting set. The transmittance control device can determine the ambient lighting set to which the received ambient brightness value belongs from multiple ambient lighting sets based on the received ambient brightness value, as the target ambient lighting set.

In some other possible application scenarios, the ambient brightness information can be implemented as indication information. Among multiple ambient lighting sets, one ambient lighting set can include at least one indication information. The indication information in different ambient lighting sets is different. The minimum and maximum values of the indication information in an ambient lighting set can be used as the minimum threshold and maximum threshold for determining whether a certain ambient brightness information belongs to the ambient lighting set. The transmittance control device can determine the ambient lighting set to which the received indication information belongs from multiple ambient lighting sets based on the received indication information as the target ambient lighting set.

For the convenience of distinction, the multiple ambient lighting sets may include a first ambient lighting set and a second ambient lighting set. The maximum ambient brightness that can be represented by the values in the first ambient lighting set is less than the minimum ambient brightness that can be represented by the values in the second ambient lighting set. In other words, in the first ambient lighting set and the second ambient lighting set, the second ambient lighting set can represent a brighter environment, and the first ambient lighting set can represent a darker environment.

It can be understood that the multiple ambient lighting sets may include more than two ambient lighting sets, for example, ambient lighting set 1, ambient lighting set 2, and ambient lighting set 3. For any two ambient lighting sets in ambient lighting sets 1 to 3, there are a first ambient lighting set and a second ambient lighting set, that is, there are a brighter environment and a darker environment.

The transmittance control device may pre-store each of the multiple ambient lighting sets, or pre-store the maximum value and the minimum value of each of the multiple ambient lighting sets. The transmittance control device may determine whether the current ambient brightness information belongs to the ambient lighting set by comparing the current ambient brightness information (the ambient brightness information most recently received by the transmittance control device) with the maximum value and the minimum value in the ambient lighting set. In the embodiments of the present disclosure, the ambient lighting set including the current ambient brightness information is used as the target ambient lighting set corresponding to the current ambient brightness information.

In a possible implementation, the glass transmittance adjustment system is further configured with transmittance configuration parameters corresponding to each of the multiple ambient lighting sets. The transmittance configuration parameters corresponding to each ambient lighting set include multiple levels of transmittance change step. Each level of the transmittance change step includes a single change step for increasing the transmittance and a single change step for decreasing the transmittance.

For example, the multiple levels include a first level and a second level. The transmittance configuration parameters corresponding to each ambient lighting set include a first level of single change step for increasing transmittance, a first level of a single change step for decreasing transmittance, a second level of a single change step for increasing transmittance, and a second level of a single change step for decreasing transmittance.

The levels may represent the transmittance of the dimming glass. In some examples, in the transmittance configuration parameters corresponding to different ambient lighting sets, the transmittance of the dimming glass represented by the same level is different. In other examples, in the transmittance configuration parameters corresponding to different ambient lighting sets, the transmittance of the dimming glass represented by the same level may be the same.

A level of single change step for increasing the transmittance represents the corresponding single transmittance change step in the case of increasing the transmittance at the level. A level of single change step for decreasing the transmittance represents the corresponding single transmittance change step in the case of decreasing the transmittance at the level. For ease of introduction, in the embodiments of the present disclosure, each level of single change step for increasing the transmittance can be a positive number less than or equal to 1, and each level of single change step for decreasing the transmittance can be a positive number less than or equal to 1.

The transmittance control device can determine the target ambient lighting set corresponding to the current ambient lighting in response to a single transmittance adjustment instruction, determine a level corresponding to the current transmittance in the transmittance configuration parameters of the target ambient lighting set, and adjust the transmittance of the dimming glass according to the single transmittance change step of the level corresponding to the current transmittance.

The transmittance control device may use the most recently acquired ambient light as the current ambient light. The transmittance control device may use the ambient lighting set including the current ambient light in the aforementioned multiple ambient lighting sets as the target ambient lighting set. The transmittance control device may determine a level corresponding to the current transmittance. For example, the transmittance control device may match the current transmittance with multiple levels in the transmittance configuration parameters of the target ambient lighting set.

The multiple levels in the transmittance configuration parameters of the target ambient lighting set have corresponding transmittances. In some examples, the transmittance control device can determine a level corresponding to the current transmittance. Among the transmittances corresponding to each level in the multiple levels, the level corresponding to the transmittance equal to or close to the current transmittance can be used as the level corresponding to the current transmittance.

For example, in vehicle-related application scenarios, as the vehicle moves, the ambient brightness outside the vehicle may switch, such as when the vehicle moves from a darker environment to a brighter environment, or vice versa. Alternatively, the ambient brightness outside the vehicle changes, such as during sunrise, the ambient brightness outside the vehicle changes from darker to brighter, or during sunset, the ambient brightness outside the vehicle changes from brighter to darker.

The number of levels corresponding to the transmittance of the dimming glass in a brighter environment may be different from the number of levels corresponding to the transmittance in a darker environment, and the single transmittance change steps corresponding to levels may also be different, so that in the process of adjusting the transmittance of the dimming glass, for example, when a vehicle is driving from a brighter environment to a darker environment, the current transmittance of the dimming glass may be the transmittance corresponding to a level in the transmittance configuration parameters of the brighter environment lighting set, but the transmittance corresponding to a level in the transmittance configuration parameters of the darker environment lighting set does not have a value equal to the current transmittance. Therefore, the matching level in the transmittance configuration parameters of the darker environment lighting set with the current transmittance can be determined by matching.

In some examples, the transmittance control device may determine a target level among multiple levels in the transmittance configuration parameters of the target ambient lighting set as the level corresponding to the current transmittance. The target level may meet the following requirements: the difference between the current transmittance and the transmittance corresponding to the target level is less than the difference between the current transmittance and the transmittance corresponding to other levels. In other examples, the transmittance control device may match the level corresponding to the current transmittance upward. For transmittances included in multiple levels, the transmittance control device may determine the level corresponding to the smallest transmittance from the transmittances of the levels greater than the current transmittance as the level corresponding to the current transmittance. In yet other examples, the transmittance control device may match the level corresponding to the current transmittance downward. For transmittances included in multiple levels, the transmittance control device may determine the level corresponding to the largest transmittance from the transmittances of the levels less than the current transmittance as the level corresponding to the current transmittance.

In one possible scenario, the transmittance control device may determine the target ambient lighting set corresponding to the current ambient lighting in response to the single transmittance increase instruction, determine the level corresponding to the current transmittance in the transmittance configuration parameters of the target ambient lighting set, and adjust the transmittance of the dimming glass according to the single transmittance increase step of the level corresponding to the current transmittance.

In another possible scenario, the transmittance control device may determine the target ambient lighting set corresponding to the current ambient lighting in response to a single transmittance decreasing instruction, determine the level corresponding to the current transmittance in the transmittance configuration parameters of the target ambient lighting set, and adjust the transmittance of the dimming glass according to the single transmittance decreasing step of the level corresponding to the current transmittance.

Among the multiple ambient lighting sets, there may be two ambient lighting sets. Among the two ambient lighting sets, the maximum ambient brightness information in the first ambient lighting set is less than the minimum ambient brightness information in the second ambient lighting set. In other words, the first ambient lighting set may represent a darker ambient lighting set, and the second ambient lighting set may represent a brighter ambient lighting set.

In a possible design, in the transmittance configuration parameters corresponding to the first ambient lighting set, the single change step for increasing the transmittance increase corresponding to any level is greater than the single change step for decreasing the transmittance decrease corresponding to the any level. Optionally, in the transmittance configuration parameters of the second ambient lighting set, the single change step for increasing the transmittance corresponding to any level is equal to the single change step for decreasing the transmittance corresponding to the any level. Alternatively, in the transmittance configuration parameters of the second ambient lighting set, the single change step for increasing the transmittance corresponding to any level is less than the single change step for decreasing the transmittance corresponding to the any level.

In a possible application scenario, multiple ambient lighting sets may include ambient lighting set 1, ambient lighting set 2, and ambient lighting set 3. The maximum value of ambient brightness information in ambient lighting set 1 is less than the minimum value of ambient brightness information in ambient lighting set 2. The maximum value of ambient brightness information in ambient lighting set 2 is less than the maximum value of ambient brightness information in ambient lighting set 3. Assume that, in the transmittance configuration parameters corresponding to each ambient lighting set, the numbers of multiple levels are the same. The multiple levels include level Y and level Z. The transmittance configuration parameters corresponding to each ambient lighting set are shown in Table 1.

Table 1

| | ambient lighting set 1 | | ambient lighting set 2 | | ambient lighting set 3 | |
|---|---|---|---|---|---|---|
| Level | Y | Z | Y | Z | Y | Z |
| Single change step for increasing transmittance | T1_1Y | T1_1Z | T1_2Y | T1_2Z | T1_3Y | T1_3Z |
| Single change step for decreasing transmittance | T2_1Y | T2_1Z | T2_2Y | T2_2Z | T2_3Y | T2_3Z |

In ambient lighting set 1 and ambient lighting set 2, ambient lighting set 1 is a darker ambient lighting set, and ambient lighting set 2 is a brighter ambient lighting set. In ambient lighting set 1 and ambient lighting set 3, ambient lighting set 1 is a darker ambient lighting set, and ambient lighting set 3 is a brighter ambient lighting set. In ambient lighting set 2

and ambient lighting set 3, ambient lighting set 2 is a darker ambient lighting set, and ambient lighting set 3 is a brighter ambient lighting set.

In some examples, among the multiple ambient lighting sets, there are two ambient lighting sets, and the single change step for increasing transmittance at each level in the transmittance configuration parameters of the darker ambient lighting set is greater than the single change step for decreasing transmittance at each level. The single change step for increasing transmittance at each level in the transmittance configuration parameters of the brighter ambient lighting set is equal to or less than the single change step for decreasing transmittance at the each level.

For example, in conjunction with Table 1, the single change step T1_1Y for increasing transmittance at level Y in the transmittance configuration parameters of ambient lighting set 1 is greater than the single change step T2_1Y for decreasing transmittance at level Y in the transmittance configuration parameters of ambient lighting set 1. The single change step T1_1Z for increasing transmittance at level Z in the transmittance configuration parameters of ambient lighting set 1 is greater than the single change step T2_1Z for decreasing the transmittance at level Z in the transmittance configuration parameters of ambient lighting set 1.

The single change step T1_2Y for increasing transmittance at level Y in the transmittance configuration parameters of ambient lighting set 2 is equal to the single change step T2_2Y for decreasing transmittance at level Y in the transmittance configuration parameters of ambient lighting set 1. The single change step T1_2Z for increasing transmittance at level Z in the transmittance configuration parameters of ambient lighting set 2 is equal to the single change step T2_2Z for decreasing transmittance at level Z in the transmittance configuration parameters of ambient lighting set 1.

The single change step T1_3Yfor of increasing the transmittance at level Y in the transmittance configuration parameters of ambient lighting set 3 is less than the single change step T2_3Y for decreasing transmittance at level Y in the transmittance configuration parameters of ambient lighting set 1. The single change step T1_3Z for increasing transmittance at level Z in the transmittance configuration parameters of ambient lighting set 3 is less than the single change step T2_3Z for decreasing transmittance at level Z in the transmittance configuration parameters of ambient lighting set 1.

In such a design, under different ambient brightness information, the difference between the single change steps for increasing transmittance of the same level can be set according to the sensitivity of the human eye. Similarly, under different ambient brightness information, the difference between the single change steps for decreasing transmittance of the same level can be set according to the sensitivity of the human eye. This can avoid situations such as user dizziness or blocked vision caused by adjusting the transmittance of dimming glass under different ambient brightness information.

Optionally, the single change steps for of increasing transmittance corresponding to the multiple levels in the transmittance configuration parameters of any ambient lighting set may be different, and the single change step for decreasing transmittance corresponding to the multiple levels may be different. Among the multiple ambient lighting sets, there are two ambient lighting sets, and among the single change steps for increasing transmittance corresponding to the multiple levels and the single change step for decreasing transmittance corresponding to the multiple levels in the transmittance configuration parameters of the first ambient lighting set, at least one single change step for increasing transmittance is larger than at least one single change step for decreasing transmittance, or all single change steps for increasing transmittance are larger than all single change steps for decreasing the transmittance.

Optionally, among the single change steps for increasing transmittance corresponding to the multiple levels of the transmittance configuration parameter of the first ambient lighting set and the single change steps for decreasing the transmittance corresponding to the multiple levels, the single change step for increasing the transmittance with the smallest value is greater than the single change step for decreasing the transmittance with the largest value. And the difference between the single change step for increasing the transmittance with the smallest value and the single change step for decreasing the transmittance with the largest value is less than a preset percentage. Optionally, the preset percentage can be 10%.

In some examples, among multiple ambient lighting sets, there are two ambient lighting sets, and the single change step size for increasing the transmittance at the same level in the transmittance configuration parameters of the first ambient lighting set is larger than the single change step for increasing the transmittance at the same level in the transmittance configuration parameters of the second ambient lighting set.

For example, in conjunction with Table 1, the single change step T1_1Y for increasing transmittance at level Y in the transmittance configuration parameters of ambient lighting set 1 is greater than the single change step T1_2Y for increasing transmittance at level Y in the transmittance configuration parameters of ambient lighting set 2. The single change step T1_2Y for increasing transmittance at level Y in the transmittance configuration parameters of ambient lighting set 2 is greater than the single change step T1_3Y for increasing transmittance at level Y in the transmittance configuration parameters of ambient lighting set 3.

The single change step T1_1Z for increasing transmittance t level Z in the transmittance configuration parameters of ambient lighting set 1 is greater than the single change step T1_2Z for increasing transmittance at level Z in the transmittance configuration parameters of ambient lighting set 2. The single change step T1_2Z for increasing transmittance at level Z in the transmittance configuration parameters of ambient lighting set 2 is greater than the single change step T1_3Z for increasing transmittance at level Z in the transmittance configuration parameters of ambient lighting set 3.

This allows the glass's transmittance to quickly reach users' desired transmittance in a darker environment, reducing the number of user operations. It can also avoid large changes in transmittance when increasing the transmittance in a brighter environment, causing users to feel dizzy or other discomfort.

In some examples, among multiple ambient lighting sets, there are two ambient lighting sets, and the single change step for reducing transmittance at the same level in the transmittance configuration parameters of the first ambient lighting set is smaller than the single change step for reducing transmittance at the same level in the transmittance configuration parameters of the second ambient lighting set.

For example, in conjunction with Table 1, the single change step T2_1Y for decreasing transmittance at the level Y in the transmittance configuration parameters of the ambient lighting set 1 is smaller than the single change step T2_2Y for decreasing transmittance at the level Y in the transmittance configuration parameters of the ambient lighting set 2. The single change step T2_2Y for decreasing transmittance at the level Y in the transmittance configuration parameters of the ambient lighting set 2 is smaller than the single change step T2_3Y for decreasing transmittance at the level Y in the transmittance configuration parameters of the ambient lighting set 3.

The single change step T2_1Z for decreasing transmittance at the level Z in the transmittance configuration parameters of the ambient lighting set 1 is less than the single change step T2_2Z for decreasing transmittance at the level Z in the transmittance configuration parameters of the ambient lighting set 2. The single change step T2_2Z for decreasing transmittance at the level Z in the transmittance configuration parameters of the ambient lighting set 2 is less than the single change step T2_3Z for decreasing transmittance at the level Z in the transmittance configuration parameters of the ambient lighting set 3.

That is to say, the single transmittance change step in the operation of reducing the transmittance in a darker environment is smaller than the single transmittance change step in the operation of reducing the transmittance in a brighter environment. This design can prevent users' vision from quickly becoming dark when reducing the transmittance in a darker environment. It can also quickly make the glass transmittance reach users' expected transmittance in a brighter environment, reducing the number of user operations.

Based on the glass transmittance adjustment system provided by any one of the above embodiments, in the transmittance configuration parameters corresponding to any ambient lighting set, the step difference degree tc of any level can be the ratio of the difference DT between the single change step T1 for increasing transmittance and the single change step T2 for decreasing transmittance at the any level to the maximum value of the single change step T1 for increasing transmittance and the single change step T2 for decreasing the transmittance at the any level, that is,

$$tc = \frac{|T1 - T2|}{\max(T1,\ T2)}\ .$$

In some examples, in the multiple ambient lighting sets, in the transmittance configuration parameters in any ambient lighting set, the minimum value of the step difference degree of the levels is greater than the first percentage. Optionally, the first percentage may be 30%, or the first percentage may be 50%.

For example, referring to Table 1, the step difference degree of each level in the transmittance configuration parameters of the ambient lighting set 1 is greater than 30%. The step difference degree of each level in the transmittance configuration parameters of the ambient lighting set 3 is greater than 30%.

In some examples, the numbers of multiple levels in the transmittance configuration parameters of each ambient lighting set are the same. Among the multiple ambient lighting sets, there are two ambient lighting sets, and the step difference degree of the first level in the transmittance configuration parameters of the first ambient lighting set is greater than the step difference degree of the first level in the transmittance configuration parameters of the second lighting set.

For example, referring to Table 1, the step difference degree of level Y in the transmittance configuration parameters of ambient lighting set 1 is greater than the step difference degree of level Y in the transmittance configuration parameters of ambient lighting set 3. The step difference degree of level Z in the transmittance configuration parameters of ambient lighting set 1 is greater than the step difference degree of level Z in the transmittance configuration parameters of ambient lighting set 3.

It should be understood that the levels Y and Z in the transmittance configuration parameters of each ambient lighting set shown in Table 1 above are configured to illustrate the examples provided in this application, and are not intended to be a specific limitation on the number of levels in the transmittance configuration parameters of the ambient lighting set. In some application scenarios, the number of levels in the transmittance configuration parameters of each ambient lighting set may be the same, and the number of levels may be greater than or equal to 2. In other application scenarios, the number of levels in the transmittance configuration parameters of each ambient lighting set may be different.

For ease of understanding, based on any one of the aforementioned implementation methods of the transmittance control device determining a single transmittance change step corresponding to the ambient brightness information according to the ambient brightness information and a single transmittance adjustment instruction, FIG. 6A exemplarily shows a glass transmittance adjustment method, which includes the following steps:

Step 401: receiving a single transmittance increase instruction;

Step 402: determining a target ambient lighting set corresponding to the ambient brightness information;

Step 403: determining a target level corresponding to the current transmittance from a plurality of levels of transmittance configuration parameters corresponding to the target ambient lighting set;

Step 404: taking a single change step for increasing transmittance of the target level as the single change step of the target light transmittance;

Step 405: increasing the transmittance of the dimming glass according to the single change step of the target light transmittance.

The embodiment of the present disclosure does not specifically limit the order in which step 401 and step 402 occur. In some application scenarios, the transmittance control device may perform the operation in step 402 after performing step 401. In other application scenarios, the transmittance control device may perform the operations in step 402 and step 403 in real time or periodically, and after receiving a single transmittance increase instruction, in response to the single transmittance increase instruction, perform the operations in step 404 and step 405.

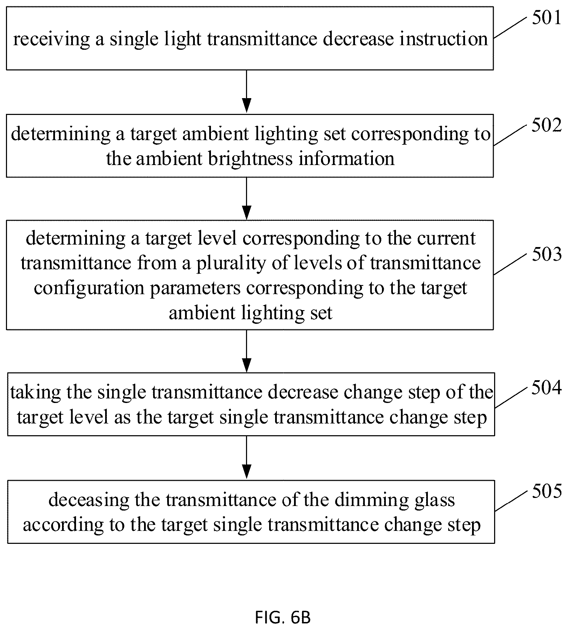

FIG. 6B exemplarily shows a method for adjusting glass transmittance, which includes the following steps:

Step 501: receiving a single light transmittance decrease instruction;

Step 502: determining a target ambient lighting set corresponding to the ambient brightness information;

Step 503: determining a target level corresponding to the current transmittance from a plurality of levels of transmittance configuration parameters corresponding to the target ambient lighting set;

Step 504: taking the single change step for decreasing transmittance of the target level as the single change step of the target light transmittance;

Step 505: deceasing the transmittance of the dimming glass according to the single change step of the target light transmittance.

The embodiment of the present disclosure does not specifically limit the order in which step 501 and step 502 occur. In some application scenarios, the transmittance control device may perform the operation in step 502 after performing step 501. In other application scenarios, the transmittance control device may perform the operations in step 502 and step 503 in real time or periodically, and after receiving a single transmittance decrease instruction, in response to the single transmittance decrease instruction, perform the operations in step 504 and step 505.

In another possible implementation, the glass transmittance adjustment system is further configured with transmittance configuration parameters corresponding to each of the multiple ambient lighting sets. The transmittance configuration parameters corresponding to any ambient lighting set include a single change step for increasing transmittance and a single change step for decreasing transmittance. The transmittance control device can determine the single change step of the target transmittance according to the transmittance configuration parameters corresponding to the target ambient lighting set and the single transmittance adjustment instruction. The transmittance of the dimming glass is adjusted according to the single change step of the target transmittance.

The single change step for increasing transmittance represents the corresponding single transmittance change step when the transmittance is increased. The single change step for decreasing transmittance represents the corresponding single transmittance change step when the transmittance is decreased. For the convenience of introduction, in the embodiment of the present disclosure, the single change step for increasing transmittance can be a positive number less than or equal to 1, and the single change step for decreasing transmittance can be a positive number less than or equal to 1.

The transmittance control device can determine the target ambient lighting set corresponding to the current ambient light in response to the single transmittance adjustment instruction, and determine the single change step of the target transmittance according to the single transmittance adjustment instruction and the target ambient lighting set. The transmittance of the dimming glass is adjusted according to the single change step of the target transmittance.

In one possible scenario, the transmittance control device can determine the target ambient lighting set corresponding to the current ambient light in response to a single transmittance increase instruction, and use the single change step for increasing transmittance in the transmittance configuration parameters of the target ambient lighting set as the single change step of the target transmittance based on the single transmittance increase instruction and the target ambient lighting set, and adjust the transmittance of the dimming glass according to the single change step of the target transmittance.

In another possible scenario, the transmittance control device may determine the target ambient lighting set corresponding to the current ambient light in response to a single transmittance decrease instruction, and determine the single change step for decreasing transmittance in the transmittance configuration parameters of the target ambient lighting set as the single change step of target transmittance based on the single transmittance decrease instruction and the target ambient lighting set, and adjust the transmittance of the dimming glass according to the single change step of target transmittance.

In one possible design, among multiple ambient lighting sets, there may be two ambient lighting sets. Among the two ambient lighting sets, the single change step for increasing transmittance in the transmittance configuration parameters corresponding to the first ambient lighting set is larger than the single change step for increasing transmittance in the transmittance configuration parameters corresponding to the second ambient lighting set.

In the embodiment of the present disclosure, the single change step for increasing the transmittance in the transmittance configuration parameters corresponding to the darker ambient lighting set is recorded as the single change step A for increasing transmittance, and the single change step for increasing the transmittance in the transmittance configuration parameters corresponding to the brighter ambient lighting set is recorded as the single change step B for increasing transmittance. The relationship between the single change step A for increasing transmittance and the single change step B for increasing transmittance is that the single change step A for increasing transmittance is greater than the single change step B for increasing transmittance.

That is to say, the single transmittance change step in the operation of increasing the transmittance in a darker environment is greater than the single transmittance change step in the operation of increasing the transmittance in a brighter environment. In this way, the transmittance of the glass can quickly reach users' expected transmittance in a darker environment, reducing the number of user operations. It can also avoid a large change in the transmittance in the operation of increasing the transmittance in a brighter environment, which may cause users to feel dizzy or other discomfort.

In one possible design, among multiple ambient lighting sets, there may be two ambient lighting sets. Among these two ambient lighting sets, the single change step for decreasing transmittance in the transmittance configuration parameters corresponding to the first ambient lighting set is smaller than the single change step for decreasing transmittance in the transmittance configuration parameters corresponding to the second ambient lighting set.

In the embodiment of the present disclosure, the single change step for decreasing transmittance in the transmittance configuration parameters corresponding to the darker ambient lighting set is recorded as the single change step P for decreasing transmittance, and the single change step for decreasing transmittance in the transmittance configuration parameters corresponding to the brighter ambient lighting set is recorded as the single change step Q for decreasing transmittance. The relationship between the single change step P for decreasing transmittance and the single change step Q for decreasing transmittance is that the single change step P for decreasing transmittance is less than the single change step Q of transmittance.

That is to say, the single transmittance change step in the operation of decreasing the transmittance in a darker environment is smaller than the single transmittance change step in the operation of decreasing the transmittance in a brighter environment. This design can prevent user's vision from quickly becoming dark when decreasing the transmittance in a darker environment. It can also quickly make the glass transmittance reach users' expected transmittance in a brighter environment, decreasing the number of user operations.

In a possible design, among the multiple ambient lighting sets, there may be two ambient lighting sets. Among the two ambient lighting sets, the single change step for increasing transmittance in the transmittance configuration parameters corresponding to the first ambient lighting set is greater than the single change step for increasing transmittance in the transmittance configuration parameters corresponding to the second ambient lighting set. Moreover, the single change step for decreasing transmittance in the transmittance configuration parameters corresponding to the first ambient lighting set is less than the single change step for decreasing transmittance in the transmittance configuration parameters corresponding to the second ambient lighting set.

In one possible design, there may be two ambient lighting sets among multiple ambient lighting sets, the single change step for increasing transmittance in the transmittance configuration parameters corresponding to the first ambient lighting set of the two ambient lighting sets may be greater than the single change step for decreasing transmittance in the transmittance configuration parameters corresponding to the first ambient lighting set.

The single change step for increasing transmittance in the transmittance configuration parameters corresponding to the second ambient lighting set may be less than or equal to the single change step for decreasing the transmittance in the transmittance configuration parameters corresponding to the second ambient lighting set.

That is to say, there are two ambient lighting sets among the multiple ambient lighting sets that meet the following rules: among these two ambient lighting sets, the single change step for increasing transmittance is greater than the single change step for decreasing transmittance in the transmittance configuration parameters corresponding to the darker ambient lighting set; and the single change step for increasing transmittance can be less than or equal to the single change step for decreasing transmittance in the transmittance configuration parameters corresponding to the brighter ambient lighting set.

In a possible application scenario, the multiple ambient lighting sets may include ambient lighting set 1, ambient lighting set 2, and ambient lighting set 3.

The maximum value of the ambient brightness information in ambient lighting set 1 is less than the minimum value of the ambient brightness information in ambient lighting set 2. The maximum value of the ambient brightness information in ambient lighting set 2 is less than the maximum value of the ambient brightness information in ambient lighting set 3. The transmittance configuration parameters corresponding to each ambient lighting set are shown in Table 2.

Table 2

|  | ambient lighting set 1 | ambient lighting set 2 | ambient lighting set 3 |
|---|---|---|---|
| single change step for increasing transmittance | C1 | C2 | C3 |
| single change step for deceasing transmittance | S1 | S2 | S3 |

In ambient lighting set 1 and ambient lighting set 2, ambient lighting set 1 is a darker ambient lighting set, and ambient lighting set 2 is a brighter ambient lighting set. In ambient lighting set 1 and ambient lighting set 3, ambient lighting set 1 is a darker ambient lighting set, and ambient lighting set 3 is a brighter ambient lighting set. In ambient lighting set 2 and ambient lighting set 3, ambient lighting set 2 is a darker ambient lighting set, and ambient lighting set 3 is a brighter ambient lighting set.

The single change step C1 for increasing transmittance in the transmittance configuration parameters of the ambient lighting set 1 is greater than the single change step S1 for decreasing the transmittance in the transmittance configuration parameters of the ambient lighting set 1. The single change step C2 for increasing transmittance in the transmittance configuration parameters of the ambient lighting set 2 may be equal to or less than the single change step S2 for decreasing transmittance in the transmittance configuration parameters of the ambient lighting set 2. The single change step C3 for increasing transmittance in the transmittance configuration parameters of the ambient lighting set 3 may be less than the single change step S3 for decreasing transmittance in the transmittance configuration parameters of the ambient lighting set 3.

In some examples, the single change step C1 for increasing transmittance in the transmittance configuration parameters of ambient lighting set 1 is greater than the single change step C2 for increasing transmittance in the transmittance configuration parameters of ambient lighting set 2. The single change step C2 for increasing transmittance in the transmittance configuration parameters of ambient lighting set 2 is greater than the single change step C3 for increasing transmittance in the transmittance configuration parameters of ambient lighting set 3.

In some examples, the single change step S1 for decreasing transmittance in the transmittance configuration parameters of ambient lighting set 1 is smaller than the single change step S2 for decreasing transmittance in the transmittance configuration parameters of ambient lighting set 2. The single change step S2 for decreasing transmittance in the transmittance configuration parameters of ambient lighting set 2 is larger than the single change step S3 for decreasing transmittance in the transmittance configuration parameters of ambient lighting set 3.

In some examples, the single change step C1 for increasing transmittance in the transmittance configuration parameters of ambient lighting set 1 is greater than the single change step C2 for increasing transmittance in the transmittance configuration parameters of ambient lighting set 2. The single change step C2 for increasing transmittance in the transmittance configuration parameters of ambient lighting set 2 is greater than the single change step C3 for increasing transmittance in the transmittance configuration parameters of ambient lighting set 3. The single change step S1 for decreasing transmittance in the transmittance configuration parameters of ambient lighting set 1 is less than the single change step S2 for decreasing transmittance in the transmittance configuration parameters of ambient lighting set 2. The single change step S2 for decreasing transmittance in the transmittance configuration parameters of ambient lighting set 2 is greater than the single change step S3 for decreasing the transmittance in the transmittance configuration parameters of ambient lighting set 3.

In a possible design, among multiple ambient lighting sets, the transmittance configuration parameters of any ambient lighting set may have a step difference. For the convenience of distinction, taking the third ambient lighting set characterizing any ambient lighting set. The step difference fc of the transmittance configuration parameters corresponding to the third ambient lighting set may be the ratio of the difference between the single change step TA for increasing transmittance and the single change step TB for decreasing the transmittance in the transmittance configuration parameters corresponding to the third ambient lighting set to the maximum value of the single change step TA for increasing transmittance and the single change step TB for decreasing transmittance in the transmittance configuration parameters corresponding to the third ambient lighting set, that is, $fc = \dfrac{|TA-TB|}{\max(TA,\ TB)}$.

For example, in combination with the application scenario shown in Table 2 above, the step difference of the transmittance configuration parameters of the ambient lighting set 1 is $\dfrac{|C1-S1|}{\max(C1,\ S1)}$. The step difference of the transmittance configuration parameters of the ambient lighting set 2 is $\frac{|C2-S2|}{\max(C2,\ S2)}$, and the step difference of the transmittance configuration parameters of the ambient lighting set 3 is $\frac{|C3-S\ |}{\max(C3,\ S3)}$.

Among the multiple ambient lighting sets, the step difference of the transmittance configuration parameter of any ambient lighting set may be greater than a preset percentage, such as 30% or 50%.

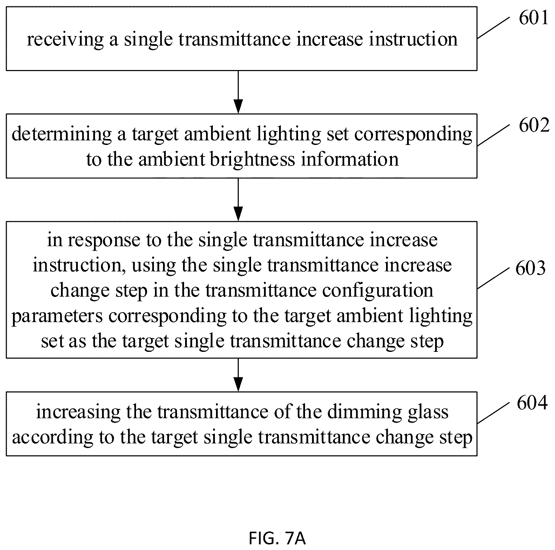

For ease of understanding, any one of the implementation methods of a single transmittance change step corresponding to the ambient brightness information can be determined by the aforementioned transmittance control device based on the ambient brightness information and a single transmittance adjustment instruction. FIG. 7A exemplarily shows a glass transmittance adjustment method, which includes the following steps:

Step 601: receiving a single light transmittance increase instruction;

Step 602: determining a target ambient lighting set corresponding to the ambient brightness information;

Step 603: in response to the single transmittance increase instruction, using the single transmittance increase step in the transmittance configuration parameters corresponding to the target ambient lighting set as the single change step of target transmittance;

Step 604: increasing the transmittance of the dimming glass according to the single change step of target transmittance.

The embodiment of the present disclosure does not specifically limit the order in which step 601 and step 602 occur. In some application scenarios, the transmittance control device may perform the operation in step 602 after performing step 601. In other application scenarios, the transmittance control device may perform step 602 in real time or periodically, and after receiving a single transmittance increase instruction, in response to the single transmittance increase instruction, perform the operations in step 603 and step 604.

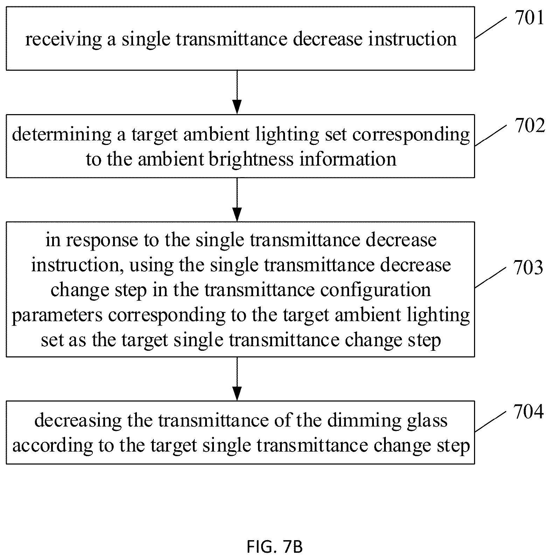

FIG. 7B exemplarily shows a method for adjusting glass transmittance, which includes the following steps:

Step 701: receiving a single light transmittance decrease instruction;

Step 702: determining a target ambient lighting set corresponding to the ambient brightness information;

Step 703: in response to the single transmittance decrease instruction, using the single change step for decreasing transmittance in the transmittance configuration parameters corresponding to the target ambient lighting set as the single change step of target transmittance;

Step 704: decreasing the transmittance of the dimming glass according to the single change step of target transmittance.

The embodiment of the present disclosure does not specifically limit the order of occurrence of step 701 and step 702. In some application scenarios, the transmittance control device may perform the operation in step 702 after performing step 701. In other application scenarios, the transmittance control device may perform step 702 in real time or periodically, and after receiving a single transmittance decrease instruction, perform the operations in step 703 and step 704 in response to the single transmittance decrease instruction.

In another possible implementation, the transmittance control device may determine the single transmittance change step corresponding to the ambient brightness information based on the ambient brightness information. The transmittance control device may adjust the transmittance of the dimming glass according to the single transmittance adjustment instruction and the single transmittance change step corresponding to the ambient brightness information.

In a possible design, the transmittance control device may pre-store the corresponding relationship between the ambient brightness information and the single transmittance change step. Optionally, the corresponding relationship between the ambient brightness information and the single transmittance change step is in a linear relationship. For example, the larger the ambient brightness information is, the smaller the single transmittance change step is. For another example, the smaller the ambient brightness information is, the larger the single transmittance change step is.

The glass transmittance adjustment system may be configured with multiple ambient lighting sets. The number of the multiple ambient lighting sets may be a positive integer greater than or equal to 2. An ambient lighting set may include at least one ambient lighting value. The ambient lighting values in different ambient lighting sets are different.

For the convenience of distinction, the multiple ambient lighting sets may include a first ambient lighting set and a second ambient lighting set. The maximum value of the ambient lighting in the first ambient lighting set is less than the minimum value of the ambient lighting set in the second ambient lighting set. In other words, in the first ambient lighting set and the second ambient lighting set, the second ambient lighting set may represent a brighter environment, and the first ambient lighting set may represent a darker environment.

It can be understood that the multiple ambient lighting sets may include more than two ambient lighting sets, for example, ambient lighting set 1, ambient lighting set 2, and ambient lighting set 3. For any two ambient lighting sets in ambient lighting sets 1 to 3, there are a first ambient lighting set and a second ambient lighting set, that is, there are a brighter environment and a darker environment.

In another possible implementation, the transmittance control device can determine the target ambient lighting set corresponding to the ambient brightness information based on the ambient brightness information, use the single transmittance change step corresponding to the target ambient lighting set as the target single transmittance change step, and adjust the transmittance of the dimming glass according to the target single transmittance change step. In this implementation, the single transmittance change step corresponding to the ambient lighting set is also the unit change step of the transmittance corresponding to the ambient lighting set. In the operation of increasing the transmittance or decreasing the transmittance, the transmittance of the dimming glass can be adjusted according to the target unit change step of the transmittance.

The glass transmittance adjustment system is configured with a single transmittance change step corresponding to each of the multiple ambient lighting sets. One ambient lighting set corresponds to one single transmittance change step. The single transmittance change steps corresponding to different ambient lighting sets are different.

The transmittance control device may pre-store each of the multiple ambient lighting sets, or pre-store the maximum value and the minimum value of each of the multiple ambient lighting sets. The transmittance control device may determine whether the current ambient brightness information belongs to the ambient lighting set by comparing the current ambient brightness information (the ambient brightness information most recently received by the transmittance control device) with the maximum value and the minimum value in the ambient lighting set. In the embodiment of the present disclosure, the ambient lighting set including the current ambient brightness information is used as the target ambient lighting set corresponding to the current ambient brightness information.

The transmittance control device can use the single transmittance change step corresponding to the target ambient lighting set as the target single transmittance change step, that is, the single transmittance change step corresponding to the current ambient brightness information. The transmittance control device can adjust the transmittance of the dimming glass according to the target single transmittance change step.

In the embodiment of the present disclosure, the single transmittance adjustment instruction may include a single transmittance increase instruction and a single transmittance decrease instruction. The transmittance control device may adjust the transmittance of the dimming glass according to the single transmittance adjustment instruction and the target single transmittance change step.

For example, the transmittance control device can increase the transmittance of the dimming glass according to a single transmittance increase instruction and a target single transmittance change step. For another example, the transmittance control device can decrease the transmittance of the dimming glass according to a single transmittance decrease instruction and a target single transmittance change step.

In some examples, there may be two ambient lighting sets among the multiple ambient lighting sets, and the single transmittance change step corresponding to the first ambient lighting set of the two ambient lighting sets is larger than the single transmittance change step corresponding to the second ambient lighting set. In other words, the single transmittance change step corresponding to the darker ambient lighting set is larger than the single transmittance change step corresponding to the brighter ambient lighting set. In such a design, the single transmittance change step used by the transmittance control device in the case of darker ambient brightness information is larger than the single transmittance change step used by the transmittance control device in the case of brighter ambient brightness information, so that the transmittance of the dimming glass can quickly reach the transmittance expected by users in the operation of increasing the transmittance, thereby reducing the number of user operations.

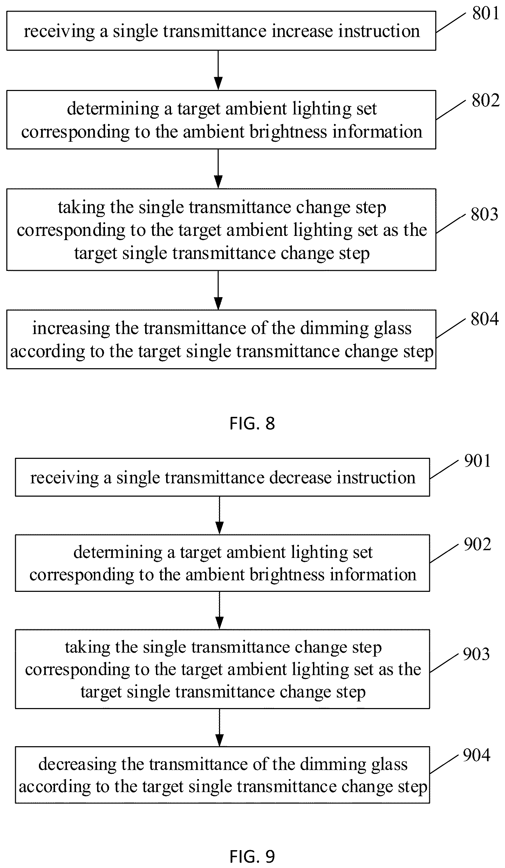

For ease of understanding, the aforementioned transmittance control device can determine any embodiment of the implementation method in which the single transmittance change step corresponding to the ambient brightness information can be determined based on the ambient brightness information. FIG. 8 exemplarily shows a glass transmittance adjustment method, which includes the following steps:

Step 801: receiving a single light transmittance increase instruction;
Step 802: determining a target ambient lighting set corresponding to the ambient brightness information;
Step 803: taking the single transmittance change step corresponding to the target ambient lighting set as the target single transmittance change step;
Step 804: increasing the transmittance of the dimming glass according to the target light single transmittance change step.

The embodiment of the present disclosure does not specifically limit the order in which step 801 and step 802 occur. In some application scenarios, the transmittance control device may perform the operation in step 802 after performing step 801. In other application scenarios, the transmittance control device may perform the operations in step 802 and step 803 in real time or periodically, and after receiving a single transmittance increase instruction, perform the operation in step 804 in response to the single transmittance increase instruction.

FIG. 9 exemplarily shows a method for adjusting glass transmittance, which includes the following steps:

Step 901: receiving a single light transmittance decrease instruction;
Step 902: determining a target ambient lighting set corresponding to the ambient brightness information;
Step 903: taking the single transmittance change step corresponding to the target ambient lighting set as the target single transmittance change step;
Step 904: decreasing the transmittance of the dimming glass according to the target single transmittance change step.

The embodiment of the present disclosure does not specifically limit the order in which step 901 and step 902 occur. In some application scenarios, the transmittance control device may perform the operation in step 902 after performing step 901. In other application scenarios, the transmittance control device may perform the operations in step 902 and step 903 in real time or periodically, and after receiving a single transmittance decrease instruction, perform the operation in step 904 in response to the single transmittance decrease instruction.

In a possible design, the glass transmittance adjustment system can also be configured with the number of levels for each ambient lighting set. The number of levels for different ambient lighting sets is different. The number of levels can represent the maximum net number of increasing operations, or the maximum net number of decreasing operations.

For ease of introduction, take ambient lighting set 1 as an example. The number of levels of ambient lighting set 1 is N1. That is, the maximum net number of increasing operations of ambient lighting set 1 is N1, and the maximum net number of decreasing operations of ambient lighting set 1 is N1.

Assume that the transmittance control device determines that the ambient lighting set corresponding to the current ambient brightness information is ambient lighting set 1 in response to a single transmittance increase instruction. If the transmittance control device determines that the ambient lighting sets corresponding to the ambient brightness information during the most recent n adjustment operations are all ambient lighting set 1, where n is a positive number, in this case, the transmittance control device can determine the net number of increase operations of ambient lighting set 1.

The net number of increasing operations of the ambient lighting set 1 is equal to the difference between the total number of increasing operations and the total number of decreasing operations in the most recent n adjustment operations. The transmittance control device can compare the net number of increasing operations of the ambient lighting set 1 with the maximum net number of increasing operations (i.e., the aforementioned N1). And after determining that the net number of increasing operations of the ambient lighting set 1 is less than the maximum net number of increasing operations (i.e., the aforementioned N1), the transmittance of the dimming glass is increased according to the target single transmittance change step. If the net number of increasing operations of the ambient lighting set 1 is equal to or greater than the maximum net number of increasing operations, the operation of increasing the transmittance of the dimming glass may not be performed, that is, the single transmittance increase instruction is not responded.

Assume that the transmittance control device responds to a single transmittance decrease instruction and determines that the ambient lighting set corresponding to the current ambient brightness information is ambient lighting set 1. If the transmittance control device determines that the ambient lighting sets corresponding to the ambient brightness information during the most recent n adjustment operations are all ambient lighting set 1, where n is a positive number, in this case, the transmittance control device can determine the net number of increasing operations of ambient lighting set 1.

The net number of decreasing operations of ambient lighting set 1 is equal to the difference between the total number of decreasing operations and the total number of increasing operations in the most recent n adjustment operations. The transmittance control device can compare the net number of decreasing operations of ambient lighting set 1 with the maximum net number of decreasing operations (i.e., the aforementioned N1). And after determining that the net number of decreasing operations of ambient lighting set 1 is less than the maximum net number of decreasing operations (i.e., the aforementioned N1), the transmittance of the dimming glass is decreased according to the target single transmittance change step. If the net number of decreasing operations of ambient lighting set 1 is equal to or greater than the maximum net number of decreasing operations, the operation of decreasing the transmittance of the dimming glass may not be performed, that is, the single transmittance decrease instruction is not responded to.

It can be understood from the above description that the number of levels of the ambient lighting set 1 is actually the maximum number of times that the transmittance of the dimming glass can be continuously increased, or the maximum number of times that the transmittance of the dimming glass can be continuously decreased.

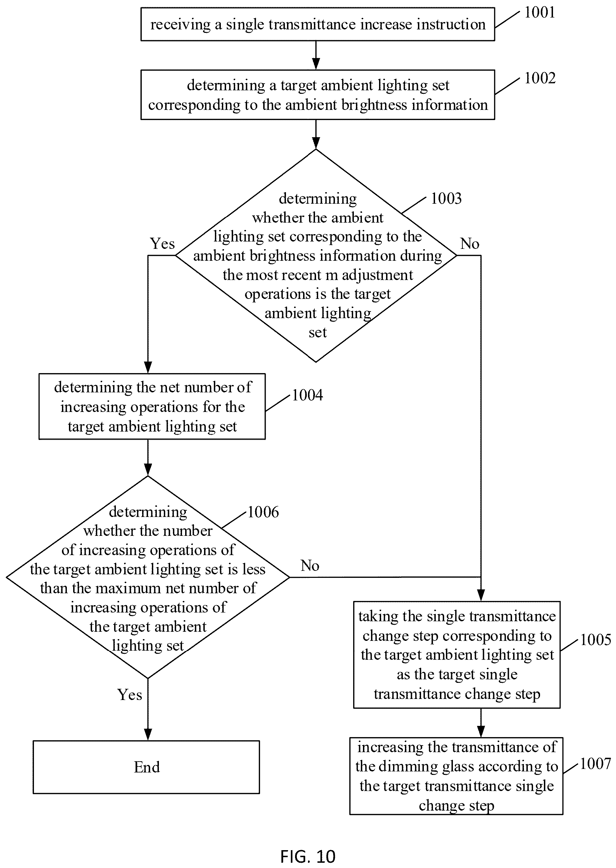

For ease of understanding, FIG. 10 exemplarily shows a method for adjusting glass transmittance, which includes the following steps:

Step 1001: receiving a single transmittance increase instruction.;
Step 1002: determining a target ambient lighting set corresponding to the ambient brightness information;
Step 1003: determining whether the ambient lighting set corresponding to the ambient brightness information during the most recent m adjustment operations is the target ambient lighting set, if so, executing step 1004, if not, executing step 1005;

Step 1004: determining the net number of increasing operations for the target ambient lighting set;

Step 1005: taking the single transmittance change step corresponding to the target ambient lighting set as the target single transmittance change step;

Step 1006: determining whether the number of increasing operations of the target ambient lighting set is less than the maximum net number of increasing operations of the target ambient lighting set, if so, ending, if not, executing step 1005.

In a specific implementation, if the net number of increasing operation of the target ambient lighting set is greater than or equal to the maximum net number of increasing operations of the target ambient lighting set, the transmittance control device may not perform the adjustment operation, or may not respond to the single transmittance increase instruction. If the net number of increasing operation of the target ambient lighting set is less than the minimum net number of increasing operations of the target ambient lighting set, the transmittance control device may perform the operations in step 1005 and step 1007.

Step 1007: increasing the transmittance of the dimming glass according to the target transmittance single change step.

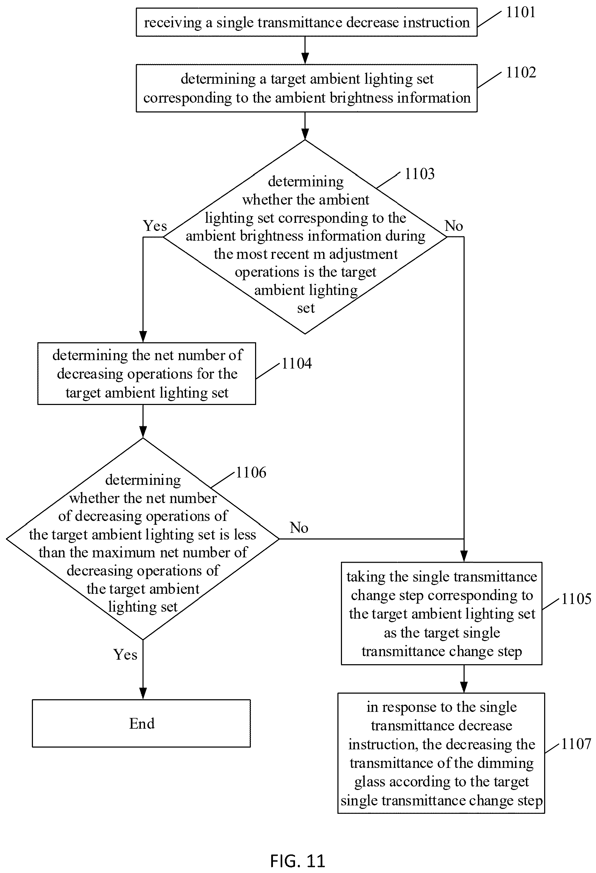

FIG. 11 exemplarily shows a method for adjusting glass transmittance, which includes the following steps:

Step 1101: receiving a single transmittance decrease instruction;

Step 1102: determining a target ambient lighting set corresponding to the ambient brightness information;

Step 1103: determining whether the ambient lighting set corresponding to the ambient brightness information during the most recent m adjustment operations is the target ambient lighting set, if so, executing step 1104, if not, executing step 1105;

Step 1104: determining the net number of decreasing operations for the target ambient lighting set;

Step 1105: taking the single transmittance change step corresponding to the target ambient lighting set as the target single transmittance change step;

Step 1106: determining whether the net number of decreasing operations of the target ambient lighting set is less than the maximum net number of decreasing operations of the target ambient lighting set, if so, ending, if not, executing step 1105.

In specific implementation, if the net number of decreasing operations of the target ambient lighting set is greater than or equal to the maximum net number of decreasing operations of the target ambient lighting set, the transmittance control device may not perform the adjustment operation, or may not respond to the single transmittance decrease instruction. If the net number of decreasing operations of the target ambient lighting set is less than the minimum net number of decreasing operations of the target ambient lighting set, the transmittance control device may perform the operations in step 1105 and step 1107.

Step 1107: in response to the single transmittance decrease instruction, the decreasing the transmittance of the dimming glass according to the target single transmittance change step.

In another possible implementation, the transmittance control device may determine the target ambient lighting set corresponding to the ambient brightness information based on the ambient brightness information, and use the single transmittance change step corresponding to the target ambient lighting set as the target single transmittance change step.

The glass transmittance adjustment system is configured with a single transmittance change step corresponding to each of the multiple ambient lighting sets. One ambient lighting set corresponds to one single transmittance change step. The single transmittance change steps corresponding to different ambient lighting sets are different.

The transmittance control device may pre-store each of the multiple ambient lighting sets, or pre-store the maximum value and the minimum value of each of the multiple ambient lighting sets. The transmittance control device may determine whether the current ambient brightness information belongs to the ambient lighting set by comparing the current ambient brightness information (the ambient brightness information most recently received by the transmittance control device) with the maximum value and the minimum value in the ambient lighting set. In the embodiment of the present disclosure, the ambient lighting set including the current ambient brightness information is used as the target ambient lighting set corresponding to the current ambient brightness information.

The transmittance control device may use the single transmittance change step corresponding to the target ambient lighting set as the target single transmittance change step, that is, the single transmittance change step corresponding to the current ambient brightness information.

In this embodiment, the glass transmittance adjustment system is further configured with a single transmittance change step corresponding to each of the multiple ambient lighting sets. One ambient lighting set corresponds to one single transmittance change step. The single transmittance change steps corresponding to different ambient lighting sets are different.

**EP 4 700 462 A1**

There may be two ambient lighting sets among the multiple ambient lighting sets, and the single transmittance change step corresponding to the first ambient lighting set of the two ambient lighting sets is larger than the single transmittance change step corresponding to the second ambient lighting set. In other words, the single transmittance change step corresponding to the darker ambient lighting set is larger than the single transmittance change step corresponding to the brighter ambient lighting set. In such a design, compared with the case of brighter ambient brightness information, the single transmittance change step used by the transmittance control device in the case of darker ambient brightness information is larger, so that the transmittance of the dimming glass can quickly reach the transmittance expected by users in the operation of increasing the transmittance, thereby reducing the number of user operations.

The glass transmittance adjustment system is also configured with multiple levels corresponding to each ambient lighting set, and the transmittance corresponding to each level. Among the multiple levels corresponding to any ambient lighting set, the transmittances corresponding to the levels are different. The serial number of each level can be obtained by sorting the transmittance of each level from small to large. For any two adjacent levels, the transmittance corresponding to the (i-1)-th level is less than the transmittance corresponding to the i-th level, where i is an integer greater than 1.

The level may represent the transmittance of the dimming glass. In some examples, in multiple levels corresponding to different ambient lighting sets, the transmittance of the dimming glass represented by the same level is different. In other examples, in multiple levels corresponding to different ambient lighting sets, the transmittance of the dimming glass represented by the same level may be the same.

In an embodiment of the present disclosure, there may be two ambient lighting sets among the multiple ambient lighting sets. The total number of multiple levels corresponding to the first ambient lighting set is greater than the total number of multiple levels corresponding to the second ambient lighting set.

The transmittance control device can match the level corresponding to the current transmittance from the transmittances of multiple levels of the target ambient lighting set. For example, the transmittance control device can use the ambient lighting acquired the most recently as the current ambient lighting. The transmittance control device can use the ambient lighting set including the current ambient lighting in the aforementioned multiple ambient lighting sets as the target ambient lighting set. The transmittance control device can determine the level corresponding to the current transmittance. For example, the transmittance control device can match the current transmittance with multiple levels in the transmittance configuration parameters of the target ambient lighting set.

The multiple levels in the transmittance configuration parameters of the target ambient lighting set have corresponding transmittances respectively. In some examples, the transmittance control device can determine the target level as the level corresponding to the current transmittance. The difference between the current transmittance and the transmittance corresponding to the target level is less than the difference between the current transmittance and the transmittance corresponding to other levels. In other examples, the transmittance control device can match the level corresponding to the current transmittance upward. For multiple levels having corresponding transmittances respectively, the transmittance control device can determine the level corresponding to the smallest transmittance from the transmittances of the level greater than the current transmittance as the level corresponding to the current transmittance. In some other examples, the transmittance control device can match the level corresponding to the current transmittance downward. For multiple levels having corresponding transmittances respectively, the transmittance control device can determine the level corresponding to the largest transmittance from the transmittances of the level less than the current transmittance as the level corresponding to the current transmittance.

In an embodiment of the present disclosure, the transmittance of the dimming glass is adjusted according to the single transmittance change step corresponding to the target level. The transmittance adjustment device can use the single transmittance change step corresponding to the target ambient lighting set as the target single transmittance change step, and adjust the transmittance of the dimming glass according to the target transmittance single change step.

The transmittance adjustment device can determine whether the level corresponding to the current transmittance reaches the minimum level in the target ambient lighting set, or reaches the maximum level. If the level corresponding to the current transmittance reaches the minimum level in the target ambient lighting set, the transmittance adjustment device may not decrease the transmittance of the dimming glass. If the level corresponding to the current transmittance reaches the maximum level in the target ambient lighting set, the transmittance adjustment device may not increase the transmittance of the dimming glass.

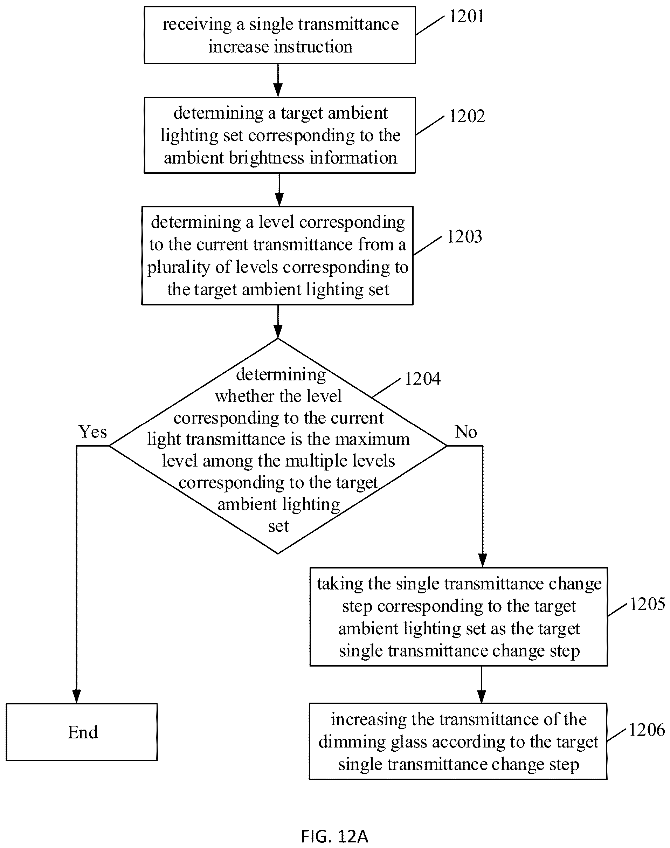

In a possible scenario, FIG. 12A shows a method for adjusting glass transmittance, which includes the following steps:

Step 1201: receiving a single transmittance increase instruction;
Step 1202: determining a target ambient lighting set corresponding to the ambient brightness information;
Step 1203: determining a level corresponding to the current transmittance from a plurality of levels corresponding to the target ambient lighting set;
Step 1204: determining whether the level corresponding to the current light transmittance is the maximum level among the multiple levels corresponding to the target ambient lighting set, if so, then ending, if not, executing step 1205;

Step 1205: taking the single transmittance change step corresponding to the target ambient lighting set as the target single transmittance change step;

Step 1206: increasing the transmittance of the dimming glass according to the target single transmittance change step.

The embodiment of the present disclosure does not specifically limit the order in which step 1201 and step 1202 occur. In some application scenarios, the transmittance control device may perform the operation in step 1202 after performing step 1201. In other application scenarios, the transmittance control device may perform the operations in step 1202 and step 1203 in real time or periodically, and after receiving a single transmittance increase instruction, in response to the single transmittance increase instruction, perform the operations in step 1204, step 1205, and step 1206.

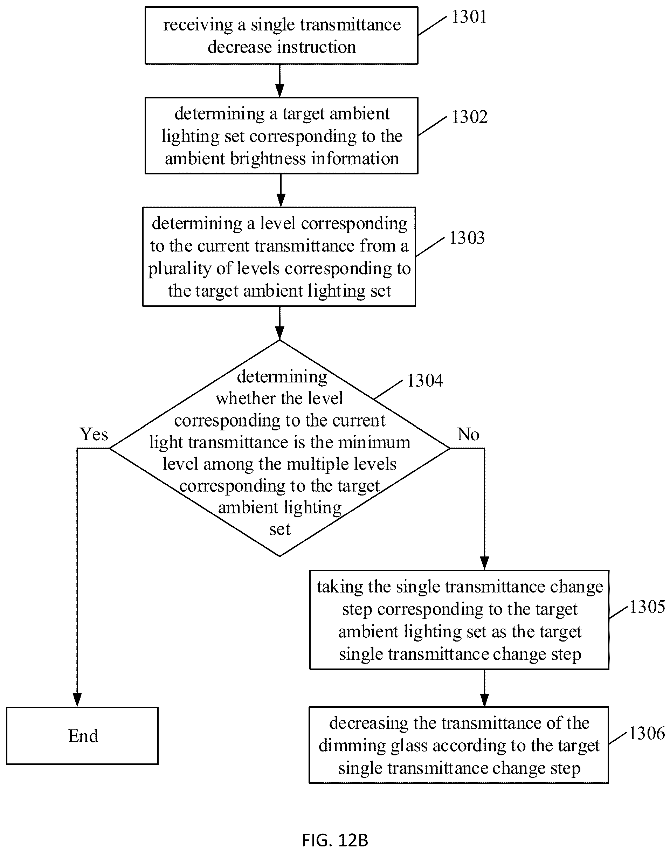

In a possible scenario, FIG. 12B shows a method for adjusting glass transmittance, which includes the following steps:

Step 1301: receiving a single transmittance decrease instruction;

Step 1302: determining a target ambient lighting set corresponding to the ambient brightness information.

Step 1303: determining a level corresponding to the current transmittance from a plurality of levels corresponding to the target ambient lighting set;

Step 1304: determining whether the level corresponding to the current light transmittance is the minimum level among the multiple levels corresponding to the target ambient lighting set, if so, then ending, if not, executing step 1305;

Step 1305: taking the single transmittance change step corresponding to the target ambient lighting set as the target single transmittance change step;

Step 1306: decreasing the transmittance of the dimming glass according to the target single transmittance change step.

The embodiment of the present disclosure does not specifically limit the order in which step 1301 and step 1302 occur. In some application scenarios, the transmittance control device may perform the operation in step 1302 after performing step 1301. In other application scenarios, the transmittance control device may perform the operations in step 1302 and step 1303 in real time or periodically, and after receiving a single transmittance decrease instruction, in response to the single transmittance decrease instruction, perform the operations in step 1304, step 1305, and step 1306.

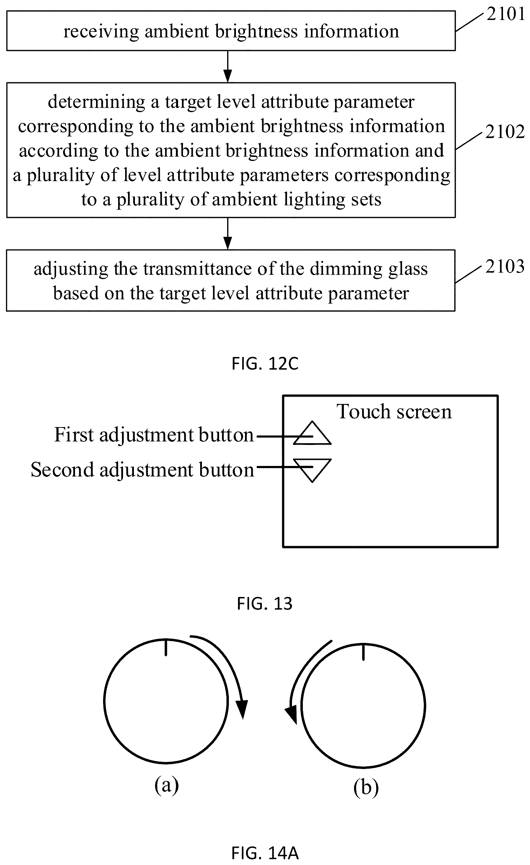

The embodiment of the present disclosure also provides a glass transmittance adjustment method, which can be performed by a transmittance control device in a glass transmittance adjustment system. As shown in FIG. 12C , the method includes the following steps:

Step 2101: receiving ambient brightness information;

Step 2102: determining a target level attribute parameter corresponding to the ambient brightness information according to the ambient brightness information and a plurality of level attribute parameters corresponding to a plurality of ambient lighting sets;

Step 2103: adjusting the transmittance of the dimming glass based on the target level attribute parameter.

In the embodiment of the present disclosure, an ambient lighting set may be configured with a level attribute parameter. A level attribute parameter may include the number of increasing levels and the number of decreasing levels. For example, the multiple ambient lighting sets may include a first ambient lighting set and a second ambient lighting set. The level attribute parameter corresponding to the first ambient lighting set may be recorded as a first level attribute parameter, and the level attribute parameter corresponding to the second lighting set may be recorded as a second level attribute parameter.

In an embodiment of the present disclosure, the number of increasing levels of the first level attribute parameter may be different from the number of increasing levels of the second level attribute, and/or the number of decreasing levels of the first level attribute parameter may be different from the number of decreasing levels of the second level attribute parameter.

In the embodiment of the present disclosure, the level attribute parameters are different under different ambient brightness conditions. Under different ambient brightness conditions, the number of increasing levels that increase the transmittance may be different, and/or the number of decreasing levels that decrease the transmittance may be different. Based on constrains of the number of increasing level or decreasing level in the level attribute parameters corresponding to the current ambient brightness information, the transmittance of the dimming glass can be adjusted by using the increasing level or the decreasing level, which is conducive to making the transmittance adjustment process of the dimming glass more comfortable for users' vision, avoiding discomfort such as dizziness of users, and avoiding the situation where the users' vision is blocked.

The ambient brightness that can be represented by the values in the first ambient lighting set is smaller than the ambient brightness that can be represented by the values in the second ambient lighting set.

The number of increasing levels corresponding to the ambient lighting set can be understood as the maximum number of times the ambient lighting set allows continuous execution of operations to increase the transmittance of the dimming glass. The number of decreasing levels corresponding to the ambient lighting set can be understood as the maximum number of times the ambient lighting set allows continuous execution of operations to decrease the transmittance of the dimming glass.

Assuming that the transmittance of the dimming glass is adjusted according to the maximum number of times that the transmittance of the transparent glass is allowed to be continuously increased corresponding to the first ambient lighting set, the transmittance of the dimming glass after the adjustment is recorded as ZD1. And assuming that the transmittance of the dimming glass is adjusted according to the maximum number of times that the transmittance of the transparent glass is allowed to be continuously increased corresponding to the second ambient lighting set, the transmittance of the dimming glass after the adjustment is recorded as ZD2.

In some examples, ZD1 and ZD2 may be the same value, for example, the value may be the maximum transmittance of the dimming glass. In other examples, ZD1 is different from ZD2, for example, ZD1 may be the maximum reference transmittance corresponding to the first ambient lighting set, and ZD2 may be the maximum reference transmittance corresponding to the second ambient lighting set.

Assuming that the transmittance of the dimming glass is adjusted according to the maximum number of times that the transmittance of the dimming glass is continuously performed corresponding to the first ambient lighting set, the transmittance of the dimming glass after the adjustment is recorded as ZD3. And assuming that the transmittance of the dimming glass is adjusted according to the maximum number of times that the transmittance of the dimming glass is continuously performed corresponding to the second ambient lighting set, the transmittance of the dimming glass after the adjustment is recorded as ZD4.

In some examples, ZD3 and ZD4 may be the same value, for example, the value may be the minimum transmittance of the dimming glass. In other examples, ZD3 is different from ZD4, for example, ZD3 may be the minimum reference transmittance corresponding to the first ambient lighting set, and ZD4 may be the minimum reference transmittance corresponding to the second ambient lighting set.

In some examples, the number of increasing levels of the first level attribute parameter may be less than the number of increasing levels of the second level attribute parameter. The number of increasing levels in a darker ambient lighting situation may be less than the number of increasing levels in a brighter ambient lighting situation. It can be understood that, compared with a brighter ambient lighting situation, adjusting the dimming glass with a smaller number of increasing levels in a darker ambient lighting situation can achieve a faster increase in the transmittance of the dimming glass. Optionally, the number of decreasing levels of the first level attribute parameter may be greater than or equal to the number of decreasing levels of the second level attribute parameter.

In some examples, the number of decreasing levels of the first level attribute parameter may be greater than the number of decreasing levels of the second level attribute parameter. The number of decreasing levels in a darker ambient lighting situation may be greater than the number of decreasing levels in a brighter ambient lighting situation. It can be understood that, compared with a darker ambient lighting situation, adjusting the dimming glass with a smaller number of decreasing levels in a brighter ambient lighting situation can achieve a faster decrease in the transmittance of the dimming glass. Optionally, the number of increasing levels of the first level attribute parameter may be less than or equal to the number of increasing levels of the second level attribute parameter.

In some examples, the number of increasing levels of the first level attribute parameter may be less than the number of increasing levels of the second level attribute parameter, and the number of decreasing levels of the first level attribute parameter may be greater than the number of decreasing levels of the second level attribute parameter.

In some examples, the number of increasing levels of the first level attribute parameter is less than the number of decreasing levels of the first level attribute parameter. In darker ambient light conditions, adjusting the dimming glass with a smaller number of increasing levels can quickly increase the transmittance of the dimming glass, and adjusting the transmittance of the dimming glass with a larger number of decreasing levels can slowly decrease the transmittance of the dimming glass, thereby preventing users' vision from being blocked and having higher safety.

In some examples, the number of increasing levels of the second level attribute parameter is greater than or equal to the number of decreasing levels of the second level attribute parameter. In brighter ambient lighting conditions, the number of increasing levels is the same as the number of decreasing levels, so that the duration or speed of the process of increasing the transmittance and decreasing the transmittance can be similar. Alternatively, in brighter ambient lighting conditions, the number of increasing levels is greater than the number of decreasing levels, and adjusting the transmittance of the dimming glass with a larger number of increasing levels can increase the transmittance of the dimming glass more slowly to avoid discomfort such as dizziness in the users, and adjusting the transmittance of the dimming glass with a smaller number of decreasing levels can decrease the transmittance of the dimming glass more quickly.

In a possible design, in a level attribute parameter, the single change steps for increasing transmittance corresponding to increasing levels are the same, and the single change steps for decreasing transmittance corresponding to decreasing levels are the same.

In some examples, the single change step for increasing transmittance corresponding to the increasing level in the first level attribute parameter is greater than the single change step for decreasing transmittance corresponding to the decreasing level. In this way, the transmittance of the dimming glass can be increased faster and decreased slower in darker ambient lighting conditions.

In some examples, the single change step for increasing transmittance corresponding to the increasing level in the second level attribute parameter is smaller than the single change step for decreasing transmittance corresponding to the decreasing level. In this way, the light transmittance of the dimming glass can be increased slowly and decreased quickly in brighter ambient lighting conditions.

In another possible design, in one level attribute parameter, the single change steps for increasing transmittance corresponding to the increasing levels may be different. And/or, in one level attribute parameter, the single change steps for decreasing transmittance corresponding to the decreasing levels may be different.

In a possible design, the light transmittance adjusting device may be specifically configured to:
in response to a single transmittance increase instruction, determine a target level attribute parameter corresponding to the ambient brightness information based on the most recently acquired ambient brightness information and multiple level attribute parameters corresponding to multiple ambient lighting sets, and increase the transmittance of the dimming glass based on the target level attribute parameters.

Optionally, increasing the transmittance of the dimming glass based on the target level attribute parameter may include: determining the current increasing level corresponding to the current transmittance of the dimming glass in the target level attribute parameter, determining the increasing level in the next order of the current increasing level as the target increasing level based on the order of multiple increasing levels from small to large in the target level attribute parameter, and adjusting the transmittance of the dimming glass according to the target increasing level. For example, adjusting the transmittance of the dimming glass according to the single change step for increasing transmittance corresponding to the target increasing level, or according to the transmittance of the dimming glass corresponding to the target increasing level.

Optionally, the transmittance corresponding to each increasing level or the transmittance matched by each increasing level is different. In the target level attribute parameters, multiple increasing levels are sorted in order from small to large according to the transmittance corresponding to each increasing level. In the two adjacent increasing levels in the sorting, the transmittance corresponding to the previous increasing level is different from the transmittance corresponding to the next increasing level. The single change step for increasing transmittance corresponding to the previous increasing level and the single change step for increasing transmittance corresponding to the next increasing level can be the same or different.

In a possible design, the light transmittance adjusting device may be specifically configured to:
in response to a single transmittance decrease instruction, determine a target level attribute parameter corresponding to the ambient brightness information based on the most recently acquired ambient brightness information and multiple level attribute parameters corresponding to multiple ambient lighting sets, and decrease the transmittance of the dimming glass based on the target level attribute parameters.

Optionally, decreasing the transmittance of the dimming glass based on the target level attribute parameter may include: determining the current decreasing level corresponding to the current transmittance of the dimming glass in the target level attribute parameter, determining the decreasing level in the next order of the current decreasing level as the target decreasing level based on the order of multiple decreasing levels in the target level attribute parameter from small to large, and adjusting the transmittance of the dimming glass according to the target decreasing level. For example, decreasing the single transmittance change step according to the target decreasing level. Alternatively, adjusting transmittance of the dimming glass according to the transmittance of the dimming glass corresponding to the target decreasing level.

Optionally, the transmittance corresponding to each decreasing level or the transmittance matched by each decreasing level is different. In the target level attribute parameter, multiple decreasing levels are sorted in order from small to large according to the transmittance corresponding to each decreasing level, and in the two adjacent decreasing levels in the sorting, the transmittance corresponding to the previous decreasing level is different from the transmittance corresponding to the next decreasing level. The single change step for decreasing transmittance corresponding to the previous decreasing level and the single change step for decreasing transmittance corresponding to the next decreasing level can be the same or different.

In the glass transmittance adjustment system and the glass transmittance adjustment method provided in any one of the aforementioned embodiments, a single transmittance adjustment instruction can be triggered by the instruction input device and sent to the transmittance control device through the instruction input interface.

In some examples, the instruction input device may include a first adjustment button and a second adjustment button. The first adjustment button is configured to trigger the single transmittance increase instruction when it is selected or pressed. The second adjustment button is configured to trigger the single transmittance decrease instruction when it is selected or pressed.

In a possible implementation, both the first adjustment button and the second adjustment button are mechanical buttons. Referring to FIG. 3A, the first adjustment button may be an increase adjustment button, and the second adjustment button may be a decrease adjustment button. Each time users press the first adjustment button, a single transmittance increase instruction may be triggered. Each time users press the second adjustment button, a single transmittance decrease instruction may be triggered.

It should be noted that the structural form of the first adjustment button and the second adjustment button in FIG. 3A is only configured to illustrate that the first adjustment button and the second adjustment button are both mechanical buttons, and is not a specific limitation on the structural form of the mechanical button.

In another possible implementation, FIG. 13 exemplarily shows an instruction input device. The instruction input device includes a touch screen, which can display a first adjustment button and a second adjustment button, that is, the first adjustment button and the second adjustment button can both be virtual buttons. Each time users click or select the first adjustment button on the touch screen, a single transmittance increase instruction can be triggered. Each time users click or select the second adjustment button on the touch screen, a single transmittance decrease instruction can be triggered. It should be noted that the structural form of the first adjustment button and the second adjustment button in FIG. 13 is only configured to illustrate that the first adjustment button and the second adjustment button are both virtual buttons, and is not a specific limitation on the structural form of the virtual button.

In this implementation, the transmittance control device can execute the glass transmittance adjustment method provided by any of the aforementioned embodiments, which will not be described in detail here.

In some other examples, the instruction input device may include a knob. In one possible implementation, the knob may be a mechanical knob. In another possible implementation, the instruction input device includes a touch screen, and the touch screen may display a knob, that is, the knob is a virtual knob.

FIG. 14A exemplarily shows a knob. The knob is configured to trigger the single transmittance increase instruction when it is rotated in a first direction, and to trigger the single transmittance decrease instruction when it is rotated in a second direction. The first direction may be one of a clockwise direction (as shown in FIG. 14A (a)) and a counterclockwise direction (as shown in FIG. 14A (b)), and the second direction is the other of the clockwise direction and the counterclockwise direction.

Every time the knob is rotated by a unit rotation angle, a single transmittance adjustment instruction is triggered. For example, every time the knob is rotated by a unit rotation angle in the first direction, a single transmittance increase instruction is triggered. For another example, every time the knob is rotated by a unit rotation angle in the second direction, a single transmittance decrease instruction is triggered. In a possible application scenario, please refer to FIG. 3B, an indicator mark may be provided on the knob, and the indicator mark prompts the user of the position status of the knob. In the scenario where the knob is a mechanical button, when users rotate the mechanical button and the mechanical button is rotated by a unit rotation angle, a sense of jamming will be generated. In this case, the transmittance control device can execute the glass transmittance adjustment method provided by any of the aforementioned embodiments, such as the method shown in FIG. 5 to FIG. 12B, which will not be repeated here.

In a possible design, the knob is configured with a special angle set. The special angle set may include at least one angle. The transmittance control device may store the special angle set. A special transmittance set corresponding to each ambient lighting set may also be stored, and the transmittance set may include the transmittance corresponding to each angle in the special angle set.

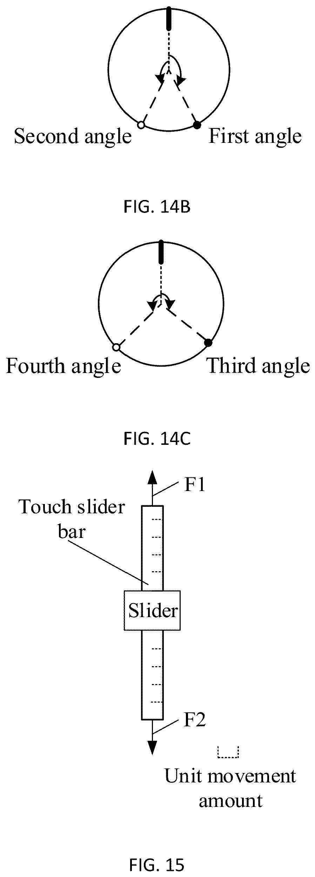

The connection line between the default position of the indicator mark and the circle center of the knob is recorded as the first connection line. The connection line between the position of the indicator mark and the circle center of the knob after the knob is turned is recorded as the second connection line, and the angle between the second connection line and the first connection line is recorded as the target angle, such as the angle shown by any arrow in FIG. 14B. The transmittance control device can determine whether the special angle set includes the target angle. If the target angle is angle T1 in the special angle set, the transmittance control device can directly adjust the transmittance of the dimming glass according to the transmittance corresponding to angle T1 in the special transmittance set corresponding to the target ambient lighting set, so that the adjusted transmittance is equal to or close to the transmittance corresponding to angle T1 in the special transmittance set corresponding to the target ambient lighting set.

For example, if the target ambient lighting set is ambient lighting set 1, the transmittance control device adjusts the transmittance of the dimming glass according to the transmittance corresponding to the angle T1 in the special transmittance set corresponding to ambient lighting set 1. For another example, if the target ambient lighting set is ambient lighting set 2, the transmittance control device adjusts the transmittance of the dimming glass according to the transmittance corresponding to the angle T1 in the special transmittance set corresponding to ambient lighting set 2.

In a possible design, the special angle set may include a first angle and a second angle. As shown in FIG. 14B, the first angle may represent an indication angle of a maximum reference transmittance. The second angle may represent an indication angle of a minimum reference transmittance. The special transmittance sets corresponding to each ambient lighting set include the maximum reference transmittance corresponding to the first angle and the minimum transmittance reference corresponding to the second angle. The maximum reference transmittance in each special transmittance set is less than the maximum transmittance of the dimming glass. And the minimum reference transmittance in each special transmittance set is greater than the minimum transmittance of the dimming glass.

Among multiple ambient lighting sets, there may be two ambient lighting sets, and the special transmittance sets corresponding to these two ambient lighting sets may be recorded as a first special transmittance set and a second special transmittance set, respectively.

In one possible scenario, the maximum reference transmittance corresponding to the first angle in the first special transmittance set is different from the maximum reference transmittance corresponding to the first angle in the second special transmittance set. Optionally, the minimum reference transmittance corresponding to the second angle in the first special transmittance set and the minimum reference transmittance corresponding to the second angle in the second special transmittance set may be the same. Alternatively, the minimum reference transmittance corresponding to the second angle in the first special transmittance set and the minimum reference transmittance corresponding to the second angle in the second special transmittance set may be different.

In another possible scenario, the maximum reference transmittance corresponding to the first angle in the first special transmittance set is the same as the maximum transmittance reference corresponding to the first angle in the second special transmittance set. Optionally, the minimum reference transmittance corresponding to the second angle in the first special transmittance set and the minimum reference transmittance corresponding to the second angle in the second special transmittance set may be the same. Alternatively, the minimum reference transmittance corresponding to the second angle in the first special transmittance set and the minimum reference transmittance corresponding to the second angle in the second special transmittance set may be different.

As an example, in combination with the application scenario shown in Table 2 above, the multiple ambient lighting sets may include ambient lighting set 1, ambient lighting set 2, and ambient lighting set 3. The maximum value of the ambient brightness information in ambient lighting set 1 is less than the minimum value of the ambient brightness information in ambient lighting set 2. The maximum value of the ambient brightness information in ambient lighting set 2 is less than the maximum value of the ambient brightness information in ambient lighting set 3.

The maximum reference transmittance corresponding to the first angle in the special transmittance set corresponding to ambient lighting set 1 is greater than the maximum reference transmittance corresponding to the first angle in the special transmittance set corresponding to ambient lighting set 2. The maximum reference transmittance corresponding to the first angle in the special transmittance set corresponding to ambient lighting set 2 is greater than the maximum reference transmittance corresponding to the first angle in the special transmittance set corresponding to ambient lighting set 3.

The minimum reference transmittance corresponding to the second angle in the special transmittance set corresponding to ambient lighting set 1 is greater than the minimum reference transmittance corresponding to the second angle in the special transmittance set corresponding to ambient lighting set 2. The minimum reference transmittance corresponding to the second angle in the special transmittance set corresponding to ambient lighting set 2 is greater than the minimum reference transmittance corresponding to the second angle in the special transmittance set corresponding to ambient lighting set 3.

In another possible design, the special angle set includes a third angle and a fourth angle. As shown in FIG. 14C, in the special transmittance set corresponding to each ambient lighting set, the transmittance corresponding to the third angle is the maximum transmittance of the dimming glass. In the special transmittance set corresponding to each lighting set, the transmittance corresponding to the fourth angle is the minimum transmittance of the dimming glass.

If the target angle is the third angle, the transmittance control device can adjust the transmittance of the dimming glass according to the maximum transmittance of the dimming glass. If the target angle is the fourth angle, the transmittance control device can adjust the transmittance of the dimming glass according to the minimum transmittance of the dimming glass. Optionally, if the target angle is the third angle or the fourth angle, the transmittance control device may not need to determine the target single transmittance change step corresponding to the current ambient brightness information.

In another possible design, the special angle set may include the aforementioned first angle, second angle, third angle and fourth angle. The special transmittance set corresponding to each ambient lighting set may include a maximum reference transmittance corresponding to the first angle, a minimum reference transmittance corresponding to the second angle, a maximum transmittance of the dimming glass corresponding to the third angle, and a minimum transmittance of the dimming glass corresponding to the fourth angle.

In some examples, if the special angle set does not include the target angle, that is, the target angle is not in the special angle set, in this case, the transmittance control device can execute the glass transmittance adjustment method provided in any embodiment of the present disclosure.

In other examples, if the special angle set includes the target angle, that is, the target angle is in the special angle set, in this case, if the target angle is the third angle, the transmittance control device can adjust the transmittance of the dimming glass according to the maximum transmittance of the dimming glass. If the target angle is the fourth angle, the transmittance control device can adjust the transmittance of the dimming glass according to the minimum transmittance of the dimming glass. If the target angle is the first angle or the second angle, the transmittance control device can determine the target ambient lighting set corresponding to the current ambient brightness information, and adjust the transmittance of the dimming glass according to the maximum reference transmittance corresponding to the first angle or the minimum reference transmittance corresponding to the second angle in the special transmittance set corresponding to the target ambient lighting set.

In some other examples, the instruction input device may include a touch slider bar. In one possible implementation, the touch slider bar is a mechanical touch slider bar. The touch slider bar may include a slider. In one possible design, the slider may be a virtual slider displayed on the touch slider bar. In another possible design, the slider may not be displayed on the touch slider bar, and the instruction input device may further include an indicator light, such as a light emitting diode (LED) indicator light. The position of the slider is indicated by the indicator light. In another possible implementation, the instruction input device may include a touch screen. The touch screen may display the touch slider bar, that is, the touch slider bar is a virtual slider. The touch screen may also display the slider on the touch slider bar.

In an embodiment of the present disclosure, the touch slider bar can be configured to trigger a single transmittance increase instruction when the slider is selected to move a unit movement amount along the third direction, and trigger a single transmittance decrease instruction when the slider is selected to move a unit movement amount along the fourth direction. The third direction is the opposite direction of the fourth direction. For ease of understanding, a schematic diagram of the slider position of a touch slider bar is shown in FIG. 15. The third direction and the fourth direction may be direction F1 and direction F2, respectively. The direction F1 and the direction F2 are two opposite directions in the slidable direction of the touch slider bar. Optionally, the slider can move back to the initial position of the slider after triggering a single transmittance decrease instruction or triggering a single transmittance increase instruction.

The light transmittance control device can determine the slider movement amount according to the position of the slider before and after the slider moves. The light transmittance control device can determine whether the slider movement amount is a unit movement amount.

In a possible application scenario, the touch slider bar can be set on the vehicle central control, and the vehicle central control can send a single transmittance increase instruction triggered by the touch slider bar to the transmittance adjustment device.

In a possible design, the touch slider bar is configured with a special position set. The special position set may include at least one position. The transmittance control device may store the special position set. The transmittance control device may also store a special transmittance set corresponding to each ambient lighting set. The transmittance set includes the transmittance corresponding to each position in the special position set.

The transmittance control device can determine whether the special position set includes the position of the slider after the slider moves. If the position of the slider after the slider moves is position L1 in the special position set, the transmittance control device can directly adjust the transmittance of the dimming glass according to the transmittance corresponding to position L1 in the special transmittance set corresponding to the target ambient lighting set, so that the adjusted transmittance is equal to or close to the transmittance corresponding to position L1 in the special transmittance set corresponding to the target ambient lighting set.

For example, if the target ambient lighting set is ambient lighting set 1, the transmittance control device adjusts the transmittance of the dimming glass according to the transmittance corresponding to the position L1 in the special transmittance set corresponding to ambient lighting set 1. For another example, if the target ambient lighting set is ambient lighting set 2, the transmittance control device adjusts the transmittance of the dimming glass according to the transmittance corresponding to the position L1 in the special transmittance set corresponding to ambient lighting set 2.

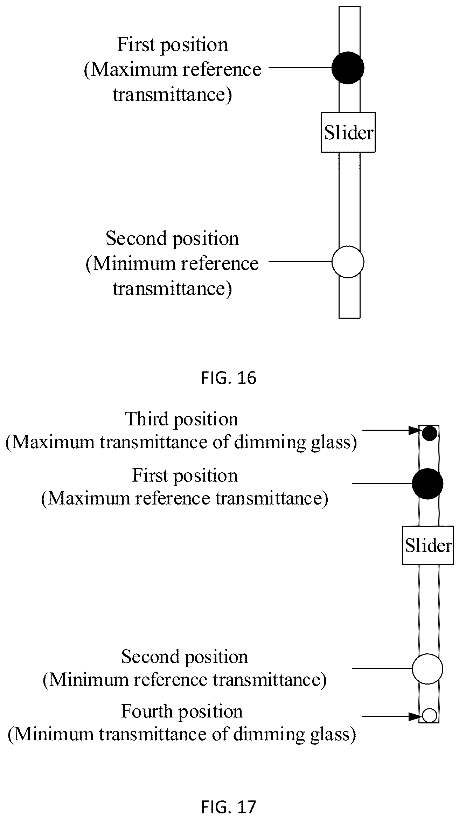

In a possible design, the special position set may include a first position and a second position. As shown in FIG. 16, the first position may represent an indication position of a maximum reference transmittance. The second position may represent an indication position of a minimum reference transmittance. The special transmittance sets corresponding to each ambient lighting set include the maximum reference transmittance corresponding to the first position and the minimum reference transmittance corresponding to the second position. The maximum reference transmittance in each special transmittance set is less than the maximum transmittance of the dimming glass. And the minimum reference transmittance in each special transmittance set is greater than the minimum transmittance of the dimming glass.

Among the multiple ambient lighting sets, there may be two ambient lighting sets, and the special transmittance sets corresponding to the two ambient lighting sets may be recorded as a first special transmittance set and a second special transmittance set.

In one possible scenario, the maximum reference transmittance corresponding to the first position in the first special transmittance set is different from the maximum reference transmittance corresponding to the first position in the second special transmittance set. Optionally, the minimum reference transmittance corresponding to the second position in the first special transmittance set and the minimum reference transmittance corresponding to the second position in the second special transmittance set may be the same. Alternatively, the minimum reference transmittance corresponding to the second position in the first special transmittance set and the minimum reference transmittance corresponding to the second position in the second special transmittance set may be different.

In another possible scenario, the maximum reference transmittance corresponding to the first position in the first special transmittance set is the same as the maximum reference transmittance corresponding to the first position in the second special transmittance set. Optionally, the minimum reference Transmittance corresponding to the second position in the first special transmittance set and the minimum reference transmittance corresponding to the second position in the second special transmittance set may be the same. Alternatively, the minimum reference transmittance corresponding to the second position in the first special transmittance set and the minimum reference transmittance corresponding to the second position in the second special transmittance set may be different.

As an example, in combination with the application scenario shown in Table 2 above, the multiple ambient lighting sets may include ambient lighting set 1, ambient lighting set 2, and ambient lighting set 3. The maximum value of the ambient brightness information in ambient lighting set 1 is less than the minimum value of the ambient brightness information in ambient lighting set 2. The maximum value of the ambient brightness information in ambient lighting set 2 is less than the maximum value of the ambient brightness information in ambient lighting set 3.

The maximum reference transmittance corresponding to the first position in the special transmittance set corresponding to ambient lighting set 1 is greater than the maximum reference transmittance corresponding to the first position in the special transmittance set corresponding to ambient lighting set 2. The maximum reference transmittance corresponding to the first position in the special transmittance set corresponding to ambient lighting set 2 is greater than the maximum reference transmittance corresponding to the first position in the special transmittance set corresponding to ambient lighting set 3.

The minimum reference transmittance corresponding to the second position in the special transmittance set corresponding to ambient lighting set 1 is greater than the minimum reference transmittance corresponding to the second position in the special transmittance set corresponding to ambient lighting set 2. The minimum reference transmittance corresponding to the second position in the special transmittance set corresponding to ambient lighting set 2 is greater than the minimum reference transmittance corresponding to the second position in the special transmittance set corresponding to ambient lighting set 3.

In another possible design, the special position set includes a third position and a fourth position. As shown in FIG. 17, in the special transmittance set corresponding to each ambient lighting set, the transmittance corresponding to the third position is the maximum transmittance of the dimming glass. In the special transmittance set corresponding to each illumination set, the transmittance corresponding to the fourth position is the minimum transmittance of the dimming glass.

If the position of the slider after moving is the third position, the transmittance control device can adjust the transmittance of the dimming glass according to the maximum transmittance of the dimming glass. If the position of the slider after moving is the fourth position, the transmittance control device can adjust the transmittance of the dimming glass according to the minimum transmittance of the dimming glass. Optionally, if the position of the slider after moving is the third position or the fourth position, the transmittance control device may not need to determine the target single transmittance change step corresponding to the current ambient brightness information.

In another possible design, the special position set may include the aforementioned first position, second position, third position and fourth position. The special transmittance set corresponding to each ambient lighting set may include a maximum reference transmittance corresponding to the first position, a minimum reference transmittance corresponding to the second position, a maximum transmittance of the dimming glass corresponding to the third position, and a minimum transmittance of the dimming glass corresponding to the fourth position.

In some examples, if the special position set does not include the position of the slider after the slider moves, that is, the position of the slider after the slider moves is not in the special position set, in this case, the transmittance control device can execute the glass transmittance adjustment method provided in any embodiment of the present disclosure.

In other examples, if the special position set includes the position of the slider after the slider moves, that is, the position of the slider after the slider moves is in the special position set, in this case, if the position of the slider after the slider moves is the third position, the transmittance control device can adjust the transmittance of the dimming glass according to the maximum transmittance of the dimming glass. If the position of the slider after the slider moves is the fourth position, the transmittance control device can adjust the transmittance of the dimming glass according to the minimum transmittance of the dimming glass. If the position of the slider after the slider moves is the first position or the second position, the transmittance control device can determine the target ambient lighting set corresponding to the current ambient brightness information, and adjust the transmittance of the dimming glass according to the maximum reference transmittance corresponding to the first position or the minimum reference transmittance corresponding to the second position in the special transmittance set corresponding to the target ambient lighting set.

Some embodiments of the present disclosure further provide a glass transmittance adjustment system, and the structure of the glass transmittance adjustment system can be referred to the related introduction of FIG. 2.

In an embodiment of the present disclosure, an instruction input interface of a transmittance control device in a glass transmittance adjustment system is configured to receive a first transmittance adjustment instruction; the transmittance control device is configured to: in response to the first transmittance adjustment instruction, adjust the transmittance of the dimming glass based on a target unit transmittance change step. The target unit transmittance change step is a transmittance unit change step corresponding to ambient brightness information.

The instruction input device connected to the instruction input interface can trigger the first transmittance adjustment instruction. The first transmittance adjustment instruction can be configured to instruct to adjust the transmittance of the dimming glass based on the state of the instruction input device and the transmittance unit change step.

In a possible design, the first transmittance adjustment instruction may include a first transmittance increase instruction and a first transmittance decrease instruction. The first transmittance increase instruction may indicate that the transmittance of the dimming glass is increased based on the state of the instruction input device and the target unit transmittance change step. The first transmittance decrease instruction may indicate that the transmittance of the dimming glass is decreased based on the state of the instruction input device and the target unit transmittance change step.

The glass transmittance adjustment system provided in the embodiment of the present disclosure can be configured with multiple ambient lighting sets and transmittance configuration parameters corresponding to each ambient lighting set. Among the multiple ambient lighting sets, the transmittance configuration parameters corresponding to any ambient lighting set include the transmittance-increasing unit change step corresponding to the first transmittance increase instruction and the transmittance-decreasing unit change step corresponding to the first transmittance decrease instruction. In this embodiment, the process of the transmittance control device determining the target ambient lighting set according to the current ambient brightness information can refer to the relevant introduction in the above-mentioned embodiment, which will not be repeated here.

In some application scenarios, in an embodiment of the present disclosure, among the multiple ambient lighting sets, the ambient brightness that can be represented by the values in the first ambient lighting set is lower than the ambient brightness that can be represented by the values in the second ambient lighting set. The transmittance-increasing unit change step in the transmittance configuration parameters corresponding to the first ambient lighting set is larger than the transmittance-increasing unit change step in the transmittance configuration parameters corresponding to the second ambient lighting set.

In some examples, the transmittance control device may use the transmittance-decreasing unit change step in the transmittance configuration parameter corresponding to the target ambient lighting set as the target unit transmittance change step in response to the first transmittance decrease instruction. The transmittance control device may decrease the transmittance of the dimming glass according to the target unit transmittance change step and the state of the instruction input device.

In some other examples, the transmittance control device may use the transmittance-increasing unit change step in the transmittance configuration parameter corresponding to the target ambient lighting set as the target unit transmittance change step. The transmittance control device may increase the transmittance of the dimming glass according to the target unit transmittance change step and the state of the instruction input device.

In some examples, the instruction input device may include a knob. The knob may be a mechanical knob or a virtual knob. In conjunction with FIG. 14A, when the knob is rotated, a first transmittance adjustment instruction may be triggered. Specifically, when the knob is rotated in a first direction, a first transmittance increase instruction may be triggered. For another example, when the knob is rotated in a second direction, a first transmittance decrease instruction may be triggered. The first direction is one of the clockwise direction and the counterclockwise direction, and the second direction is the other of the clockwise direction and the counterclockwise direction. Optionally, in conjunction with FIG. 3B, an indicator mark may be provided on the knob, and the indicator mark prompts users of the position status of the knob.

In this example, the state of the instruction input device can be the angle of the knob rotation. The transmittance control device can determine the total transmittance adjustment amount according to the knob rotation angle and the transmittance unit change step, and adjust the transmittance of the dimming glass according to the total transmittance adjustment amount.

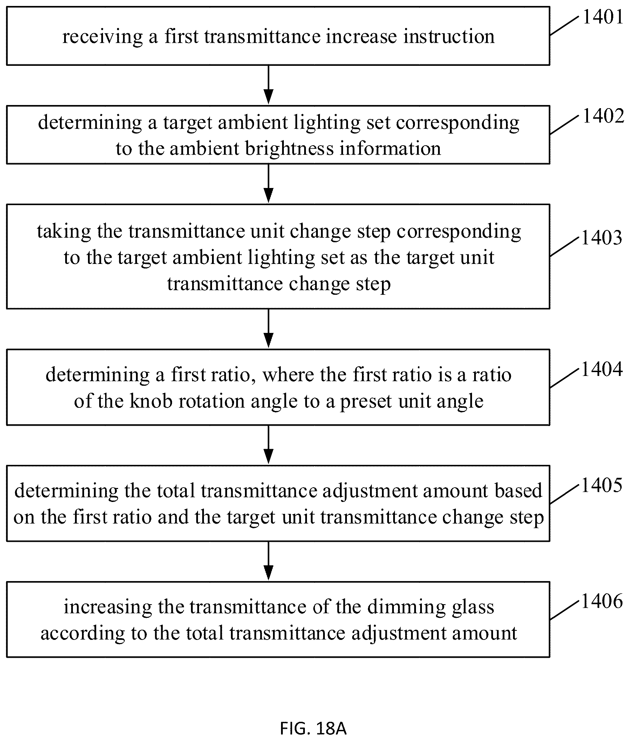

For ease of understanding, FIG. 18A shows a method for adjusting glass transmittance, which may include the following steps:

Step 1401: receiving a first transmittance increase instruction;
Step 1402: determining a target ambient lighting set corresponding to the ambient brightness information.
Step 1403: taking the transmittance unit change step corresponding to the target ambient lighting set as the target unit transmittance change step.
Step 1404: determining a first ratio, where the first ratio is a ratio of the knob rotation angle to a preset unit angle.
Step 1405: determining the total transmittance adjustment amount based on the first ratio and the target unit transmittance change step;
the transmittance control device may use the product of the first ratio and the target unit transmittance change step as the total transmittance adjustment amount. Alternatively, the transmittance control device may use the product of the integer part of the first ratio and the target unit transmittance change step as the total transmittance adjustment amount;

Step 1406: increasing the transmittance of the dimming glass according to the total transmittance adjustment amount.

The embodiment of the present disclosure does not specifically limit the order in which step 1401 and step 1402 occur. In some application scenarios, the transmittance control device may perform the operation in step 1402 after performing step 1401. In other application scenarios, the transmittance control device may perform the operations in step 1402 and step 1403 in real time or periodically, and after receiving the first transmittance increase instruction, perform the operations in step 1404 and step 1405 in response to the first transmittance increase instruction.

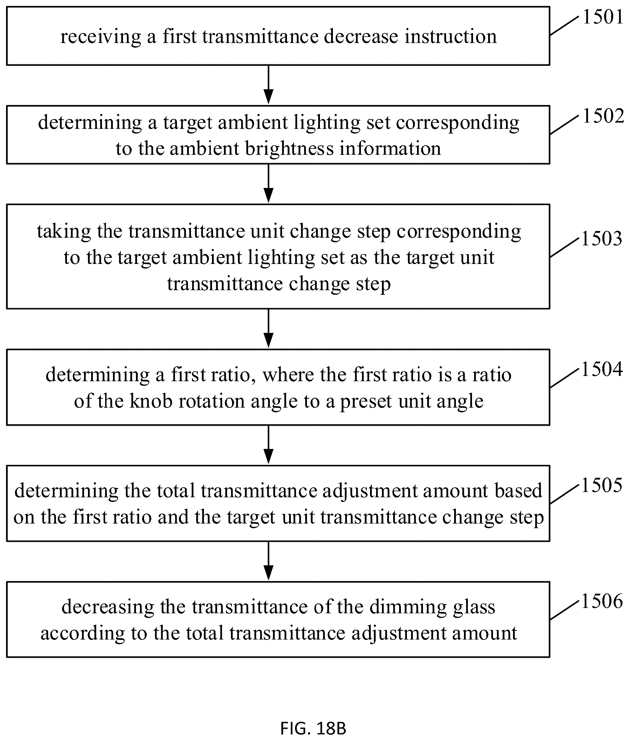

FIG. 18B shows a method for adjusting glass transmittance, which may include the following steps:

Step 1501: receiving a first transmittance decrease instruction;
Step 1502: determining a target ambient lighting set corresponding to the ambient brightness information;
Step 1503: taking the transmittance unit change step corresponding to the target ambient lighting set as the target unit transmittance change step;
Step 1504: determining a first ratio, where the first ratio is a ratio of the knob rotation angle to a preset unit angle;
Step 1505: determining the total transmittance adjustment amount based on the first ratio and the target unit transmittance change step.
the transmittance control device may use the product of the first ratio and the target unit transmittance change step as the total transmittance adjustment amount. Alternatively, the transmittance control device may use the product of the integer part of the first ratio and the target unit transmittance change step as the total transmittance adjustment amount.
Step 1506: decreasing the transmittance of the dimming glass according to the total transmittance adjustment amount.

The embodiment of the present disclosure does not specifically limit the order in which step 1501 and step 1502 occur. In some application scenarios, the transmittance control device may perform the operation in step 1502 after performing step 1501. In other application scenarios, the transmittance control device may perform the operations in step 1502 and step 1503 in real time or periodically, and after receiving the first transmittance decrease instruction, perform the operations in step 1504 and step 1505 in response to the first transmittance decrease instruction.

In other examples, the instruction input device may include a touch slider bar. In one possible implementation, the touch slider bar is a mechanical touch slider bar. The touch slider bar may include a slider. In one possible design, the slider may be a virtual slider displayed on the touch slider bar. In another possible design, the slider may not be displayed on the touch slider bar, and the instruction input device may further include an indicator light, such as a light emitting diode (LED) indicator light. The position of the slider is indicated by the indicator light. In another possible implementation, the instruction input device may include a touch screen. The touch screen may display the touch slider bar, that is, the touch slider bar is a virtual slider. The touch screen may also display the slider on the touch slider bar.

In the embodiment of the present disclosure, the touch slider bar can be configured to trigger the first transmittance increase instruction when the slider is selected to move along the third direction, and trigger the first transmittance decrease instruction when the slider is selected to move along the fourth direction. The third direction is the opposite direction of the fourth direction. For ease of understanding, a schematic diagram of the slider position of a touch slider bar is shown in FIG. 15. The third direction and the fourth direction can be direction F1 and direction F2, respectively. The direction F1 and the direction F2 are two opposite directions in the slidable direction of the touch slider bar.

In this example, the state of the instruction input device may be the position of the slider after it is moved. The transmittance control device may determine the total transmittance adjustment amount according to the position of the slider after it is moved and the transmittance unit change step, and adjust the transmittance of the dimming glass according to the total transmittance adjustment amount. Alternatively, the transmittance control device may determine the total transmittance adjustment amount according to the slider movement amount and the transmittance unit change step, and adjust the transmittance of the dimming glass according to the total transmittance adjustment amount.

The transmittance control device can determine the slider movement amount according to the positions of the slider before and after the slider moves. The transmittance control device can calculate the ratio of the slider movement amount to the preset unit movement amount, which is recorded as the second ratio. The preset unit movement amount can be the product of the slider length and a preset ratio. Optionally, the preset ratio can be 10%.

In this implementation, the process of determining the target unit transmittance change step can refer to the relevant introduction in any of the aforementioned glass transmittance adjustment methods and glass transmittance adjustment systems. It will not be repeated here. It can be understood that this implementation can be applicable to application scenarios in which the transmittance configuration parameters of each ambient lighting set are configured in the aforementioned glass transmittance adjustment system. This implementation can also be applicable to application scenarios in which the transmittance unit change step of each ambient lighting set is configured in the aforementioned glass transmittance adjustment system.

In some examples, the transmittance control device may use the product of the second ratio and the target unit transmittance change step as the total transmittance adjustment amount. The transmittance control device may increase the transmittance of the dimming glass according to the total transmittance adjustment amount and the first transmittance increase instruction, so that the degree of change between the transmittance after adjustment and the transmittance before adjustment is equal to or close to the total transmittance adjustment amount. Alternatively, the transmittance control device may decrease the transmittance of the dimming glass according to the total transmittance adjustment amount and the first transmittance decrease instruction, so that the degree of change between the transmittance after adjustment and the transmittance before adjustment is equal to or close to the total transmittance adjustment amount.

In some other examples, the transmittance control device may round the second ratio. The transmittance control device may use the product of the integer part of the second ratio and the target unit transmittance change step as the total transmittance adjustment amount. The transmittance control device may increase the transmittance of the dimming glass according to the total transmittance adjustment amount and the first transmittance increase instruction, so that the degree of change between the transmittance after adjustment and the transmittance before the adjustment is equal to or close to the total transmittance adjustment amount. Alternatively, the transmittance control device may decrease the transmittance of the dimming glass according to the total transmittance adjustment amount and the first transmittance decrease instruction, so that the degree of change between the transmittance after the adjustment and the transmittance before the adjustment is equal to or close to the total transmittance adjustment amount.

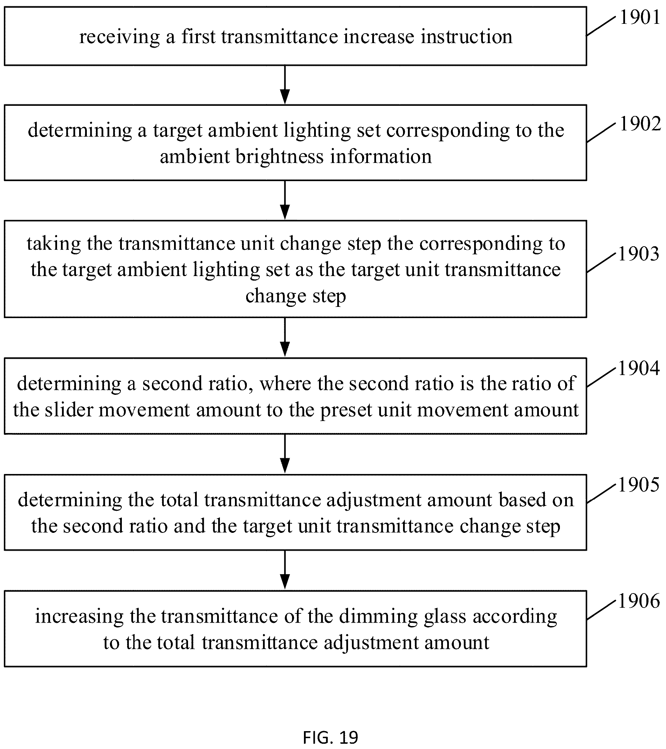

For ease of understanding, FIG. 19 shows a method for adjusting glass transmittance, which may include the following steps:

Step 1901: receiving a first transmittance increase instruction;
Step 1902: determining a target ambient lighting set corresponding to the ambient brightness information;
Step 1903: taking the transmittance unit change step the corresponding to the target ambient lighting set as the target unit transmittance change step;
Step 1904: determining a second ratio, where the second ratio is the ratio of the slider movement amount to the preset unit movement amount;
Step 1905: determining the total transmittance adjustment amount based on the second ratio and the target unit transmittance change step;
the transmittance control device may use the product of the second ratio and the target unit transmittance change step as the total transmittance adjustment amount. Alternatively, the transmittance control device may use the product of the integer part of the second ratio and the target unit transmittance change step as the total transmittance adjustment amount;
Step 1906: increasing the transmittance of the dimming glass according to the total transmittance adjustment amount.

The embodiment of the present disclosure does not specifically limit the order in which step 1901 and step 1902 occur. In some application scenarios, the transmittance control device may perform the operation in step 1902 after performing step 1901. In other application scenarios, the transmittance control device may perform the operations in step 1902 and step 1903 in real time or periodically, and after receiving the first transmittance increase instruction, perform the operations in step 1904 and step 1905 in response to the first transmittance increase instruction.

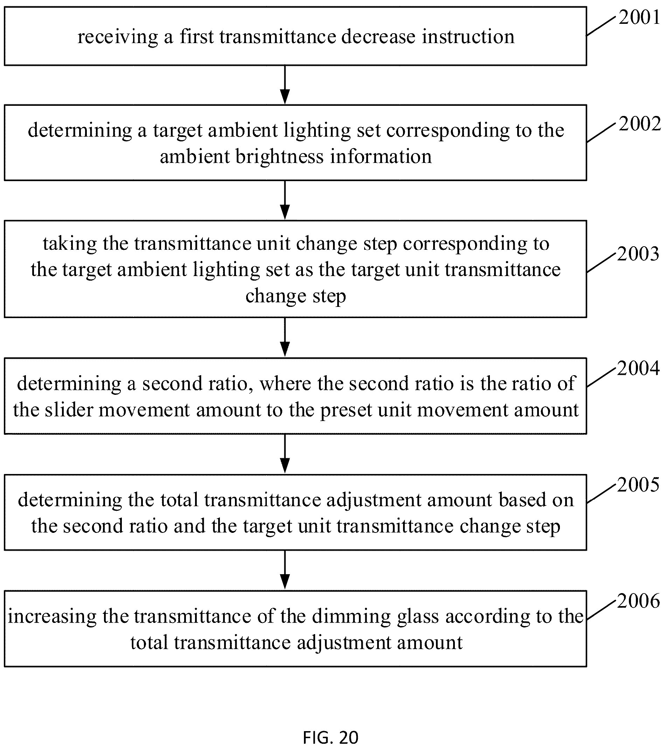

FIG. 20 exemplarily shows a method for adjusting glass transmittance, which includes the following steps:

Step 2001, receiving a first transmittance decrease instruction;
Step 2002: determining a target ambient lighting set corresponding to the ambient brightness information;
Step 2003: taking the transmittance unit change step corresponding to the target ambient lighting set as the target unit transmittance change step;
Step 2004: determining a second ratio, where the second ratio is the ratio of the slider movement amount to the preset unit movement amount;
Step 2005: determining the total transmittance adjustment amount based on the second ratio and the target unit transmittance change step;
the transmittance control device may use the product of the second ratio and the target unit transmittance change step as the total transmittance adjustment amount. Alternatively, the transmittance control device may use the product of the integer part of the second ratio and the target unit transmittance change step as the total transmittance adjustment amount;
Step 2006: increasing the transmittance of the dimming glass according to the total transmittance adjustment amount.

The embodiment of the present disclosure does not specifically limit the order of occurrence of step 2001 and step 2002. In some application scenarios, the transmittance control device may perform the operation in step 2002 after executing step 2001. In other application scenarios, the transmittance control device may perform the operations in step 2002 and step 2003 in real time or periodically, and after receiving the first transmittance decrease instruction, in response to the first transmittance decrease instruction, perform the operations in step 2004 and step 2005.

In addition, the embodiment of the present disclosure further provides a method for adjusting the light transmittance of glass, which can be applied to dimming glass. The method includes:

receiving a single light transmittance adjustment instruction, one single light transmittance adjustment instruction is configured to instruct to perform a light transmittance adjustment operation of the dimming glass once;
in response to the single transmittance adjustment instruction, adjusting the transmittance of the dimming glass based on the target single transmittance change step, the target single transmittance change step is the single transmittance change step corresponding to the ambient brightness information.

In a possible implementation, in the above glass transmittance adjustment method, adjusting the transmittance of the dimming glass based on a target single transmittance change step, includes:

determining a target ambient lighting set corresponding to the ambient brightness information according to a plurality of pre-configured ambient lighting sets and transmittance configuration parameters corresponding to each ambient lighting set, the transmittance configuration parameters corresponding to each ambient lighting set include transmittances corresponding to each level;
determining a target level corresponding to the transmittance of the current dimming glass from a plurality of levels of the transmittance configuration parameters corresponding to the target ambient lighting set;
determining the target single transmittance change step according to the single transmittance change step of the target level and the single transmittance adjustment instruction.

In some examples, the single transmittance adjustment instruction includes a single transmittance increase instruction and a single transmittance decrease instruction.

The transmittance configuration parameters corresponding to each ambient lighting set include single transmittance change steps for multiple levels. The single transmittance change steps for the levels includes a single transmittance change step corresponding to the single transmittance increase instruction and a single transmittance change step corresponding to the single transmittance decrease instruction.

In some examples, determining the target transmittance single change step according to the determined transmittance single change step of the level and the single transmittance adjustment instruction, and adjusting the transmittance of the dimming glass according to the target transmittance single change step includes:

in response to the single light transmittance decrease instruction, using the single transmittance increase change step of the target level as the target single transmittance change step, and decreasing the transmittance of the dimming glass according to the target single transmittance change step;
alternatively, in response to the single transmittance increase instruction, using the single transmittance increase change step of the target level as the target transmittance single change step, and increasing the transmittance of the dimming glass according to the target transmittance single change step.

In some examples, among the multiple ambient lighting sets, the ambient brightness that can be represented by the values in the first ambient lighting set is smaller than the ambient brightness that can be represented by the values in the second ambient lighting set.

The single transmittance increase change step of at least one level in the transmittance configuration parameters of the first ambient lighting set is greater than the single change transmittance decrease step of the at least one level.

The single transmittance increase change step of at least one level in the transmittance configuration parameters of the second ambient lighting set is less than or equal to the single transmittance decrease change step of the at least one level.

In one possible design, a single transmittance increase change step of the same level in the transmittance configuration parameters of the first ambient lighting set is greater than a single transmittance increase change step of the same level in the transmittance configuration parameters of the second ambient lighting set.

In one possible design, the single transmittance decrease change step of the same level in the transmittance configuration parameters of the first ambient lighting set is smaller than the single transmittance decrease change step of the same level in the transmittance configuration parameters of the second ambient lighting set.

In a possible design, among the multiple levels in the transmittance configuration parameter of any ambient lighting set, the step difference degree of any level is greater than a first percentage. Optionally, the first percentage may be 30%, or the first percentage is 50%.

In another possible implementation, in the above glass transmittance adjustment method, adjusting the transmittance of the dimming glass based on a target single transmittance change, includes:

determining a target ambient lighting set corresponding to the ambient brightness information according to a plurality of pre-configured ambient lighting sets and transmittance configuration parameters corresponding to each ambient lighting set;

determining the target single transmittance change step according to the transmittance configuration parameters corresponding to the target ambient lighting set and the single transmittance adjustment instruction, and adjusting the transmittance of the dimming glass according to the target single transmittance change step.

In some examples, the single transmittance adjustment instruction includes a single transmittance increase instruction and a single transmittance decrease instruction.

Among the multiple ambient lighting sets, the transmittance configuration parameters corresponding to any ambient lighting set include the single transmittance increase step corresponding to the single transmittance increase instruction and the single transmittance decrease step corresponding to the single transmittance decrease instruction.

In some examples, the determining the target single transmittance change step according to the transmittance configuration parameter corresponding to the target ambient lighting set and the single transmittance adjustment instruction, and adjusting the transmittance of the dimming glass according to the target single transmittance change step includes:

in response to the single transmittance decrease instruction, using the single transmittance decrease change step in the transmittance configuration parameter corresponding to the target ambient lighting set as the target single transmittance change step, and decreasing the transmittance of the switchable glass according to the target single transmittance change step;

or,

in response to the single transmittance increase instruction, using the single transmittance increase step in the transmittance configuration parameters corresponding to the target ambient lighting set as the target single transmittance change step, and increasing the transmittance of the dimming glass according to the target single transmittance change step.

In a possible design, among the multiple ambient lighting sets, the ambient brightness that can be represented by the values in the first ambient lighting set is smaller than the ambient brightness that can be represented by the values in the second ambient lighting set.

In a possible design, the single transmittance increase change step in the transmittance configuration parameters corresponding to the first ambient lighting set is greater than the single transmittance increase change step in the transmittance configuration parameters corresponding to the second ambient lighting set. Optionally, the difference between the single transmittance change increase step in the transmittance configuration parameters corresponding to the first ambient lighting set and the single transmittance increase change step in the transmittance configuration parameters corresponding to the second ambient lighting set is greater than or equal to 5%.

In a possible design, the single transmittance decrease change step in the transmittance configuration parameters corresponding to the first ambient lighting set is smaller than the single transmittance decrease change step in the transmittance configuration parameters corresponding to the second ambient lighting set. Optionally, the difference between the single transmittance decrease change step in the transmittance configuration parameters corresponding to the second ambient lighting set and the single transmittance decrease change step in the transmittance configuration parameters corresponding to the first ambient lighting set is greater than or equal to 5%.

In a possible design, the single transmittance increase change step in the transmittance configuration parameters corresponding to the first ambient lighting set is greater than the single transmittance decrease change step in the transmittance configuration parameters corresponding to the first ambient lighting set; the single transmittance increase change step in the transmittance configuration parameters corresponding to the second ambient lighting set is less than or equal to the single transmittance decrease change step in the transmittance configuration parameters corresponding to the second ambient lighting set. Optionally, the difference between the single transmittance increase change step in the transmittance configuration parameters corresponding to the first ambient lighting set and the single transmittance decrease change step in the transmittance configuration parameters corresponding to the first ambient lighting set is greater than or equal to 7.5%.

In another possible implementation, in the above glass transmittance adjustment method, adjusting the transmittance of the dimming glass based on a target single transmittance change step, includes:

determining a target ambient lighting set corresponding to the ambient brightness information according to a plurality of pre-configured ambient lighting sets;

using the single transmittance change step corresponding to the target ambient lighting set as the target single transmittance change step according to the pre-configured single transmittance change step corresponding to each ambient lighting set.

In a possible design, among the multiple ambient lighting sets, the ambient brightness that can be represented by the values in the first ambient lighting set is smaller than the ambient brightness that can be represented by the values in the second ambient lighting set.

The single transmittance change step corresponding to the first ambient lighting set is greater than the single transmittance change step corresponding to the second ambient lighting set.

In another possible design, among the multiple ambient lighting sets, the ambient brightness that can be represented by the values in the first ambient lighting set is smaller than the ambient brightness that can be represented by the values in the second ambient lighting set.

The using the single transmittance change step corresponding to the target ambient lighting set as the target single transmittance change step according to the pre-configured single transmittance change step corresponding to each ambient lighting set, includes:

determining the target level corresponding to the transmittance of the current dimming glass from the multiple levels of the transmittance configuration parameter corresponding to the target ambient lighting set according to the multiple levels corresponding to each pre-configured ambient lighting set and the transmittance corresponding to each level;

determining whether the target level is a minimum level and determining whether it is a maximum level;

if the level corresponding to the transmittance of the current dimming glass is not the minimum level among the multiple levels corresponding to the target lighting set, and is not the maximum level, adjusting the transmittance of the dimming glass based on the single transmittance change step corresponding to the target ambient lighting set.

In some examples, the total number of multiple levels corresponding to the first ambient lighting set is less than the total number of multiple levels corresponding to the second ambient lighting set.

The present disclosure also provides a method for adjusting glass transmittance, which can be applied to dimming glass. The method includes:

in a possible design, the first transmittance adjustment instruction includes a first transmittance increase instruction and a first transmittance decrease instruction. Before adjusting the transmittance of the dimming glass based on the target unit transmittance change step, the method further includes:

determining a target ambient lighting set corresponding to the ambient brightness information according to a plurality of preset ambient lighting sets and transmittance configuration parameters corresponding to each ambient lighting set, the transmittance configuration parameters corresponding to any ambient lighting set in the plurality of ambient lighting sets include a unit transmittance increase change step corresponding to the first transmittance increase instruction and a unit transmittance decrease change step corresponding to the first transmittance decrease instruction;

determining the target single transmittance change according to the transmittance configuration parameters corresponding to the target ambient lighting set and the first transmittance adjustment instruction.

In a possible design, the determining the target ambient lighting set corresponding to the ambient brightness information according to the preset multiple ambient lighting sets and the transmittance configuration parameters corresponding to each ambient lighting set, further includes:

in response to the first transmittance decreasing instruction, taking the transmittance decreasing unit change step in the transmittance configuration parameter corresponding to the target ambient lighting set as the target unit transmittance change step;

alternatively, in response to the first transmittance increase instruction, using the unit transmittance increase change step in the transmittance configuration parameters corresponding to the target ambient lighting set as the target unit transmittance change step.

In one possible design, among the multiple ambient lighting sets, the ambient brightness that can be represented by the values in the first ambient lighting set is smaller than the ambient brightness that can be represented by the values in the second ambient lighting set. The unit transmittance increase change step in the transmittance configuration parameters corresponding to the first ambient lighting set is larger than the unit transmittance increase change step in the transmittance configuration parameters corresponding to the second ambient lighting set.

In some examples, obtaining a knob rotation angle, and triggering the first transmittance adjustment instruction when the knob is rotated;

determining a first ratio of the knob rotation angle to a unit angle;

taking the product of the first ratio and the target unit transmittance change step as the total transmittance adjustment amount, or taking the product of the integer part of the first ratio and the target unit transmittance change step as the total transmittance adjustment amount;

adjusting the dimming glass according to the total transmittance adjustment amount.

In some examples, obtaining a movement amount of a slider , the slider is a slider of a touch slider bar, and triggering the first transmittance adjustment instruction when the slider moves;

determining a second ratio of the movement amount to the unit movement amount;

taking The product of the second ratio and the target unit transmittance change step as the total transmittance adjustment amount, or taking the product of the integer part of the second ratio and the target unit transmittance change step as the total transmittance adjustment amount;

adjusting the transmittance of the dimming glass according to the total transmittance adjustment amount.

Based on the same inventive concept, an embodiment of the present disclosure provides a computer storage medium, the computer storage medium includes: a computer program code, when the computer program code is run on a computer, the computer executes any of the glass transmittance adjustment methods discussed above. Since the principle of solving the problem by the above computer storage medium is similar to that of the glass transmittance adjustment method, the implementation of the above computer storage medium can refer to the implementation of the method, and the repeated parts will be omitted.

In the specific implementation process, the computer storage medium may include: Universal Serial Bus Flash Drive (USB), mobile hard disk, read-only memory (ROM), random access memory (RAM), magnetic disk or optical disk, and other storage media that can store program codes.

Based on the same inventive concept, an embodiment of the present disclosure also provides a window body that may include any glass transmittance adjustment system provided in the embodiments of the present disclosure.

An embodiment of the present disclosure also provides a vehicle that may include any one of the glass transmittance adjustment systems provided in the embodiments of the present disclosure.

Based on the same inventive concept, the embodiment of the present disclosure further provides a computer program product, which includes: computer program code, when the computer program code is run on a computer, the computer executes any of the glass transmittance adjustment methods discussed above. Since the principle of solving the problem by the above computer program product is similar to that of the glass transmittance adjustment method, the implementation of the above computer program product can refer to the implementation of the method, and the repeated parts will be omitted.

The computer program product may employ any combination of one or more readable media. The readable medium may be a readable signal medium or a readable storage medium. The readable storage medium may be, for example, but not limited to, an electrical, magnetic, optical, electromagnetic, infrared, or semiconductor system, device or element, or any combination thereof. More specific examples (non-exhaustive list) of readable storage media include: an electrical connection with one or more conductors, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

Those skilled in the art will appreciate that the embodiments of the present disclosure may be provided as methods, systems, or computer program products. Therefore, the present disclosure may adopt the form of a complete hardware embodiment, a complete software embodiment, or an embodiment in combination with software and hardware. Moreover, the present disclosure may adopt the form of a computer program product implemented on one or more computer-usable storage media (including but not limited to disk storage and optical storage, etc.) that contain computer-readable program code.

The present disclosure is described with reference to the flowchart and/or block diagram of the method, device (system) and computer program product according to the embodiment of the present disclosure. It should be understood that each process and/or box in the flowchart and/or block diagram, and the combination of the process and/or box in the flowchart and/or block diagram can be realized by computer program instructions. These computer program instructions can be provided to a processor of a general-purpose computer, a special-purpose computer, an embedded processor or other programmable data processing device to produce a machine, so that the instructions executed by the processor of the computer or other programmable data processing device produce a device for realizing the function specified in one process or multiple processes in the flowchart and/or one box or multiple boxes in the block diagram.

These computer program instructions may also be stored in a computer-readable memory that can direct a computer or other programmable data processing device to work in a specific manner, so that the instructions stored in the computer-readable memory produce a manufactured product including an instruction device that implements the functions specified in one or more processes in the flowchart and/or one or more boxes in the block diagram.

These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A glass transmittance adjustment system, configured to adjust a transmittance of a dimming glass, wherein the glass transmittance adjustment system comprises: a transmittance control device;

   wherein an instruction input interface of the transmittance control device is configured to receive a single transmittance adjustment instruction, wherein one single transmittance adjustment instruction is configured to instruct to perform an operation of adjusting the transmittance of the dimming glass once according to a single transmittance change step;
   wherein the transmittance control device is configured to:

   receive ambient brightness information;
   in response to the single transmittance adjustment instruction, adjust the transmittance of the dimming glass according to a target single transmittance change step, and the target single transmittance change step is a single transmittance change step corresponding to the ambient brightness information.

2. The glass transmittance adjustment system according to claim 1, wherein the single transmittance adjustment instruction comprises a single transmittance increase instruction and a single transmittance decrease instruction;

   wherein the glass transmittance adjustment system is configured with a plurality of ambient lighting sets and transmittance configuration parameters corresponding to the ambient lighting sets;
   wherein the transmittance configuration parameters comprise single transmittance change steps of multiple levels;
   wherein the single transmittance change steps of each of the levels comprises a single transmittance increase change step corresponding to the single transmittance increase instruction and a single transmittance decrease change step corresponding to the single transmittance decrease instruction.

3. The glass transmittance adjustment system according to claim 2, wherein the glass transmittance adjustment system is configured with transmittances corresponding to the levels in the transmittance configuration parameters corresponding to the ambient lighting sets;
   wherein the transmittance control device is configured to:

   determine a target ambient lighting set corresponding to the ambient brightness information;
   determine a target level corresponding to the transmittance of the dimming glass from the levels of the transmittance configuration parameters corresponding to the target ambient lighting set;
   determine the target single transmittance change step according to the single transmittance change step of the target level and the single transmittance adjustment instruction, and adjust the transmittance of the dimming glass according to the target single transmittance change step.

4. The glass transmittance adjustment system according to claim 3, wherein the transmittance control device is configured to:

in response to the single transmittance decrease instruction, take the single transmittance decrease change step of the target level as the target single transmittance change step, and decrease the transmittance of the dimming glass according to the target single transmittance change step;
or,
in response to the single transmittance increase instruction, taking the single transmittance increase change step of the target level as the target single transmittance change step, and increase the transmittance of the dimming glass according to the target single transmittance change step.

5. The glass transmittance adjustment system according to claim 2, wherein among the plurality of ambient lighting sets, an ambient brightness that is represented by values in a first ambient lighting set is smaller than an ambient brightness that is represented by values in a second ambient lighting set;

wherein the single transmittance increase change step of at least one level in the transmittance configuration parameters of the first ambient lighting set is greater than the single transmittance decrease change step of the at least one level in the transmittance configuration parameters of the first ambient lighting set; and
the single transmittance increase change step of at least one level in the transmittance configuration parameters of the second ambient lighting set is less than or equal to the single transmittance decrease change step of the at least one level in the transmittance configuration parameters of the second ambient lighting set.

6. The glass transmittance adjustment system according to claim 5, wherein for a single transmittance increase change step in the transmittance configuration parameters of the first ambient lighting set and a single transmittance increase change step in the transmittance configuration parameters of the second ambient lighting set in a same level, the single transmittance increase change step in the transmittance configuration parameters of the first ambient lighting set is greater than the single transmittance increase change step in the transmittance configuration parameters of the second ambient lighting set.

7. The glass transmittance adjustment system according to claim 5, wherein for a single transmittance decrease change step in the transmittance configuration parameters of the first ambient lighting set and a single transmittance decrease change step in the transmittance configuration parameters of the second ambient lighting set in a same level, the single transmittance decrease change step in the transmittance configuration parameters of the first ambient lighting set is smaller than the single transmittance decrease change step in the transmittance configuration parameters of the second ambient lighting set.

8. The glass transmittance adjustment system according to claim 5, wherein among the levels in the transmittance configuration parameters of any of the ambient lighting sets, a step difference degree of any level is greater than a first percentage, and the any level is any one of the levels, wherein the step difference degree of the any level is a ratio of a target difference to a maximum value in single transmittance change steps of the any level, wherein the target difference is a difference between a single transmittance increase change step of the any level and a single transmittance decrease change step of the any level, and the first percentage is 30%.

9. The glass transmittance adjustment system according to claim 1, wherein the single transmittance adjustment instruction comprises a single transmittance increase instruction and a single transmittance decrease instruction; the glass transmittance adjustment system is configured with a plurality of ambient lighting sets and transmittance configuration parameters corresponding to the ambient lighting sets;
wherein among the ambient lighting sets, the transmittance configuration parameters corresponding to the ambient lighting sets comprise a single transmittance increase step corresponding to the single transmittance increase instruction and a single transmittance decrease step corresponding to the single transmittance decrease instruction.

10. The glass transmittance adjustment system according to claim 9, wherein the transmittance control device is configured to:

determine a target ambient lighting set corresponding to the ambient brightness information;
determine the target single transmittance change step according to the transmittance configuration parameters corresponding to the target ambient lighting set and the single transmittance adjustment instruction, and adjust the transmittance of the dimming glass according to the target single transmittance change step.

11. The glass transmittance adjustment system according to claim 10, wherein the transmittance control device is configured to:

in response to the single transmittance decrease instruction, take the single transmittance decrease change step in the transmittance configuration parameters corresponding to the target ambient lighting set as the target single transmittance change step, and decrease the transmittance of the dimming glass according to the target single transmittance change step;

or,

in response to the single transmittance increase instruction, take the single transmittance increase step in the transmittance configuration parameters corresponding to the target ambient lighting set as the target single transmittance change step, and increase the transmittance of the dimming glass according to the target single transmittance change step.

12. The glass transmittance adjustment system according to claim 9, wherein among the ambient lighting sets, an ambient brightness that is represented by values in a first ambient lighting set is smaller than an ambient brightness that is represented by values in a second ambient lighting set.

13. The glass transmittance adjustment system according to claim 12, wherein the single transmittance increase change step in the transmittance configuration parameters corresponding to the first ambient lighting set is greater than the single transmittance increase change step in the transmittance configuration parameters corresponding to the second ambient lighting set.

14. The glass transmittance adjustment system according to claim 13, wherein a difference between the single transmittance increase change step in the transmittance configuration parameters corresponding to the first ambient lighting set and the single transmittance increase change step in the transmittance configuration parameters corresponding to the second ambient lighting set is greater than or equal to 5%.

15. The glass transmittance adjustment system according to claim 13, wherein the single transmittance decrease change step in the transmittance configuration parameters corresponding to the first ambient lighting set is smaller than the single transmittance decrease change step in the transmittance configuration parameters corresponding to the second ambient lighting set.

16. The glass transmittance adjustment system according to claim 15, wherein a difference between the single transmittance decrease change step in the transmittance configuration parameters corresponding to the second ambient lighting set and the single transmittance decrease change step in the transmittance configuration parameters corresponding to the first ambient lighting set is greater than or equal to 5%.

17. The glass transmittance adjustment system according to claim 13, wherein the single transmittance increase change step in the transmittance configuration parameters corresponding to the first ambient lighting set is greater than the single transmittance decrease change step in the transmittance configuration parameters corresponding to the first ambient lighting set;

wherein the single transmittance increase change step in the transmittance configuration parameters corresponding to the second ambient lighting set is less than or equal to the single transmittance decrease change step in the transmittance configuration parameters corresponding to the second ambient lighting set.

18. The glass transmittance adjustment system according to claim 17 is wherein a difference between the single transmittance increase change step in the transmittance configuration parameters corresponding to the first ambient lighting set and the single transmittance decrease change step in the transmittance configuration parameters corresponding to the first ambient lighting set is greater than or equal to 7.5%.

19. The glass transmittance adjustment system according to claim 1, wherein the glass transmittance adjustment system is configured with a plurality of ambient lighting sets and single transmittance change steps corresponding to the ambient lighting sets;

wherein the transmittance control device is configured to:

determine a target ambient lighting set corresponding to the ambient brightness information;
take a single transmittance change step corresponding to the target ambient lighting set as the target single transmittance change step.

20. The glass transmittance adjustment system according to claim 19, wherein among the ambient lighting sets, an ambient brightness that is represented by values in a first ambient lighting set is smaller than an ambient brightness that is represented by values in a second ambient lighting set;

wherein a single transmittance change step corresponding to the first ambient lighting set is greater than a single transmittance change step corresponding to the second ambient lighting set.

21. The glass transmittance adjustment system according to claim 19, wherein among the ambient lighting sets, an ambient brightness that is represented by values in a first ambient lighting set is smaller than an ambient brightness that is represented by values in a second ambient lighting set;

wherein the glass transmittance adjustment system is configured with a plurality of levels corresponding to the ambient lighting sets and transmittances corresponding to the plurality of levels, wherein a total number of levels corresponding to the first ambient lighting set is less than a total number of levels corresponding to the second ambient lighting set;

wherein the transmittance control device is configured to:

determine a target level corresponding to the transmittance of the dimming glass from the levels of the transmittance configuration parameters corresponding to the target ambient lighting set;

adjust the transmittance of the dimming glass according to a single transmittance change step corresponding to the target level.

22. The glass transmittance adjustment system according to any one of claims 2 to 21, further comprising an instruction input device connected to the instruction input interface, wherein the instruction input device comprises a first adjustment button and a second adjustment button;

wherein the first adjustment button is configured to trigger a single transmittance increase instruction in response to the first adjustment button being selected or pressed once;

wherein the second adjustment button is configured to trigger a single transmittance decrease instruction in response to the second adjustment button being selected or pressed once.

23. The glass transmittance adjustment system according to any one of claims 2 to 21, further comprising an instruction input device connected to the instruction input interface, wherein the instruction input device comprises a knob;

wherein the knob is configured to trigger a single transmittance increase instruction in response to the knob being turned and rotated by a unit angle along a first direction; and to trigger a single transmittance decrease instruction in response to the knob being turned and rotated by a unit angle along a second direction; the first direction is one of a clockwise direction and a counterclockwise direction, and the second direction is other one of the clockwise direction and the counterclockwise direction.

24. The glass transmittance adjustment system according to any one of claims 2 to 21, further comprising an instruction input device connected to the instruction input interface, wherein the instruction input device comprises a touch slider bar, and the touch slider bar comprises a slider;

wherein the touch slider bar is configured to trigger a single transmittance increase instruction in response to the slider being selected and moving a unit amount along a third direction, and to trigger a single transmittance decrease instruction in response to the slider being selected and moving a unit amount along a fourth direction; the third direction is opposite to fourth direction.

25. The glass transmittance adjustment system according to claim 24, wherein the touch slider bar is configured with a special position set; the special position set comprises at least one position; wherein the glass transmittance adjustment system is configured with a special transmittance set corresponding to each ambient lighting set, the special transmittance set comprises a transmittance corresponding to the at least one position;

wherein the transmittance control device is further configured to:

based on a position of the slider after movement is same as a target position in the special position set, determine the target ambient lighting set corresponding to the ambient brightness information, and adjust the transmittance of the dimming glass according to the special transmittance corresponding to the target position in the special transmittance set corresponding to the target ambient lighting set.

26. The glass transmittance adjustment system according to claim 25, wherein the special position set comprises a first position and a second position; wherein a transmittance corresponding to the first position in the special transmittance set represents a maximum reference transmittance, and the maximum reference transmittance is less than a maximum transmittance of the dimming glass, and a transmittance corresponding to the second position represents a minimum reference transmittance, and the minimum reference transmittance is greater than a minimum transmittance of the dimming glass.

27. The glass transmittance adjustment system according to claim 26, wherein among the ambient lighting sets, two ambient lighting sets are provided with maximum reference transmittances in the special transmittance sets corresponding to the two ambient lighting sets being different;
and/or, among the ambient lighting sets, two ambient lighting sets are provided with minimum reference transmittances in the special transmittance sets corresponding to the two ambient lighting sets being different.

28. The glass transmittance adjustment system according to claim 26, wherein the special position set comprises a third position and a fourth position;
wherein in the special transmittance set corresponding to each ambient lighting set, a transmittance corresponding to the third position is the maximum transmittance of the dimming glass; in the special transmittance set corresponding to each ambient lighting set, a transmittance corresponding to the fourth position is the minimum transmittance of the dimming glass.

29. A glass transmittance adjustment system, configured to adjust a transmittance of a dimming glass; wherein the glass transmittance adjustment system comprises a transmittance control device;

   wherein an instruction input interface of the transmittance control device is configured to receive a first transmittance adjustment instruction;
   the transmittance control device is configured to:
   in response to the first transmittance adjustment instruction, adjust the transmittance of the dimming glass based on a target unit transmittance change step, wherein the target unit transmittance change step is a transmittance unit change step corresponding to the ambient brightness information.

30. The glass transmittance adjustment system according to claim 29, wherein the first transmittance adjustment instruction comprises a first transmittance increase instruction and a first transmittance decrease instruction; the glass transmittance adjustment system is configured with a plurality of ambient lighting sets and transmittance configuration parameters corresponding to the ambient lighting sets;
wherein among the plurality of ambient lighting sets, the transmittance configuration parameters corresponding to any ambient lighting set comprise a unit transmittance increase change step corresponding to the first transmittance increase instruction and a unit transmittance decrease change step corresponding to the first transmittance decrease instruction.

31. The glass transmittance adjustment system according to claim 30, wherein the transmittance control device is configured to:

   determine a target ambient lighting set corresponding to the ambient brightness information;
   determine the target unit transmittance change step according to the transmittance configuration parameters corresponding to the target ambient lighting set and the first transmittance adjustment instruction;
   adjust the transmittance of the dimming glass based on the target unit transmittance change step.

32. The glass transmittance adjustment system according to claim 31, wherein the transmittance control device is configured to:

   in response to the first transmittance decrease instruction, take a unit transmittance decrease change step in the transmittance configuration parameters corresponding to the target ambient lighting set as the target unit transmittance change step, and decrease the transmittance of the dimming glass based on the target unit transmittance change step;
   or,
   in response to the first transmittance increase instruction, take a unit transmittance increase change step in the transmittance configuration parameters corresponding to the target ambient lighting set as the target unit transmittance change step, and increase the transmittance of the dimming glass according to the target unit transmittance change step.

33. The glass transmittance adjustment system according to claim 30, wherein among the ambient lighting sets, an ambient brightness that is represented by values in a first ambient lighting set is smaller than an ambient brightness that is represented by values in a second ambient lighting set; and a unit transmittance increase change step in the transmittance configuration parameters corresponding to the first ambient lighting set is larger than a unit transmittance increase change step in the transmittance configuration parameters corresponding to the second ambient lighting set.

34. The glass transmittance adjustment system according to any one of claims 30 to 33, further comprising an instruction input device connected to the instruction input interface, wherein the instruction input device comprises a knob; wherein the knob is configured to trigger the first transmittance increase instruction in response to the knob being rotated in a first direction, and to trigger the first transmittance decrease instruction in response to the knob being rotated in a second direction; the first direction is one of a clockwise direction and a counterclockwise direction, and the second direction is the other one of one the clockwise direction and the counterclockwise direction.

35. The glass transmittance adjustment system according to claim 34, wherein the transmittance control device is configured to:

    obtain a knob rotation angle;
    determine a first ratio of the knob rotation angle to a unit angle;
    take a product of the first ratio and the target unit transmittance change step as a total transmittance adjustment amount, or take a product of an integer part of the first ratio and the target unit transmittance change step as a total transmittance adjustment amount;
    adjust the transmittance of the dimming glass according to the total transmittance adjustment amount.

36. The glass transmittance adjustment system according to any one of claims 30 to 33, further comprising an instruction input device connected to the instruction input interface, wherein the instruction input device comprises a touch slider bar, and the touch slider bar comprises a slider; wherein the touch slider bar is configured to trigger the single transmittance increase instruction in response to the slider being selected and moving along a third direction, and to trigger the single transmittance decrease instruction in response to the slider being selected and moving along a fourth direction; the third direction is opposite to the fourth direction.

37. The glass transmittance adjustment system according to claim 36, wherein the transmittance control device is configured to:

    obtain a movement amount of the slider;
    determine a second ratio of the movement amount to a unit movement amount;
    take a product of the second ratio and the target unit transmittance change step as a total transmittance adjustment amount; or take a product of an integer part of the second ratio and the target unit transmittance change step as a total transmittance adjustment amount;
    adjust the transmittance of the dimming glass according to the total transmittance adjustment amount.

38. A glass transmittance adjustment system, configured to adjust a transmittance of a dimming glass; wherein the glass transmittance adjustment system comprises a transmittance control device; wherein the transmittance control device is configured to:

    receive ambient brightness information;
    determine a target level attribute parameter corresponding to the ambient brightness information according to the ambient brightness information and a plurality of level attribute parameters corresponding to a plurality of ambient lighting sets;
    adjust the transmittance of the dimming glass based on the target level attribute parameter;
    wherein the level attribute parameters comprise a quantity of increasing levels and a quantity of decreasing levels; the ambient lighting sets comprise a first ambient lighting set and a second ambient lighting set, the first ambient lighting set corresponds to a first level attribute parameter, and the second lighting set corresponds to a second level attribute parameter;
    a quantity of increasing levels of the first level attribute parameter is different from a quantity of increasing levels of the second level attribute parameter, and/or a quantity of decreasing levels of the first level attribute parameter is different from a quantity of decreasing levels of the second level attribute parameter.

39. The glass transmittance adjustment system according to claim 38, wherein an ambient brightness that is represented by values in the first ambient lighting set is smaller than an ambient brightness that is represented by values in the second ambient lighting set;

wherein the quantity of increasing levels of the first level attribute parameter is less than the quantity of increasing levels of the second level attribute parameter; or

wherein the quantity of decreasing levels of the first level attribute parameter is greater than the quantity of decreasing levels of the second level attribute parameter; or

wherein the quantity of increasing levels of the first level attribute parameter is smaller than the quantity of increasing levels of the second level attribute parameter, and the quantity of decreasing levels of the first level attribute parameter is larger than the quantity of decreasing levels of the second level attribute parameter.

40. The glass transmittance adjustment system according to claim 38 or 39, wherein

the quantity of increasing levels of the first level attribute parameter is less than the quantity of decreasing levels of the first level attribute parameter; and/or,

the quantity of increasing levels of the second level attribute parameter is greater than or equal to the quantity of decreasing levels of the second level attribute parameter.

41. A window, comprising the dimming glass and the glass transmittance adjustment system according to any one of claims 1 to 37.

42. A vehicle, comprising the glass transmittance adjustment system according to any one of claims 1 to 37.

43. A method for adjusting glass transmittance, applied to a dimming glass, wherein the method comprises:

receiving a single transmittance adjustment instruction, wherein the single transmittance adjustment instruction is configured to instruct to perform an operation of adjusting a transmittance of the dimming glass once according to a single transmittance change step;

in response to the single transmittance adjustment instruction, adjusting the transmittance of the dimming glass according to a target single transmittance change step, and the target single transmittance change step is a single transmittance change step corresponding to ambient brightness information.

44. A method for adjusting glass transmittance, applied to a dimming glass, wherein the method comprises:

receiving a first transmittance adjustment instruction;

in response to the first transmittance adjustment instruction, adjusting a transmittance of the dimming glass based on a target unit transmittance change step, wherein the target unit transmittance change step is a unit transmittance change step corresponding to ambient brightness information.

45. A method for adjusting glass transmittance, applied to a dimming glass, wherein the method comprises:

receiving ambient brightness information;

determining a target level attribute parameter corresponding to the ambient brightness information according to the ambient brightness information and a plurality of level attribute parameters corresponding to a plurality of ambient lighting sets;

adjusting a transmittance of the dimming glass based on the target level attribute parameter;

wherein the level attribute parameters comprise a quantity of increasing levels and a quantity of decreasing levels; the ambient lighting sets comprise a first ambient lighting set and a second ambient lighting set, the first ambient lighting set corresponds to a first level attribute parameter, and the second lighting set corresponds to a second level attribute parameter;

wherein a quantity of increasing levels of the first level attribute parameter is different from a quantity of increasing levels of the second level attribute, and/or a quantity of decreasing levels of the first level attribute parameter is different from quantity of decreasing levels of the second level attribute parameter.

46. A computer storage medium comprising a computer program stored thereon, wherein based on the program being executed by a processor, steps of the method according to claim 43, 44 or 45 are implemented.

Building

| Dimming glass | Dimming glass |
| Dimming glass | Dimming glass |
| Dimming glass | Dimming glass |
| Dimming glass | Dimming glass |

FIG. 1A

A2

A1

FIG. 1B

Transmittance control device

Instruction input interface

Processor

Drive circuit

Instruction input device

Dimming glass

FIG. 2

Increase adjustment button

Decrease adjustment button

FIG. 3A

Indicator mark

Unit rotation angle

FIG. 3B

Touch slider

F1

Slider

F2

FIG. 3C

Vehicle

Glass transmittance adjustment
system

Transmittance control device

Instruction
input interface

Instruction input
device

Processor

Vehicle
central control

Connection
interface

Drive
circuit

Dimming glass

On-board
power supply

FIG. 4

receiving a single transmittance adjustment instruction 301

in response to the single transmittance adjustment instruction, adjusting the transmittance of the dimming glass based on the target transmittance single change step, where the target single transmittance change step is the single transmittance change step corresponding to the ambient brightness information 302

FIG. 5

receiving a single transmittance increase instruction 401

determining a target ambient lighting set corresponding to the ambient brightness information 402

determining a target level corresponding to the current transmittance from a plurality of levels of transmittance configuration parameters corresponding to the target ambient lighting set 403

taking a single transmittance increase change step of the target level as the target single transmittance change step 404

increasing the transmittance of the dimming glass according to the target single transmittance change step 405

FIG. 6A

receiving a single light transmittance decrease instruction | 501

determining a target ambient lighting set corresponding to the ambient brightness information | 502

determining a target level corresponding to the current transmittance from a plurality of levels of transmittance configuration parameters corresponding to the target ambient lighting set | 503

taking the single transmittance decrease change step of the target level as the target single transmittance change step | 504

deceasing the transmittance of the dimming glass according to the target single transmittance change step | 505

FIG. 6B

```
┌─────────────────────────────────────────────────┐
│  receiving a single transmittance increase       │  ── 601
│  instruction                                      │
└─────────────────────────────────────────────────┘
                        │
                        ▼
┌─────────────────────────────────────────────────┐
│  determining a target ambient lighting set       │  ── 602
│  corresponding to the ambient brightness         │
│  information                                      │
└─────────────────────────────────────────────────┘
                        │
                        ▼
┌─────────────────────────────────────────────────┐
│  in response to the single transmittance         │
│  increase instruction, using the single          │
│  transmittance increase change step in the       │  ── 603
│  transmittance configuration parameters          │
│  corresponding to the target ambient lighting    │
│  set as the target single transmittance change   │
│  step                                            │
└─────────────────────────────────────────────────┘
                        │
                        ▼
┌─────────────────────────────────────────────────┐
│  increasing the transmittance of the dimming     │  ── 604
│  glass according to the target single            │
│  transmittance change step                       │
└─────────────────────────────────────────────────┘
```

FIG. 7A

```
┌─────────────────────────────────────────────┐
│                                             │      701
│   receiving a single transmittance decrease │   ╱
│               instruction                   │
│                                             │
└─────────────────────────────────────────────┘
                      │
                      ▼
┌─────────────────────────────────────────────┐
│                                             │      702
│ determining a target ambient lighting set  │   ╱
│   corresponding to the ambient brightness   │
│               information                   │
└─────────────────────────────────────────────┘
                      │
                      ▼
┌─────────────────────────────────────────────┐
│   in response to the single transmittance   │
│ decrease instruction, using the single      │
│  transmittance decrease change step in the  │      703
│   transmittance configuration parameters    │   ╱
│ corresponding to the target ambient lighting│
│ set as the target single transmittance      │
│               change step                   │
└─────────────────────────────────────────────┘
                      │
                      ▼
┌─────────────────────────────────────────────┐
│  decreasing the transmittance of the        │      704
│ dimming glass according to the target       │   ╱
│ single transmittance change step            │
└─────────────────────────────────────────────┘
```

FIG. 7B

receiving a single transmittance increase instruction — 801

↓

determining a target ambient lighting set corresponding to the ambient brightness information — 802

↓

taking the single transmittance change step corresponding to the target ambient lighting set as the target single transmittance change step — 803

↓

increasing the transmittance of the dimming glass according to the target single transmittance change step — 804

FIG. 8

receiving a single transmittance decrease instruction — 901

↓

determining a target ambient lighting set corresponding to the ambient brightness information — 902

↓

taking the single transmittance change step corresponding to the target ambient lighting set as the target single transmittance change step — 903

↓

decreasing the transmittance of the dimming glass according to the target single transmittance change step — 904

FIG. 9

```
┌─────────────────────────────────────────────────┐
│ receiving a single transmittance increase instruction │──1001
└─────────────────────────────────────────────────┘
                        │
                        ▼
┌─────────────────────────────────────────────────┐
│ determining a target ambient lighting set         │──1002
│ corresponding to the ambient brightness information │
└─────────────────────────────────────────────────┘
                        │
                        ▼
              determining
            whether the ambient
Yes      lighting set corresponding to the        No
         ambient brightness information during
          the most recent m adjustment ──1003
              operations is the target
               ambient lighting
                      set
```

determining the net number of increasing operations for the target ambient lighting set ──1004

determining whether the number of increasing operations of the target ambient lighting set is less than the maximum net number of increasing operations of the target ambient lighting set ──1006

No

Yes

End

taking the single transmittance change step corresponding to the target ambient lighting set as the target single transmittance change step ──1005

increasing the transmittance of the dimming glass according to the target transmittance single change step ──1007

FIG. 10

receiving a single transmittance decrease instruction — 1101

determining a target ambient lighting set corresponding to the ambient brightness information — 1102

determining whether the ambient lighting set corresponding to the ambient brightness information during the most recent m adjustment operations is the target ambient lighting set — 1103

Yes

No

determining the net number of decreasing operations for the target ambient lighting set — 1104

determining whether the net number of decreasing operations of the target ambient lighting set is less than the maximum net number of decreasing operations of the target ambient lighting set — 1106

No

Yes

taking the single transmittance change step corresponding to the target ambient lighting set as the target single transmittance change step — 1105

End

in response to the single transmittance decrease instruction, the decreasing the transmittance of the dimming glass according to the target single transmittance change step — 1107

FIG. 11

receiving a single transmittance increase instruction `1201`

determining a target ambient lighting set corresponding to the ambient brightness information `1202`

determining a level corresponding to the current transmittance from a plurality of levels corresponding to the target ambient lighting set `1203`

determining whether the level corresponding to the current light transmittance is the maximum level among the multiple levels corresponding to the target ambient lighting set `1204`

Yes

No

taking the single transmittance change step corresponding to the target ambient lighting set as the target single transmittance change step `1205`

End

increasing the transmittance of the dimming glass according to the target single transmittance change step `1206`

FIG. 12A

```
┌─────────────────────────────┐
│   receiving a single transmittance  │─── 1301
│       decrease instruction          │
└─────────────────────────────┘
              │
              ▼
┌─────────────────────────────┐
│   determining a target ambient      │─── 1302
│   lighting set corresponding to the │
│   ambient brightness information    │
└─────────────────────────────┘
              │
              ▼
┌─────────────────────────────┐
│  determining a level corresponding  │
│  to the current transmittance from a│─── 1303
│  plurality of levels corresponding to│
│   the target ambient lighting set   │
└─────────────────────────────┘
              │
              ▼
           ╱╲
          ╱  ╲   determining
         ╱    ╲  whether the level        ─── 1304
  Yes   ╱ corresponding to the current╲   No
 ◄─────╱ light transmittance is the minimum ╲─────►
        ╲ level among the multiple levels  ╱
         ╲ corresponding to the target    ╱
          ╲   ambient lighting          ╱
           ╲      set                  ╱
            ╲                         ╱
             ╲╱
   │                              │
   ▼                              ▼
┌────────┐          ┌─────────────────────────────┐
│        │          │  taking the single transmittance change│
│  End   │          │   step corresponding to the target    │─── 1305
│        │          │   ambient lighting set as the target  │
└────────┘          │   single transmittance change step    │
                    └─────────────────────────────┘
                                  │
                                  ▼
                    ┌─────────────────────────────┐
                    │  decreasing the transmittance of the │
                    │  dimming glass according to the target│─── 1306
                    │   single transmittance change step    │
                    └─────────────────────────────┘
```

FIG. 12B

```
┌─────────────────────────────────────────────────┐
│        receiving ambient brightness information   │    2101
└─────────────────────────────────────────────────┘
                        │
                        ▼
┌─────────────────────────────────────────────────┐
│     determining a target level attribute parameter│
│  corresponding to the ambient brightness information│  2102
│    according to the ambient brightness information and│
│  a plurality of level attribute parameters corresponding│
│        to a plurality of ambient lighting sets    │
└─────────────────────────────────────────────────┘
                        │
                        ▼
┌─────────────────────────────────────────────────┐
│    adjusting the transmittance of the dimming glass│    2103
│       based on the target level attribute parameter│
└─────────────────────────────────────────────────┘
```

FIG. 12C

First adjustment button —— △    Touch screen

Second adjustment button —— ▽

FIG. 13

(a)       (b)

FIG. 14A

Second angle    First angle

FIG. 14B

Fourth angle    Third angle

FIG. 14C

F1

Touch slider
bar

Slider

F2

Unit movement
amount

FIG. 15

First position
(Maximum reference
transmittance)

Slider

Second position
(Minimum reference
transmittance)

FIG. 16

Third position
(Maximum transmittance of dimming glass)

First position
(Maximum reference transmittance)

Slider

Second position
(Minimum reference transmittance)

Fourth position
(Minimum transmittance of dimming glass)

FIG. 17

```
┌─────────────────────────────────────────────────────┐
│     receiving a first transmittance increase instruction │──1401
└─────────────────────────────────────────────────────┘
                         │
                         ▼
┌─────────────────────────────────────────────────────┐
│   determining a target ambient lighting set corresponding │──1402
│         to the ambient brightness information          │
└─────────────────────────────────────────────────────┘
                         │
                         ▼
┌─────────────────────────────────────────────────────┐
│  taking the transmittance unit change step corresponding │
│     to the target ambient lighting set as the target unit │──1403
│               transmittance change step               │
└─────────────────────────────────────────────────────┘
                         │
                         ▼
┌─────────────────────────────────────────────────────┐
│    determining a first ratio, where the first ratio is a ratio │──1404
│      of the knob rotation angle to a preset unit angle │
└─────────────────────────────────────────────────────┘
                         │
                         ▼
┌─────────────────────────────────────────────────────┐
│ determining the total transmittance adjustment amount based │──1405
│ on the first ratio and the target unit transmittance change step │
└─────────────────────────────────────────────────────┘
                         │
                         ▼
┌─────────────────────────────────────────────────────┐
│     increasing the transmittance of the dimming glass │──1406
│  according to the total transmittance adjustment amount │
└─────────────────────────────────────────────────────┘
```

FIG. 18A

receiving a first transmittance decrease instruction $\quad$ 1501

determining a target ambient lighting set corresponding
to the ambient brightness information $\quad$ 1502

taking the transmittance unit change step corresponding
to the target ambient lighting set as the target unit
transmittance change step $\quad$ 1503

determining a first ratio, where the first ratio is a ratio
of the knob rotation angle to a preset unit angle $\quad$ 1504

determining the total transmittance adjustment amount based
on the first ratio and the target unit transmittance change step $\quad$ 1505

decreasing the transmittance of the dimming glass
according to the total transmittance adjustment amount $\quad$ 1506

FIG. 18B

receiving a first transmittance increase instruction /1901

determining a target ambient lighting set corresponding to the ambient brightness information /1902

taking the transmittance unit change step the corresponding to the target ambient lighting set as the target unit transmittance change step /1903

determining a second ratio, where the second ratio is the ratio of the slider movement amount to the preset unit movement amount /1904

determining the total transmittance adjustment amount based on the second ratio and the target unit transmittance change step /1905

increasing the transmittance of the dimming glass according to the total transmittance adjustment amount /1906

FIG. 19

receiving a first transmittance decrease instruction /2001

determining a target ambient lighting set corresponding to the ambient brightness information /2002

taking the transmittance unit change step corresponding to the target ambient lighting set as the target unit transmittance change step /2003

determining a second ratio, where the second ratio is the ratio of the slider movement amount to the preset unit movement amount /2004

determining the total transmittance adjustment amount based on the second ratio and the target unit transmittance change step /2005

increasing the transmittance of the dimming glass according to the total transmittance adjustment amount /2006

FIG. 20

## INTERNATIONAL SEARCH REPORT

| International application No. |
|---|
| **PCT/CN2024/089376** |

**A. CLASSIFICATION OF SUBJECT MATTER**

G02F1/133(2006.01)i

According to International Patent Classification (IPC) or to both national classification and IPC

**B. FIELDS SEARCHED**

Minimum documentation searched (classification system followed by classification symbols)

IPC: G02F G06F

Documentation searched other than minimum documentation to the extent that such documents are included in the fields searched

Electronic data base consulted during the international search (name of data base and, where practicable, search terms used)

CNABS, VEN: 调光, 调节, 光强, 光照度, 玻璃, 车窗, 窗户, dim+, adjust+, bright+, glass, window?

**C. DOCUMENTS CONSIDERED TO BE RELEVANT**

| Category* | Citation of document, with indication, where appropriate, of the relevant passages | Relevant to claim No. |
|---|---|---|
| Y | CN 105022182 A (LI KE) 04 November 2015 (2015-11-04)<br>description, paragraphs 31-56, and figures 1-4 | 1-4, 9-11, 19, 22-24, 29-32, 34, 36, 41-44, 46 |
| Y | CN 107390984 A (GUANGDONG MIDEA REFRIGERATION EQUIPMENT CO., LTD.) 24 November 2017 (2017-11-24)<br>description, paragraphs 30-94, and figures 1-7 | 1-4, 9-11, 19, 22-24, 29-32, 34, 36, 41-44, 46 |
| A | CN 114475173 A (BYD SEMICONDUCTOR CO., LTD. et al.) 13 May 2022 (2022-05-13)<br>entire document | 1-46 |
| A | CN 115416456 A (FULSCIENCE AUTOMOTIVE ELECTRONICS CO., LTD.) 02 December 2022 (2022-12-02)<br>entire document | 1-46 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 August 2024** | **07 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/089376**

| Patent document cited in search report | | | Publication date (day/month/year) | Patent family member(s) | Publication date (day/month/year) |
|---|---|---|---|---|---|
| CN | 105022182 | A | 04 November 2015 | None | |
| CN | 107390984 | A | 24 November 2017 | None | |
| CN | 114475173 | A | 13 May 2022 | None | |
| CN | 115416456 | A | 02 December 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310467832
- CN 202410137924X